(19) Europäisches Patentamt
European Patent Office
Office européen des brevets

(11) EP 0 476 327 B1

(12) EUROPEAN PATENT SPECIFICATION

(45) Date of publication and mention of the grant of the patent:
17.11.1999 Bulletin 1999/46

(51) Int Cl.⁶: **G03C 11/02**, G03C 7/305, G03B 17/24

(21) Application number: 91113902.0

(22) Date of filing: 20.08.1991

(54) **Data-retainable photographic film product and process for producing color print**

Datenbehaltendes photographisches Filmerzeugnis und Verfahren zur Herstellung eines Farbbildes

Produit de pellicule photographique retenant des informations et procédé de production d'épreuve en couleurs

(84) Designated Contracting States:
DE FR GB IT NL

(30) Priority: 20.08.1990 JP 21871290
12.10.1990 JP 27479790
31.10.1990 JP 29472990

(43) Date of publication of application:
25.03.1992 Bulletin 1992/13

(73) Proprietor: **Fuji Photo Film Co., Ltd.**
**Kanagawa-ken (JP)**

(72) Inventors:
- **Ikenoue, Shinpei, c/o Fuji Photo Film Co., Ltd.**
  **Minami Ashigara-shi, Kanagawa-ken (JP)**
- **Shibahara, Yoshihiko,**
  **c/o Fuji Photo Film Co., Ltd**
  **Minami Ashigara-shi, Kanagawa-ken (JP)**
- **Watanabe, Toshiyuki,**
  **c/o Fuji Photo Film Co., Ltd.**
  **Minami Ashigara-shi, Kanagawa-ken (JP)**

(74) Representative:
**Hansen, Bernd, Dr. Dipl.-Chem. et al**
**Hoffmann Eitle,**
**Patent- und Rechtsanwälte,**
**Postfach 81 04 20**
**81904 München (DE)**

(56) References cited:
EP-A- 0 209 118
EP-A- 0 308 984
EP-A- 0 344 916
EP-A- 0 378 236
EP-A- 0 428 072

- PATENT ABSTRACTS OF JAPAN vol. 14, no. 240 (P-1051)(4183) 22 May 1990 & JP-A-2 062 535 ( KONICA ) 2 March 1990

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 476 327 B1

## Description

Background of the Invention

The present invention relates to a method of forming an image on a photographic film product and of storing various kinds of data therein and a process for producing a color print thereof. In particular, the present invention relates to a photographic film product capable of forming a color print having excellent sharpness and color reproducibility even when a picture is taken in one of various lights, particularly an electronic flash as well as a process for producing a color print thereof.

Recently the qualities, i.e. graininess, sharpness and color reproducibility, of color photographic films were remarkably improved. In addition, spread of cameras containing an electronic flash, cameras having an automatic electronic flash light-snapping function and cameras having a zoom lens or bifocal lens is remarkable. As a result of these improvement and spread, the photographing field is widening and shutter chances are increasing. However, although the quality of the color photographic films and function of cameras are improved, the finish of color prints is yet usually unsatisfactory.

For example, it is known that the use of a development inhibitor releasing coupler (DIR coupler) is effective in improving the sharpness and color reproducibility of the color negative films and the DIR couplers have been already put into practice. However, they still have various problems.

The DIR couplers are described in Japanese Patent Unexamined Published Application (hereinafter referred to as "J.P. KOKAI") Nos. 57-151944, 57-154234, 60-184248 and 60-37346 and U.S. Patent No. 4,248, 962 as described in, for example, RD-17643 VII-F.

When a close-up picture of a human subject is taken with a color negative film designed with such a coupler in an artificial light like daylight (color temperature: 5,500° K) and it is printed, the improvement in sharpness and color reproducibility is apparent. However, when such a picture is taken in a strobe light at a short distance in a room and it is printed in the same manner as above, print density of the human face is insufficient and the difference in the color reproducibility and sharpness is only slight. Namely, the essential merits of the DIR coupler are not sufficiently exhibited.

Although such a defect is overcome to some extent by compensation made by a printing worker in the printing step in a processing laboratory, the degree of compensation widely varies at present. It is one of important problems in this technical field to attain a homogeneous finish of a print by attaining the homogeneous compensation, always conducting the optimum compensation and finishing the print homogeneously.

It was already proposed to improve the quality of the print by putting various informations such as photographing informations (e.g. presence or absence of strobo light, color temperature, LV value, slooting distance, focal distance of the lens, subject contrast, photographing date and time and photographing place), film informations (e.g. kind of the film, date of production of the film and printing condtions) and lab informations (e.g. lab name, date of development and printing conditions in the simultaneous printing) in the photographing films by an optical means, magnetic means or electric means.

Methods for putting the informations are described in, for example, J.P. KOKAI Nos. Sho 62-50743 and Sho 62-209430 and U.S. Patent No. 4,864,332.

However, by only these methods, it is difficult to produce a quite satisfactory print.

On the other hand, the technique of the pseudo telephoto zoom is conducted with a rolled color negative film of 135-format which is mainly used at present, a satisfactory print quality cannot be obtained, since the graininess of the color negative film is insufficient for the enlargement by the pseudo telephoto zoom. Namely, in this case, only a print of a large size is not intended but a part of a large-size print is taken and enlarged and it is evaluated at an ordinary observation distance. It is to be noted that the graininess of the negative film is designed so that the quality of the image will be the best when it is enlarged from an ordinary 135-format frame size to a service size (8 cm x 12 cm).

EP-A-0 344 916 discloses a film cartridge provided with a RAM for reading and writing information.

EP-A-0 428 072, published on 22 May 1991, discloses a photographic film cartridge in which the film is wound into a roll around a spool and has frames each of which has an area between 350-1200 $mm^2$. An optical data-input region is formed in the film which has an area larger than 15% of the area of the frame. The film or cartridge also includes either an electrical data-input means or a magnetic data-input means.

Summary of the Invention

A primary object of the present invention is to provide a photographic method capable of forming a color print having excellent sharpness and color reproducibility even when the picture is taken in light of any of various light sources.

Another object of the present invention is to provide a photographic method which produces colour images having an excellent graininess that is satisfactory even when the technique of pseudo telephoto zoom is employed

and which has a development stability improved to a level sufficient for a proper color compensation of the print by reading the photographic information in the printing step.

Another object of the present invention is to provide a photographic method which enables inputting various kinds of data on to the film at suitable times.

These and other objects of the present invention will be apparent from the following description and Examples.

According to a first aspect, the present invention provides a method of forming an image on a color photographic film product, which product comprises: a cartridge, a spool carried in the cartridge for rotation about a longitudinal axis of the spool, and an elongate silver halide photosensitive film for color photography having a photosensitive side, the film being wound into a roll around the spool and comprising at least one red-sensitive silver halide emulsion layer, at least one green-sensitive silver halide emulsion layer and at least one blue-sensitive silver halide emulsion layer formed on a support, and further containing a compound capable of reacting with an oxidate of a developing agent to release a diffusing development inhibitor or its precursor, and/or a compound capable of reacting with an oxidate of a developing agent to form a cleaved compound capable of reacting with another molecule of the oxidate of the color developing agent to cleave a development inhibitor; the method comprising: exposing an image on the photosensitive side of the film, characterized by: recording information on the photosensitive side of the film in an information-recording area comprising an optical memory means located between a long edge of the film and the image area of the film, wherein said image is exposed on a portion of the photosensitive side of the film having four or less perforations or notches for deciding the position of the image.

According to a second aspect, the present invention provides a method of forming an image on a colour photographic film product, which product comprises: a cartridge, a spool carried in the cartridge for rotation about a longitudinal axis of the spool, and an elongate silver halide photosensitive film for color photography having a photosensitive side, the film being wound into a roll around the spool and comprising at least one red-sensitive silver halide emulsion layer, at least one green-sensitive silver halide emulsion layer and at least one blue-sensitive silver halide emulsion layer formed on a support, wherein at least one of the silver halide emulsion layers contains at least one kind of photosensitive halide grain having a high silver iodide phase therein; the method comprising: exposing an image on the photosensitive side of the film, characterized by: recording information on the photosensitive side of the film in an information-recording area comprising an optical memory means located between a long edge of the film and the image area of the film, wherein said image is exposed on a portion of the photosensitive side of the film having four or less perforations or notches for deciding the position of the image.

Brief Description of the Drawings

Fig. 1 is a plan view showing areas of the parts of the photographic film;
Fig. 2 is a cross section of the photosensitive film contained in the product for use in the present invention;
Fig. 3 is a cross section of an example of the patrone of the product for use in the present invention;
Fig. 4 is a perspective view of another example of the patrone of the product for use in the present invention;
Fig. 5 is a shematic drawing showing the cartridge for use in the present invention;
Fig. 6 shows an example of the appearance of the cartridge;
Figs. 7 and 8 show examples of engaging means of the cartridge for use in the present invention;
Figs. 9 and 10 show an example of the cartridge kept in a room for cartridge in a camera;
Fig. 11 is a flow sheet showing the routine of a printing process;
Fig. 12 is a flow sheet showing the color balance deviation direction of the color reproduction formed by change of the color temperature of the light lightening the subject;
Fig. 13 is a shematic drawing showing a color automatic printing apparatus for use in the present invention;
Fig. 14 is a plan view of the film in which the picture-forming informations, photographing informations, etc. are memorized;
Fig. 15 is a diaphragm showing a degree of contribution of the image data when the collor collection value is varied;
Fig. 16 is a flow sheet showing the routine of the first method of estimating the color temperature;
Fig. 17 is a diagram showing the first method;
Fig. 18 is a diagram showing the second method of estimating the color temperature;
Fig. 19 is a flow sheet showing the routine of the third method of estimating the color temperature;
Fig. 20 is a flow sheet showing the routine of the fourth method of estimating the color temperature;
Fig. 21 is a flow sheet showing the routine of the fifth method of estimating the color temperature.

In the drawings, 1 represents a photographic film, 2 represents a base, 3 represents a magnetic substance, 4 represents a photosensitive layer, 5 represents a patrone for the photographic film, 6 represents a spool, 6a and 6b

represent both ends of the spool, 7 represents the cartridge body, 8 represents an opening, 9 represents an image exposure part, 10 represents a part in which optical informations are to be put, 11 represents a part in which optical and magnetic informations are to be put, 12 represents perforations, 20 represents a patrone for photographic film, 21 represents the cartridge body, 22 represents a flexible wall, 23 represents a spool, 24a and 24b represent projections, 25 represents a photograhic film, 26 represents an outlet for film, 27 represents a magnetc tape, 220 represents a negative film, 226 represents a photographic paper and 230 represents an image sensor.

The excellent sharpness and color reproducibility can be obtained by recording the photographing informations in the above-described information-recording part and preparing the color print under the printing conditions determined according to the photographic informations.

The photographic film product for use in the present invention has a part for recording various informations for not only the producing step thereof but also photographing step, printing step in a lab and reprinting step, preferably photographing informations.

The photographic film used in the present invention is formed so that a frame of the image to be exposed has an area of 200 $mm^2$ to 500 $mm^2$. The area of an optical information-recordable part of the photographic film is 30% to 60% based on the frame of the image exposure. In a still preferred embodiment of the invention, the photographic film or cartridge has at least one of an electric memory means and magnetic memory means. When at least two information recording means are provided, various informations can be easily and surely put in the film-producing, photographing, developing, printing and reprinting steps.

Examples of the effective informations in the present invention include photographing informations (e.g. trimming informations including pseudo telephoto zoom informations, presence or absence of strobo light, color temperature, LV value, shooting distance, focal distance of the lens, subject contrast, photographing date and time and photographing place), film informations (e.g. kind of the film, date of production of the film and printing condtions) and lab informations (e.g. lab name, date of development and printing conditions in the simultaneous printing). By effectively utilizing these informations, the quality of the print can be improved.

To keep the quality of the print, the area of the frame of the image exposure must be at least 200 $mm^2$, preferably 350 $mm^2$. When the are is over 1,200 $mm^2$, the area of a part to be used for recording the information by the optical means is reduced. Thus the area thereof is from 350 $mm^2$ to 500 $mm^2$. From the viewpoint of the present lab systems, the width of the photographic film is preferably 35 mm. On the other hand, in case where the area thereof is 350 $mm^2$ to 450 $mm^2$, it is also preferable that the width of the photographic film be 26 to 32 mm.

In the present invention, the part in which the optical information is recorded is provided in the width direction outside the image-exposing part of the photographic film.

In another preferred embodiment, a semiconductor element is additionally used as the electric memory means of the cartridge.

In still another preferred embodiment, a magnetic memory means is additionally provided in the photographic film or cartridge.

At present, the photographic film production informations are usually put by means of bar codes outside either left or right perforations of the film. In case various other information is to be recorded in addition to the production informations by means of bar codes, both sides of the photographic film is insufficient when only a row of the input space is made on both sides thereof. Namely, at least a space of two rows is necessary on both sides. Therefore, the ratio of the area of the optical information-recordable part to the area of the frame of the image-exposing part which is now 11 % must be increased to 30%. When a recording system other than the bar code system is employed, the information density is practically equal to that described above and the similar area ratio is necessary.

On the other hand, the larger the area of the image-exposing area, the better. In due consideration of these facts, the preferred upper limit of the ratio of the optical information-recordable area to the area of the frame of the image-exposing part is determined. It is preferably 30%, still preferably 20%.

It is also possible to enlarge the area of the optical information-recordable part without reducing the area of the image-exposing area by removing the perforations. In such a case, the ordinary perforations of 135 format are replaced with 4 or less, preferably 2 or less, perforations or notches for deciding the position of the picture.

According to a third aspect, the present invention provides a method of forming an image on a photographic film product, which product comprises: a cartridge; a spool carried in the cartridge for rotation about a longitudinal axis of the spool, and an elongate film wound into a roll around the spool, said film having a photosensitive side and a width in the range of 20 mm to 35 mm; the method comprising: exposing an image having an area in the range of 200 $mm^2$ to 500 $mm^2$ on the photosensitive side of the film, characterized by: recording information on the photosensitive side of the film in an optical data-input region located between a long edge of the film and the image-exposed area of the film, said region having an area of from 30% to 60% of the image-exposed area; and wherein said image is exposed on a portion of the photosensitive side of the film having four or less perforations or notches for deciding the position of the image and wherein at least one of an electrical data-input means and a magnetic data-input means is also provided in the film or the cartridge.

The ratio of the area of the optical information-recordable part to the area of a frame of the image-exposing part is herein defined as will be described below. As shown in Fig. 1, a stands for the width of a frame of the image-exposing part, b stands for the length thereof and c stands for the width of the photographic film. The area A of a frame of the film is:

$$A = a \times c.$$

The area B of the image-exposing part is:

$$B = a \times b.$$

The area C of the optical information-recordable part is:

$$C = A - B = a \times (c\text{-}b).$$

Accordingly, the ratio of the area in the optical information-recordable part is:

$$C/A = (A - B) / A = (c - b) / c.$$

As a matter of fact, it is unnecessary to always utilize the whole optical information-recordable part. This part can be used for recording the informations in any manner according to the purpose. It is important to provide a sufficiet information-recording capacity.

In the photographic film for use in the present invention, the optical information-recordable part is formed outside the image-exposing part in the direction of the width of the film. If the optical information-recordable part is formed between the image-exposing parts, the total length of the photographic film is elongated, which is disadvantageous for thinning of the camera. If the optical information-recordable part is formed between the perforations, a quite complicated camera mechanism is necessitated for the input of the informations and reading of them. Thus the optical information-recordable part is not formed between the image-exposing parts or between the perforations but outside the image-exposing parts.

The character informations are preferably put by characters or bar codes.

The information to be recorded in the course of the production of the film or during taking the pictures is recorded by optical means, taking advantage of the photosensitivity of the photographic film from the viewpoints of simplification of the production steps, reduction in size of the camera and reduction of the cost. However, the input or reading of the informations for confirmations of the state of use of the film (new film, used film or number of frames used for the photographing) is preferably conducted by a magnetic means or electric means, since the development of the film is unnecessary in this method.

In a lab, the information is recorded by a magnetic means or electric means so that the information input is possible even after development of the film.

Usually it is preferred to record the information by the optical means during the photographing and by the magnetic means after the development. For example, when informations from the camera are to be put in the photographic film by a magnetic means in the course of the photographing, the relative velocity of the film and magnetic head must be kept constant and, therefore, a complicated mechanism is required of the camera. Thus the optical means in which advantage of the photosensitivity of the photographic film is taken is preferred for putting the information during the photographing, since it is sure and easy.

On the other hand, after the photographic film has beem once developed, the optical means in which the advantage of the photosensitivity of the film is taken cannot be employed and, therefore, the magnetic means is necessitated.

The semiconductor elements used as the electric memory means are preferably EEPROM, etc. Although it is desirable to attach the semiconductor element to the cartridge, they can be placed in the camera separately from each other. An IC card having a microcomputer and EEPROM is usable as the electric memory means.

The magnetic memory means is preferably a transparent magnetic base described in U.S. Patent Nos. 4,302,523, 3,782,947 and 4,279,945. The transparent magnetic bases is excellent, since informations relating to a film picture can be put at a position adjacent to this picture and the optical information-recording part is usable also as the magnetic information-recording part. The magnetic information-recording part can be formed only outside the image-exposing part. In this case, the magnetic information-recording part may be opaque.

In case the magnetic information-recording means is attached to the cartridge, DX code and informations about the state of use of the film can be put in or out from the magnetic means. The informations about the state of use of the film put in the cartridge can be confirmed without taking the film out of the cartridge advantageously. The magnetic recording means can be attached to the cartridge by applying a magnetic tape to the cartridge; by forming the cartridge from a polymer containing a magnetic substance mixed or dispersed therein to impart a magnetic recording function to the cartridge; or by printing the cartridge with an ink contaning a magnetic substance dispersed therein.

To prevent disappearance of the informations put by the optical means by so-called "photo-fog", the cartridge is preferably of light-tight type (for example, those described in Japanese Utility Model Application No. Hei 1-17253).

An example of the photographic film in the product for use in the present invention is shown in Figs. 2 and 3. As shown in Fig. 2, a base 2 of a photographic film 1 has a thickness of 122 $\mu$ m. The base 2 is cellulose triacetate base. The back surface of the base 2 is coated with 0.1 $g/m^2$ of a magnetic substance ($\gamma$ -$Fe_2O_3$ ) 3 [see Japanese Patent Publication for Opposition Purpose (hereinafter referred to as "J.P. KOKOKU") No. Sho 57-6576].

About 7 $g/m^2$ of photosensitive layer 4 for color negative film having a sensitivty of 400 is formed on the surface of the base 2 (see J.P. KOKAI No. Sho 63-236035).

Fig. 3 shows the photographic film 1 placed in a patrone 5. The patrone 5 comprises a spool 6 and a cartridge body 7. An end 6a of the spool 6 is supported in the cartridge body 7 so that it is rotatable round the axis and the other end 6b thereof is supported so that the spool 6 can be rotated by operating it from outside the cartridge body 7. The photographic film 1 is wound in a roll around the spool 6 to form a roll. The cartridge body 7 has an opening 8 for drawing out the photograhic film 1. The photographic film 1 has an image exposure part 9, part 10 in which the optical informations are to be put, part 11 in which optical informations and magnetic informations are to be put and perforations 12 for positioning each frame of the film. The part 10 in which optical informations are to be put is an optical recording means to be used taking advantage of the photosensitivity of the photographic film 1.

The input of the various informations in the photographic film 1 placed in the photographic film patrone 5 and printing according to these informations are conducted, for example, as described above:

(1) Informations such as DX code and date of the film production are put in the part in which the optical and magnetic informations are to be put. The input is conducted by means of either bar codes or letters.
(2) The photographing date, presence or absence of strobo and trimming informations for pseudo telephoto zoom are put by means of bar codes in the part 10 in which optical informations are to be put by using LED attached to the camera.
(3) Printing conditions for compensating changes of the film with time depending on the data including the date of procuction of the film, photographing date and date of development are automatically set. The setting is automatically conducted according to a program previously put in the automatic printer. By this, deterioration of the quality of the print due to the change of the film with time can be minimized.
(4) When the strobo is used, an automatic compensations is done so as to add yellow tint to the print according to the program set in the automatic printer. Therefore, the color compensation which has been done by an operating person can be automatically done and scattering of color in the picture taken by using the strobo is reduced.
(5) The trimming is automatically conducted with the automatic printer according to the pseudo telephoto zoom informations in the printing step. Even when the trimming is conducted, the photographing date is printed at a corner below the picture. Thus the pseudo telephoto zoom print can be automatically produced and the date can be printed on the pseudo telephoto zoom print.
(6) In a lab, the printing conditions estimated in (3) and the compensated printing conditions of each frame are magnetically put in the part 11 in which the optical and magnetic informations are to be put. By this method, the change in tint in the simultaneous printing and reprinting can be minimized.
(7) The number of sheets of the prints and trimming conditions in the reprinting step are magnetically put in the part 11 in which the optical and magnetic informations are to be put at a dealer's. By this method, the reprinting efficiency in the lab is improved and the intent of the photographer can be easily reflected on the print.

Thus by employing the combination of the optical means and magnetic means, the informations can be put not only in the photographing step but also after the development to improve the quality of the print.

Another example of the photographic film patrone for use in the present invention is shown in Fig. 4. A patrone 20 comprises a cartridge body 21, a flexible wall 22 connected at an end thereof with the cartridge body 21 and a spool 23 supported in the cartridge body 21 so that it can be rotated. The flexible wall 22 has a pair of projections 24a and 24b which are engaged with the mechanism of the camera at both ends thereof. A photographic film 25 is tightly wound round the spool 23 to form a roll and placed in the cartridge body 21. The photographic film 25 is the same as the photograhic film 1 shown in Fig. 3 (see Japanese Patent Application No. Sho 63-57785).

When the patrone 20 is set in the camera, the mechanism (not shown) of the camera is engaged with the

projections 24a and 24b to push up the projections 24a and 24b. Since the cartridge 20 is fixed in the camera, the flexible wall 22 is flexed upward to form an opening 26 for pulling out the film when the projections 24a and 24b are pushed up as shown in Fig. 4. Then the spool 23 is rotated in a film-sending direction (counterclockwise in Fig. 4). Since the photographic film 25 is tightly wound round the spool 23, this film 25 is sent through the film-outlet 26 and lead to a film-exposing part in the camera.

A magnetic tape 27 is applied as a magnetic recording means to the outer wall of the cartridge body 21 of the patrone 20. The magnetic tape 27 is, for example, a commercially available audio magnetic tape.

Informations on the sensitivity of the film are previously put in the magnetic tape 27 and the informations are read by means of a suitable input and output mechanisms (not shown) of the camera when the patrone 20 is placed therein. When the patrone 20 is taken out of the camera, the information on the number of the frames of the film used is put in the magnetic tape 27 by the input and output mechanisms of the camera. When the patrone having the information of the number of the frames of the film used put therein is placed again in the camera, the used part of the film can be kept from the feeding and, in addition, when the photograhic film has been partly used, this film can be automatically moved until the unused frame of the film has reached the exposing position of the camera.

EEPROM is also usable in place of the magnetic tape 27 as the magnetic memorizing means (see J.P. KOKAI No. Sho 62-116932). Informations such as DX code, state of use of the film and shooting locations are put in EEPROM. If the informations such as printing conditions are put in EEPROM in the lab, they can be used later at the time of the reprinting. The photographer's informations such as number of the sheets of reprinting and trimming conditions can be put in EEPROM.

In the above-described example, a photographic film comprising a cellulose triacetate base as the film base containing a magnetic substance can be used. In this case, printing conditions of each frame of the film are put in EEPROM in the lab.

As shown in Fig. 5, the cartridge in the package of the photographic film for use in the present invention has an attitude control means for keeping the outlet (33) thereof for the film is kept on a plane (A1) including an exposing stage (42) of the camera and for controlling the direction (B1) of taking in and out the photographic film in parallel to the direction (C1) of winding the film.

By thus providing the attitude-controlling means, the flatness of the photographic film (32) can be kept when the cartridge is placed in the camera and the film (32) is set from the outlet of the cartridge to a film-winding means of the camera can be kept, and particularly the flatness of the film (32) at and around the outlet of the cartridge can be kept. The term "keeping the outlet (33) for film on a plane (A1) including an exposing stage (42) of the camera" indicates that the photographic film (32) is kept from unloosened at around the outlet of the cartridge. The film outlet (33) is not necessarily brought into contact with the exposing stage (42) of the camera.

For the unconditional attitude control of the cartridge so as to keep the flatness when it is placed in the camera, it is fundamentally necessitated that the cartridge cannot be rotated round the spool axis (34) in the room (43) for the cartridge in the camera. In particular, a means for engaging with the camera is provided so that the cartridge can keep the above-described plane. To realize a more improved engagement, it is preferred to improve the external dimensional accuracy of the cartridge, particularly the dimensional accuracy of the port portion.

Examples of the specific means for the above-described attitude control of the cartridge, namely means for engaging the cartridge with the camera, include those described below.

First, the shape of a section perpendicular to the spool shaft of the cartridge (excluding the outlet for the film) can be made not round and it can be engaged with the room for the cartridge in the camera.

Although the non-round section perpendicular to the spool shaft may be either the cartridge body (crosssection) and the side (the end face), it is preferably the side only or both of the body and the side.

When the side is not round, the cross-section of the side part ($S_2$) can be made larger than that of the body ($S_1$) of the cartridge in order to conduct the attitude control of the cartridge in the camera. However, an excessively large cross-sectional area ($S_2$) of the side part is undesirable for miniaturization of the camera. Namely, $S_2/S_1$ ratio is usually not higher than 1.2, preferably not higher than 1.1 and particularly preferably not higher than 1.05.

In particuilar, as shown in Figs. 9 and 10, the cartridge (31) may have non-round side (51) and body (52) having a round crosssection. The non-round part (51) and preferably the body (52) are engaged with the camera so that the attitude is controlled by means of springs (62 and 66) provided in the cartridge room (43) of the camera.

In an example of the cartridge having the non-round body, at least one side of the cartridge body is made flat as shown in Fig. 6. The term "flat" means that the side of the cartridge has a flatness sufficient for the attitiude control of the present invention. This means that it may be curved to some extent. It is preferred to place the cartridge in the cartridge room of the camera so that the flat face of the former coincides with that of a specified face of the latter and so that they are substantially brought into contact with each other. The term "substantial contact" herein indicates the contact sufficient for the attitude control and it does not always mean the complete entire contact.

A second means for engaging the cartridge with the camera is as follows: at least one engaging part capable of keeping the cartridge in the cartridge room of the camera so that the attitude control is possible is provided in each

of the cartridge and the camera.

The position, number and shape of the engaging parts are not particularly limited so far as the attitude control of the cartridge can be conducted according to the present invention.

In an example, a so-called projection and a corresponding depression can be formed in the camera and cartridge, respectively.

For example, as shown in Fig. 7, 凸 -shaped projection (38) is formed on the side (36) of the cartridge body so as to engage it with a depression formed in the cartridge room in the camera. Such an engaging means is preferably formed on both end faces of the cartridge.

Alternatively, a straight line-shaped projection (39) is formed on a side face (35) of the cartridge body so that it is engaged with a corresponding straight line-shaped depression formed in the cartridge room in the camera as shown in Fig. 8.

As shown in Fig. 9, a projection (57) is formed at the outlet for the film in the cartridge so that it is engaged with a corresponding depression (56) formed in the exposing stage of the camera. Such a projection (57) may be formed at any position of the film outlet (33). For example, it is formed in a straight line-shape along the film outlet or one projection may be formed at the center of the film outlet.

In the above-described structure, the projections may be formed in the camera and the depressions to be engaged with them may be formed on the cartridge. It is enough that the projections and the depressions are engaged with each other to attain the attitude control according to the present invention.

In another connecting means, at least one pair of projections are formed in the camera and on the cartridge to engage these projections with each other so as to keep the cartridge in the cartridge room in the camera.

For example, as shown in Figs. 9 and 10, the cartridge can be kept in the cartridge room in the camera by engaging a projection (53) of the cartridge with a projection (64) in the camera and engaging a projection (54) of the cartridge with a projection (65) in the camera. One of these engaging means is satisfactory in some cases. The pair of the projection (54) of the cartridge and the projection (65) in the camera can be formed on both end faces of the cartridge.

Though only one pair of the engaging means for the attitude control of the cartridge according to the present invention is enough, a combination of two or more pairs of them is also usable (see Figs. 7, 8 and 9).

For improving the attitude control, the dimensional accuracy of the outer shape of the cartridge is preferably ± 0.5 mm or below, still preferably ± 0.3 mm or or below.

For further improving the attitude control, the dimensional accuracy of the length of the port portion is preferably± 0.3 mm or below, still preferably ± 0.2 mm or below and particularly ± 0.1 mm or below.

To keep the flatness of the film, it is preferred to keep the port portion so that the light-shielding teremp does not protrude or no teremp is used.

To make sure of the accuracy, a resin is used as a material to be molded into the cartridge.

The plastic material can be produced by addition polymerization of an olefin having a carbon-to-carbon double bond, ring-opening polymerization of a cyclic compound having a ring of a small number of members, polycondensation of two or more polyfunctional compounds, polyaddition and addition condensation of a phenol derivative, urea derivative or melamine derivative with an aldehyde compound.

As for the plastic materials, the olefins having carbon-to-carbon double bond include, for example, styrene, α -methylstyrene, butadiene, methyl methacrylate, butyl acrylate, acrylonitrile, vinyl chloride, vinylidene chloride, vinylpyridine, N-vinylcarbazole, N-vinylpyrrolidone, vinylidene cyanide, ethylene and propylene. Typical examples of the compounds having a ring of a small number of members include ethylene oxide, propylene oxide, glycidol, 3,3-bischloromethyloxetane, 1,4-dioxane, tetrahydrofuran, trioxane,ε - caprolactam, β -propiolactone, ethyleneimine and tetramethylsiloxane.

Typical examples of the polyfunctional compounds include carboxylic acids such as terephthalic acid, adipic acid and glutaric acid; isocyanates such as toluene diisocyanate, tetramethylene diisocyanate and hexamethylene diisocyanate; alcohols such as ethylene glycol, propylene glycol and glycerol; amines such as hexamethylenediamine, tetramethylenediamine and p-phenylenediamine; and epoxides. Typical examples of the phenol derivatives, urea derivatives and melamine derivatives include phenol, cresol, methoxyphenol, chlorophenol, urea and melamine. Typical examples of the aldehyde compounds include formaldehyde, acetaldehyde, octanal, dodecanal and benzaldehyde. These starting materials can be used either singly or in combination of two or more of them depending on the intended performance.

In the production of the plastic materials from these starting materials, a catalyst and a solvent are used, if necessary.

The catalysts include radical polymerization catalysts such as (l-phenylethyl)azodiphenylmethane, dimethyl-2,2'-azobisisobutylate, 2,2'-azobis(2-methylpropane), benzoyl peroxide, cyclohexanone peroxide and potassium persulfate; cationic polymerization catalysts such as sulfuric acid, toluenesulfonic acid, trifluorosulfuric acd, perchloric acid, trifluoroboron and tin tetrachloride; anionic polymerization catalysts such as n-butyl lithium, sodium/naphthalene,

9-fluorenyl lithium and phenyl magnesium bromide: Ziegler-Natta catalysts such as triethylaluminum/tetrachlorot itanium; as well as sodium hydroxide, potassium hydroxide and metallic potassium.

The solvent is not limited so far as it does not inhibit the polymerization. Examples of the solvents include hexane, decalin, benzene, toluene, cyclohexane, chloroform, acetone, methyl ethyl ketone, ethyl acetate, butyl acetate and tetrahydrofuran.

In the molding of the plastics, a plasticizer is mixed therein, if necessary. Typical examples of the plasticizers include trioctyl phosphate, tributyl phosphate, dibutyl phthalate, diethyl sebacate, methyl amyl ketone, nitrobenzene,$\gamma$ - valerolactone, di-n-octyl succinate, bromonaphthalene and butyl palmitate.

Examples of the plastic materials will be given below, which by no means limit the invention.

P-1 polystyrene
P-2 polyethylene
P-3 polypropylene
P-4 polymonochlorotrifluoroethylene
P-5 vinylidene chloride resin
P-6 vinyl chloride resin
P-7 vinyl chloride / vinyl acetate copolymer resin
P-8 acrylonitrile / butadiene / styrene copolymer resin
P-9 methyl methacrylic resin
P-10 vinylformal resin
P-II vinylbutyral resin
P-12 polyethylene phthalate
P-13 Teflon
P-14 nylon
P-15 phenolic resin
P-16 melamine resin

Particularly preferred plastic materials include polystyrene, polyethylene and polypropylene.

Usually the cartridge is produced from a plastic containing carbon black or a pigment so as to impart light-screening properties thereto.

The description will be made on the utilization of the informations recorded in the photographic information-recording part. The photographic light source is supposed by a process described in Japanese Patent Application No. 1-293650. A color photographic printer has a mirror box 218 and a lamp house 210 containing a halogen lamp below a negative film carrier 212 for sending a negative film 220 to a printing part as shown in Fig. 13. A light adjusting filter 260 is interposed between the mirror box 218 and the lamp house 210. It comprises three color filters, i.e. Y (yellow) filter, M (magenta) filter and C (cyan) filter.

A lens 222, black shutter 224 and color paper 226 are placed in this order above the negative carrier. A light from the lamp house 210 passes through the light adjusting filter 260, mirror box 218, negative film 220 and it is focused into an image by the lens 222 on a color paper 226.

A two-dimensional image sensor 230 for photometry wherein the negative image is divided into parts is placed aslant to the optical axis of the optical system of focusing into an image at a position capable of determining the image density of the negative film 220.

As shown in Fig. 14, information 234 showing the use of a strobo and information 235 showing LV value are recorded on the negative film 220. In addition, photographing time information 236 showing the photographing date and time is printed thereon. The information 234 showing the use of the strobo is recorded with a mark or the like when the strobo is used. As for the information 235 showing LV value, the LV value at the photographing time is recorded by a bar code. As for the photographing time information 236, the photographing date (including year, if necessary) and time are shown. The photographing time information is printed at the time of taking a picture by a mechanism of printing the date and time of the camera.

Although the information is shown by numerals, bar codes and marks in Fig. 14, all the information may be recorded by any of the numerals, bar codes and marks, or an optical mark displayed by a light-emitting diode. The positions of the recording of the information on the film are not limited to those shown in Fig. 14. For example, the information may be recorded by removing the perforations from one side of the film and forming an information-recording part therein.

On upstream side of the negative carrier 212, information 234 showing the use of the strobo, the first sensor 214 for optically reading the LV value information and the second sensor 216 for optically reading the photographing informations 236 are placed at a portion at which the information recorded on the film can be read. The first sensor 214, the second sensor 216 and the two-dimensional image sensor 230 are connected with a control circuit 228 composed of a microcomputer. The control cuircuit 228 is connected with a key board 232 for input of data, etc. The control circuit 228 is connected with the light adjusting filter 260 so as to control the latter.

The description will be made on the printing control routine by a microcomputer.

Fig. 11 shows the printing control routine. In step 100, informations detected with the first sensor 214, the second sensor and the two-dimensional image sensor 230 are read. In step 102, use or non-use of the strobo is known from the information 234 for the use of the strobo. When the strobo is used, the next is step 106. When the strobo is not used, the next is step 104, wherein the color temperature of the light lightening the subject is estimated or the quality of the light is estimated, and then the process in the step 104 is conducted. The details of the routine of the estimation of the color temperature will be described below. In the step 106, a color collection value Cj : constant Kj, etc. are calculated by operation according to the estimated quality of the light. In step 108, an exposure control value Ej is calculated by operation according to the formula (1) given below. In step 110, the printing is conducted by controlling the light adjusting filter 260 on the basis of the exposure control value Ej.

$$\log Ej = Sj \{ Cj(dj-dwj)+dwj\} + Kj \qquad (1)$$

wherein:

$$dj = Dj - NDj \qquad (2)$$

$$dwj = (\sum_{j=1}^{3} dj) / 3 \qquad (3)$$

- j drepresents a number of 1 to 3 showing R, G or B,
- Dj represents the image density of each image frame of the film (such as the average density of the total pictures),
- NDj represents the average image density of standard negative film or many film frames (such as the average density of the total pictures),
- Sj represents the slope control value,
- Cj represents the color collection vlaue,
- Kj represents the constant which varies depending on the properties of the printer, film and printing paper, and Ej represents the exposure control value which varies depending on the quantity of the printing light.

The color collection value Cj, constant Kj and slope control value Sj according to the quality of the light in the step 106 are changed as follows:

When strobo light is used:

(1) The slope control value Sj is changed in order to compensate a change in reciprocity falure properties.
(2) The color collection vlaue Cj and constant Kj are changed in order to compensate the sensitivity balance influenced by a change in the color temperature.
(3) The average image density NDj is changed in order to compensate a difference between scenes.

When light of low color temperature or luminescent lamp is used:

(1) The color collection vlaue Cj and constant Kj are changed in order to compensate the sensitivity balance influenced by a change in the color temperature.
(2) The average image density NDj is changed in order to compensate a difference between scenes.

The color collection value Cj of the image density the color tone of which varies depending on change of color temperature of the light lightening the subject is set on the basis of the estimated color temperature. The color collection Cj is set so that when the estimated color temperature is below a predetermined point or when the subject is lightened with a light of a low color temperature (such as light of the evening sun or tungsten light), the compensation by the

color collection value Cj is weak or no compensation is conducted. Namely, it is set so that the printing is conducted with a lowered collection. For example, when the color collection value Cj is around 0.5, the color failure is compensated but the color of the light source is not compensated and the tungsten light brings about a strong YR tone in the color reproduction. Thus the color collection value Cj of the image density the color tone of which varies depending on a change of the color temperature of the light lightening the subject is set on the basis of the estimated color temperature. When Cj is a weak high collection, for example, when the color collection value Cj is 1.3, only the color of the light source is compensated without the compensation of the color failure. When the subject is lightened with tungsten light, only the tunsten color remains. Thus when the compensation by the color collection value is made weak or such a compensation is not conducted, the color of the light lightening the subject is reflected in the print and the print as intended by the photographer can be obtained. When the color temperature of the light is high (such as light in cloudy weather or in the shade), it is set so that the compensation will be strong. For example, when the color collection value Cj is set at 2.0, only the light source will be compensated and the tungsten light will be the daylight color in the print.

The color collection Cj of an image density the color tone of which is not changed by the color temperature of the light lightening the subject (i.e. image density in the parts other than the parts of oblique lines in Fig. 12) is set at the same value as that in the step 104.

In Fig. 15, vector A indicates a degree of contribution of the image density including the color tone of the light lightening the subject to the exposure control value when the color collection value Cj is low (such as 0.5). Vector A' indicates a degree of contribution of the image density to the exposure control value when the color collection value is slightly higher than 1 (for example, 1.3). Vector A" indicates a degree of contribution of the image density to the exposure control vlaue when the color collection value is high (for example, 2.0). It will be understood from Fig. 15 that as the color collection value is increased, the copensated image density becomes closer to the average image density ab.

Thus at least one of the average image density NDj, slope control value Sj and color collection value Cj is set according to the quality of the light lightening the subject, i.e. photographing light, and the quantity of light of exposure in the printing is calculated by operation according to the quality of the light.

The description will be made on the process for estimating the color temperature. The first estimation process will be described with reference to Figs. 10 and 11. In this process, a part of a film at a position outside the picture of the subject but corresponding to the picture is exposed to a light for lightening the subject in a quantity equal to that of the light for exosing the subject or in a predetermined ratio to the latter to form a light source color information. Fig. 17 shows the relationship between (1) the difference between the exposure density (light source color density) LDj of the light lightening the subject outside the scene and average image density NDj and (2) the image density J. It will be understood from Fig. 17 that the relationship between the color difference LDj-NDj and color j is shown by a straight line B having a positive slant when the color temperature of the light lightening the subject is low; by a straight line D having a negative slant when the color temperature is high; and by straight line C parallel to j-axis when the color temperature is the standard. When the light lightening the subject is a light of a luminescent lamp, the relation is shown by a conical curve A. Thus in the color temperature estimation routine shown in Fig. 16, the color temperature of the light source LDj, average image density NDj and image density j are taken in step 120, and the operation is done to judge whether the taken data form the straight line B or C or curve A in step 122. In the next step 124, judgement is made whether the results are shown by the straight line or not. When the results are not shown by the straight line but shown by the curve, it is judged that the light in the step 126 is that of a luminescent lamp and it is memorized in a predetermined area of RAM.

When it is judged to be the straight line in step 124, the judge is made whether the slant is positive, negative or 0 in steps 128 and 132. When the slant is positive, the light is judged to be that of a low color temperature (for example, a light having a color temperature of not higher than 4,500 ° K) in step 130. When the slant is negative, the light is judged to be that of a high color temperature (for example, a light having a color temperature of not lower than 6,000 ° K) in step 136. When the slant is 0, the light is judged to be the standard color temperature (for example, a light having a color temperature of 4,500 to 6,000° K) in step 134. It is memorized in a predetermined area of RAM.

The second color temperature estimation process is that wherein the average densities of the image R, G and B are employed. As shown in Fig. 18 wherein the color difference R-G is given by abscissae and color difference G-B is given by ordinates, a region P in the first quadrant is a region of the color difference of the low color temperature light and region Q in the third quadrant is a region of the color difference of the high color temperature light. Therefore, if the average image density difference G-B or R-G is known to be in the region P or Q, the quality of the light lightening the subject can be judged from whether the color temperature thereof is high or low.

The description will be made on the third process for the estimation of the color temperature. In this process, the photographic informationhs, i.e. photographing date and time, are utilized. When this process is employed, the time of sunrise SQ, time of sunset SI and time reaquired for high sun X on every day in every month in the district in which the printer is placed is set in the printer in every season. The time X is shown as 1 for summer, 3 for winter and 1 for a southern district and 3 for a northern district. The color temperature estimation routine will be illustrated with

reference to Fig. 19. In step 140, the photographic date and time T are taken by taking the photographic informations 236 and in step 142, the time of sunrise SQ, time of sunset SI and time reaquired for high sun X on the day of taking the photograph are taken. In step 144, the time T of taking the photograph is compared with a time elapsed after the sunrise SQ+X. In step 146, the time T of taking the photograph is compared with a time SI-X which is X hour-before the sunset. When the following formula:

$$SQ + X \leqq T \leqq SI\text{-}X$$

is satisfied, it is judged that the light lightening the subject is the daylight, this fact is memorized in RAM in step 148 and the color temperature is estimated by, for example, the above-described color temperature estimation process in step 150.

When the following formula: $T < SQ + X$ is satisfied, the time T of taking the picture is compared with a time one hour-before the sunrise SQ-1.0 and time 0.5 hour-before the sunrise SQ-0.5 in steps 152 and 154, respectively. When the formula: $T < SQ\text{-}1.0$ is satisfied, it is judged to be night and the subsequent step 150 is operated. When the formula: $SQ\text{-}1.0 \leqq T < SQ\text{-}0.5$ is satisfied, the time is 30 min to 1 h before the sunrise and it is judged in step 158 that the color temperature is high, namely, the light lightening the subject is a high color temperature light. When the formula: $SQ + X< T \leqq SQ\text{-}1.5$ is satisfied, the time ranges 30 min before the sunrise to the high sun and it is judged in step 156 that the color temperature is low, namely, the light lightening the subject is a low color temperature light.

When the formula: $T > SI\ \text{-}X$ is satisfied, the time 0.5 hour-after the sunset SI+0.5 is compared with that 1 h-after the sunset SI+1.0 and also with the time T of taking the picture. When the time T of taking the picture is after the sunset by longer than 1.0 h, it is judged to be night and the following step 150 is operated. When the time T is 0.5 to 1 h after the sunset, it is judged that the color temperature is high (light of high color temperatrure), and the subsequent step 166 is operated. When the formula: $SI\text{-}X < T \leqq SI\text{+}0.5$ is satisfied, it is judged that the color temperature is low (light of low color temperature), and the subsequent step 164 is operated and various color temperatures are momorized in RAM.

The description will be made on the fourth process for the color temperature estimation with reference to Fig. 20. In this process, LV value (EV value), namely the quantity of light in the photographing step is employed. The yellow back is distinguished from the low color temperature light, taking advantage of that the low color temperature light generally does not have a high lightness and have a low LV value. In step 170, the LV value is judged to be higher than a predetermined value or not. When the LV value is higher than the predetermined value, it is judged that the color temperature is high (light of high color temperature) and it is memorized in RAM in step 172. On the contrary, when the LV value is lower than the predetermined value, the color temperature is estimated by the process described above.

The description will be made on the fifth process for the estimation of the color temperature (quality of the light) with reference to Fig. 21. In step 180, it is judged that the LV valule is lower than a predetermined value (for example, 4) or not. When the LV valule is less than the predetermined value, the characteristics of the image such as G density is calculated by operation in step 182. In the subsequent step 184, it is judged to be either G tone or not from G density. In the former case, the light is judged to be a light of a luminescent lamp and it is memorized in RAM. On the contrary, in the latter case wherein the LV value is above the predetermined value, the color temperature is estimated by another process as described above in step 186.

The above-described second process can be combined with the fourth process or alternatively the second process, the third process and the fourth process can be combined together to estimate that it is tungsten light or light of luiminescent lamp with a high accuracy.

Particularly in case the photographic light source is the light of luminescent lamp or a mixed light of luminescent lamp light / daylight, luminescent lamp light / tungsten lamp light or luminescent lamp light / strobo light, excellent results are obtained when a negative having photographic informations obtained by using the package of color photographic film of the present invention which necessitates only a small compensation of the printing conditions is automatically printed by the above-described printer system.

In case the mixture of light of the luminescent lamp and strobo light is used and it is supposed from the focal distance of the lens, shooting distance, sensitivity of the film and guide number of the strobo that the main light source for the main subject is strobo, the printing is preferably conducted under printing conditions suitable for the strobo light. When a negative obtained by using the package of color photographic film of the present invention is used, a difference in the color tone between the background and the main subject is only slight and excellent results are obtained also in such a case.

The above description relates to the case wherein the information of using the strobo or not and informations relating the photographing time are recorded in the film. It is also possible to memorize these informations in a magnetic recording part connected with the film or a memorizing means such as a magnetic card, IC card or IC attached to the film.

Regarding the first aspect of the present invention, the description will be made on a compound (A) capable of reacting with an oxidate of a color developing agent to release a diffusing development inhibitor or its precursor and a compound (B) capable of reacting with an oxidate of a developing agent to form a cleaved compound capable of reacting with another molecule of the color developing agent to cleave the product and thereby to form a development inhibitor. These compounds are usablle either singly or in the form of a mixture of two or more of them. These compounds (hereinafter referred to as diffusing development inhibitor-releasing compounds) are represented by the following general formulae [I] through [III]:

General formula [I] $A\text{-}Z_1$

General formula [II] $B\text{-}Z_1$

General formula [III] $A(\text{or } B)\text{-}P\text{-}Z_2$

wherein A represents a coupling component capable of reacting with an oxidate of a color developing agent to release $P\text{-}Z_2$ group, B represents a redox part capable of participating in an oxidation-reduction reaction with an oxidate of a color developing agent and then being alkali-hydrolyzed to releaze Z, $Z_1$ represents a diffusing development inhibitor, $-P\text{-}Z_2$ represents a group separated from A or B by cleavage and capable of reacting with an oxidate of a developing agent to form a development inhibitor, $Z_2$ represents a diffusing development-inhibitor or a development inhibitor having only a low diffusibility and when $-P\text{-}Z_2$ is diffusible, $A(\text{or } B)\text{-}P\text{-}Z_2$ represents a diffusing DIR compound.

The development inhibitors represented by $Z_1$ or $Z_2$ include those described in Research Disclosure, Vol. 176, No. 17643 (December, 1978). Preferred examples of them include mercaptotetrazole, selenotetrazole, mercaptobenzothiazole, selenobenzothiazole, mercaptobenzoxazole, selenobenzoxazole, mercaptobenzimidazole, selenobenzimidazole, benzotriazole, mercaptotriazole, mercaptooxadiazole, mercaptothiadiazole and derivatives of them.

Preferred diffusing development-inhibitors are those represented by the following general formulae:

(Z - 1)

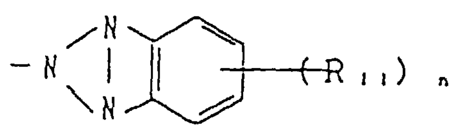

(Z - 2)

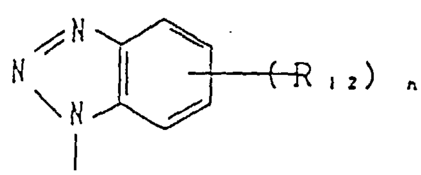

(Z - 3)

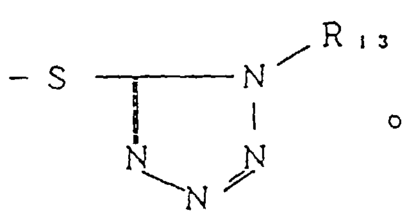

or

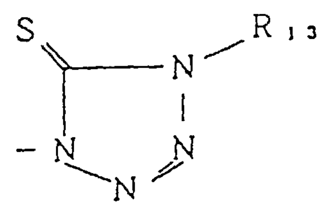

(Z - 4)

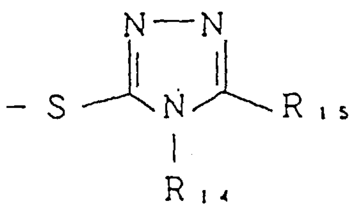

(Z - 5)

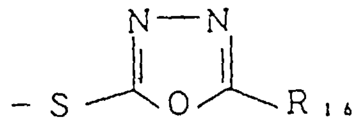

(Z - 6)

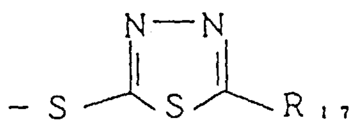

(Z - 7)

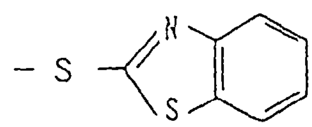

(Z - 8)

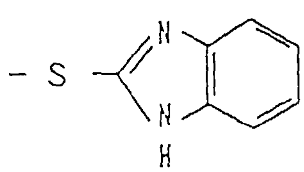

(Z - 9)

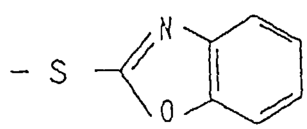

In general formulae [Z-1] and [Z-2], $R_{11}$ and $R_{12}$ each represent an alkyl group, alkoxy group, acylamino group, halogen atom, alkoxycarbonyl group, thiazolilydeneamino group, aryloxycarbonyl group, acyloxy group, carbamoyl group, N-alkylcarbamoyl group, N,N-dialkylcarbamoyl group, nitro group, amino group, N-arylcarbamoyloxy group, sulfamoyl group, sulfonamide group, N-alkylcarbamoyloxy group, ureido group, hydroxyl group, alkoxycarbonylamino group, aryloxy group, alkylthio group, arylthio group, anilino group, aryl group, imido group, heterocyclic group, cyano group, alkylsulfonyl group or aryloxycarbonylamino group,

n represents 1 or 2 and when n is 2, $R_{11}$ and $R_{12}$ may be the same or different from each other and n-$R_{11}$'s and n-$R_{12}$'s have 0 to 20 carbon atoms in total.

$R_{13}$, $R_{14}$, $R_{15}$, $R_{16}$ and $R_{17}$ in the general formulae [Z-3], [Z-4], [Z-5] and [Z-6] each represent an alkyl group, aryl group or heterocyclic group.

When $R_{11}$ through $R_{17}$ represent an alkyl group, it may be a substituted or unsubstituted and chain or cyclic alkyl group. The substituents include a halogen atom, nitro group, cyano group, aryl group, alkoxy group, aryloxy group, alkoxycarbonyl group, aryloxycarbonyl group, sulfamoyl group, carbamoyl group, hydroxyl group, alkanesulfonyl group, arylsulfonyl group, alkylthio group and arylthio group.

When $R_{11}$ through $R_{17}$ represent an aryl group, it may be either substituted or unsubstituted. The substituents include, for example, an alkyl group, alkenyl group, alkoxy group, alkoxycarbonyl group, halogen atom, nitro group, amino group, sulfamoyl group, hydroxyl group, carbamoyl group, aryloxycarbonylamino group, alkoxycarbonylami no group, acylamino group, cyano group and ureido group.

When $R_{11}$ through $R_{17}$ represent a heterocyclic group, it is a five-membered or six-membered monocyclic ring or condensed ring containing a nitrogen atom, oxygen atom or sulfur atom as the hetero atom. They are selected from the group consisting of pyridyl group, quinolyl group, furyl group, benzothiazolyl group, oxazolyl group, imidazolyl group, triazolyl group, benzotriazolyl group, imide group and oxazine group and they may be substituted with a substituent illustrated above with reference to the aryl group.

The number of carbon atoms in $R_{11}$ and $R_{12}$ in the general formulae [Z-1] and [Z-2] is 0 to 20, preferably 7 to 20.

The total number of carbon atoms in $R_{13}$ through $R_{17}$ in the general formulae [Z-3], [Z-4], [R-5] and [R-6] is 0 to 20, preferably 4 to 20.

Preferred development inhibitors are those which are released by the reaction of the oxidate of the developing agent and which diffuse from a layer in which they are contained to another layer to exhibit the development-inhibiting effect in the development step.

The coupler components represented by A include dye-forming couplers such as acylacetanilides, malonic diesters, malondiamides, benzoylmethanes, pyrazolones, pyrazolotriazoles, pyrazolobenzimidazole s, indazolones, phenols and naphtholes and couplers which substantially form no dye such as acetophenones, indanones and oxazolones.

Preferred coupler components include those of the following general formulae [IV] through [VII]:

General formula [IV]

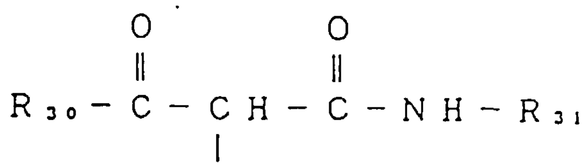

General formula [V]

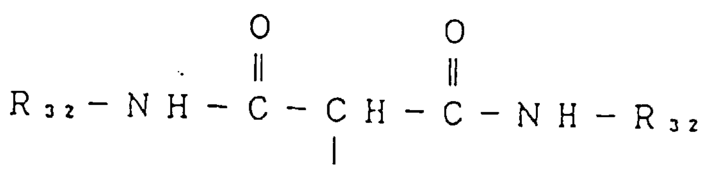

General formula [VI]

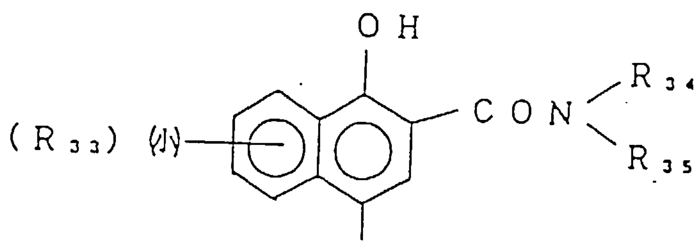

General formula [VII]

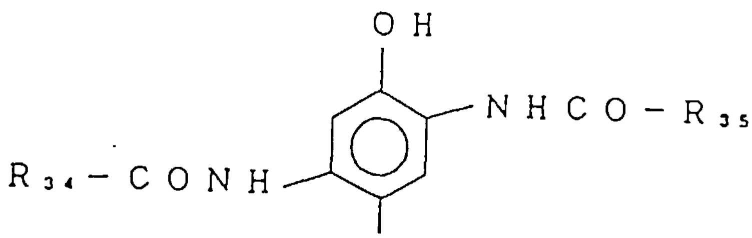

wherein $R_{30}$ represents an aliphatic group, aromatic group, alkoxy group or heterocyclic group, $R_{31}$ and $R_{32}$ each represent an aromatic group or heterocyclic group.

The aliphatic group $R_{30}$ is preferably a substituted or unsubstituted, chain or cyclic one having 1 to 20 carbon atoms. Preferred substituents of the alkyl group include, for example, alkoxy, aryloxy and acylamino groups.

When $R_{30}$, $R_{31}$ or $R_{32}$ is an aromatic group, it is phenyl group, naphthyl group or the like. Particularly the phenyl group is preferred and it may have a substituent. The substituents include, for example, an alkyl group, alkenyl group, alkoxy group, alkoxycarbonyl group and alkylamide group having not more than 30 carbon atoms. The phenyl group represented by $R_{30}$, $R_{31}$ or $R_{32}$ may be substituted with an alkyl group, alkoxy group, cyano group or halogen atom.

$R_{33}$ represents a hydrogen atom, alkyl group, halogen atom, carbonamide group or sulfonamide group and $\ell$ represents an integer of 1 to 5. $R_{34}$ and $R_{35}$ each represent a hydrogen atom, alkyl group or aryl group. The aryl group is preferably a phenyl group. The alkyl group and aryl group may be substituted. The substituents include, for example, a halogen atom, alkoxy group, aryloxy group or carboxyl group. $R_{34}$ and $R_{35}$ may be the same or different from one another.

The compounds of the general formula [II] are those (hereinafter referred to as DIR redox compounds) capable of participating in the oxidation-reduction reaction with an oxidate of an aromatic primary amine developing agent to form a compound which can be alkali-hydrolyzed to release a development inhibitor or a precursor thereof. In particular, they are represented by the following general formula [VIII]:

General formula [VIII]

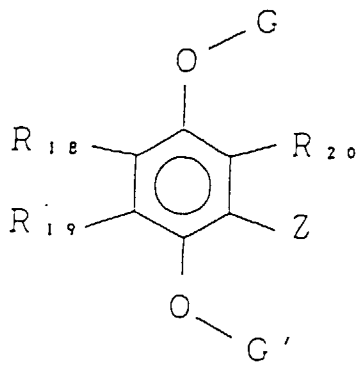

wherein G and G' each represent a hydrogen atom or a protective group for the phenolic hydroxyl group which can be removed during the photographic process such as a hydrogen atom, acyl group, sulfonyl group, alkoxycarbonyl group, carbamoyl group or oxalyl group,

$R_{18}$, $R_{19}$ and $R_{20}$ may be the same or different from one another and each represent a hydrogen atom, halogen atom, alkyl group, aryl group, alkoxy group, aryloxy group, alkylthio group, arylthio group, cyano group, alkoxycarbonyl group, carbamoyl group, sulfamoyl group, carboxyl group, sulfo group, sulfonyl group, acyl group, carboxamide group, sulfonamide group or heterocyclic group, $R_{18}$ and $R_{19}$, $R_{18}$ and G, $R_{19}$ and G', and $R_{20}$ and G may be bonded together to form an aromatic or non-aromatic ring. At least one of $R_{18}$, $R_{19}$ and $R_{20}$ contains a diffusion-resistant group having 10 to 20 carbon atoms, and

Z is as defined above.

Preferred development inhibitors are those of the above formula wherein P represents a group released from A or B by cleavage to form an oxidation-reduction group or a coupler.

Compounds capable of reacting with the oxidate of the developing agent to form a development inhibitor which diffuses from a layer in which it is contained to another layer to exhibit the development-inhibiting effect in the development step can be used.

These compounds usable in the present invention can be easily produced by processes described in U.S. Patent Nos. 3,227,554, 3,617,291, 3,933,500, 3,958,993, 4,149,885 and 4,234,678, J. P. KOKAI Nos. Sho 51-13239 and 57-56837, British Patent Nos. 2,070,266 and 2,072,363, Research Disclosure No. 21,228 (December, 1981), Japanese Patent Publication for Opposition Purpose (hereinafter referred to as "J. P. KOKOKU" Nos. Sho 58-9942 and Sho 51-16141, J. P. KOKAI No. Sho 52-90932, U.S. Patent No. 4,248,962, J. P. KOKAI Nos. Sho 62-114946, Sho 57-154234, Sho 58-98728, Sho 58-209736, Sho 58-209737, Sho 58-209738 and Sho 58-209740, and Japanese Patent Application No. Sho 59-278,853 and J.P. KOKAI Nos. Sho 61-255342 and Sho 62-24252.

Examples of the compounds capable of releasing diffusing development-inhibitor for use in the present invention will be given below, which by no means limit the invention.

T-101

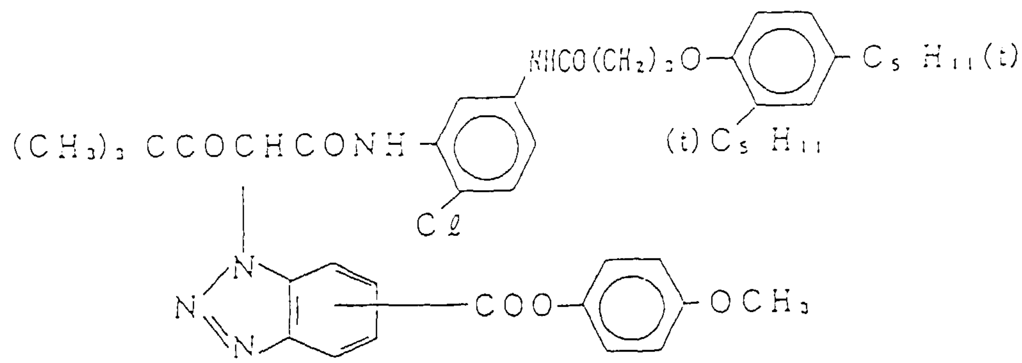

T-102

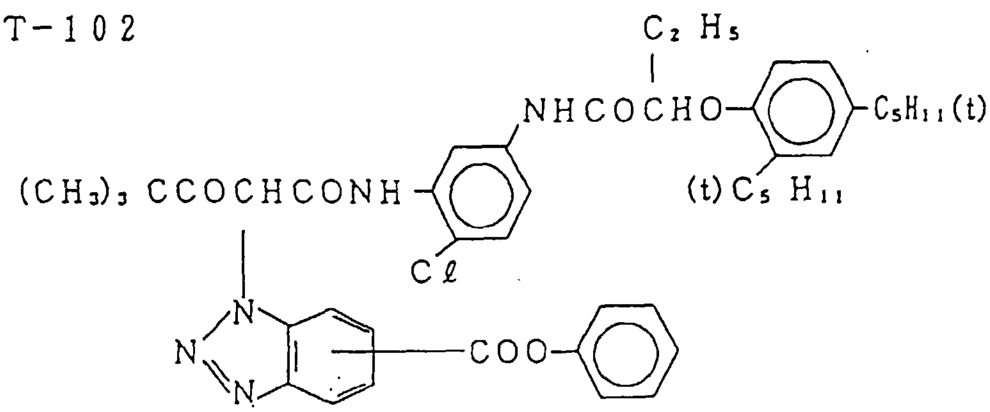

T-103

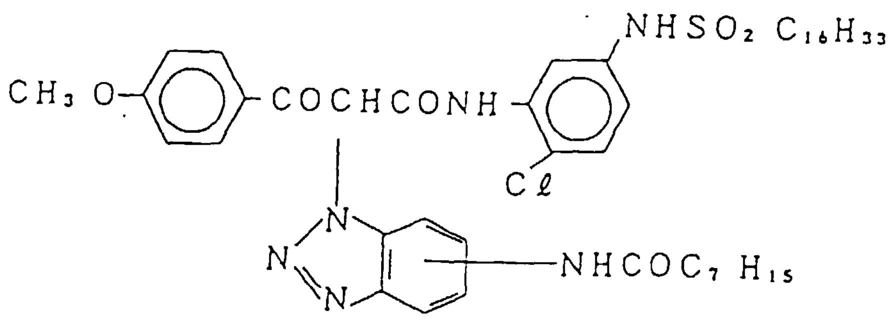

T-104

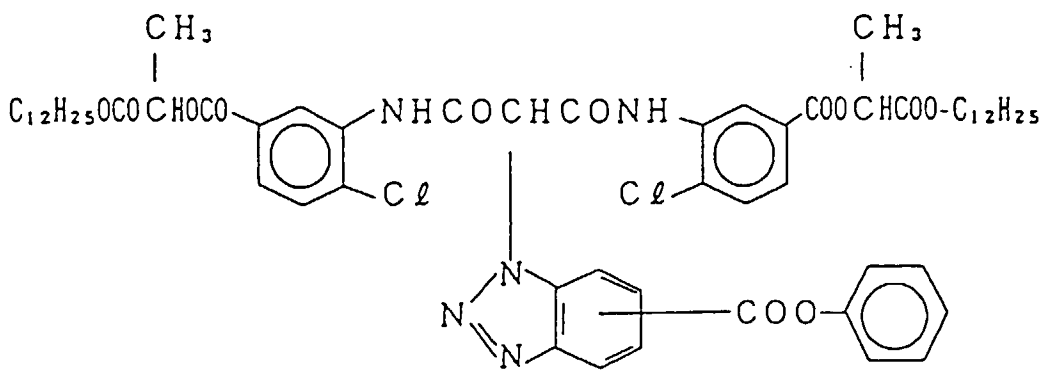

T-105

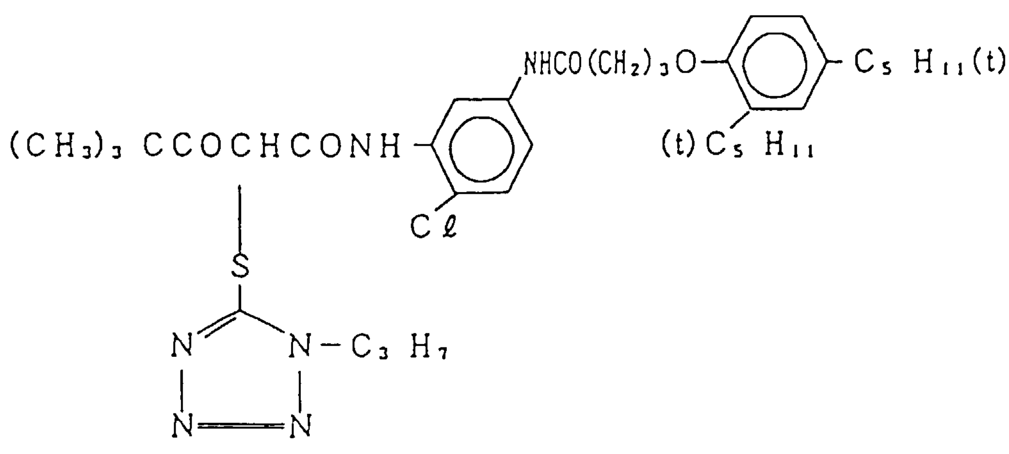

T-106

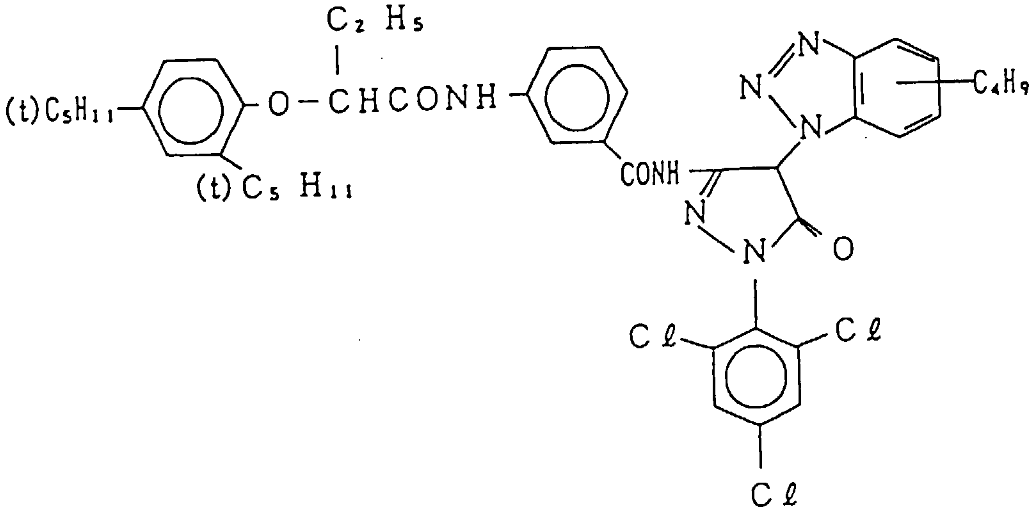

T-107

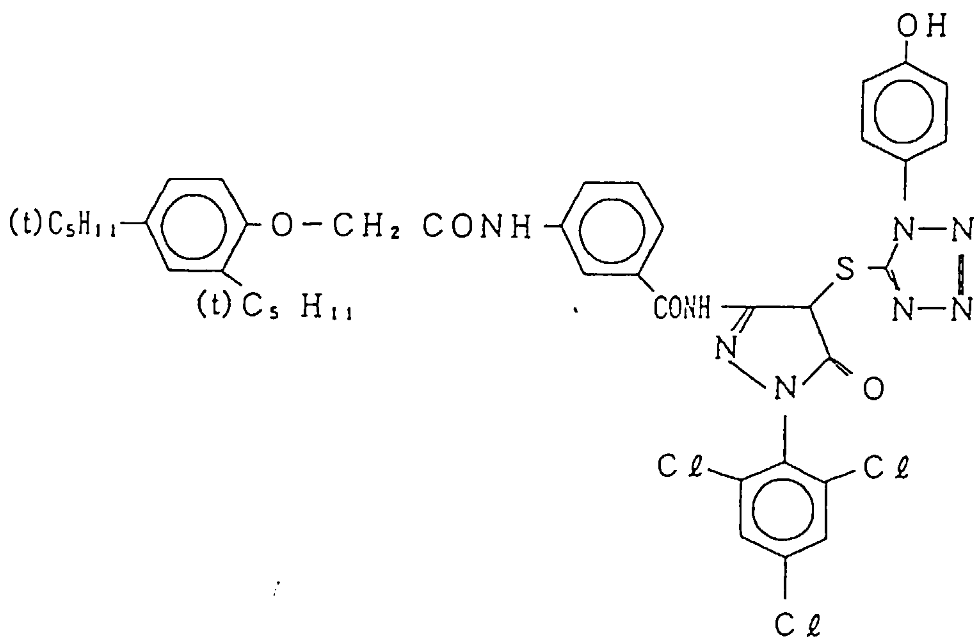

T-108

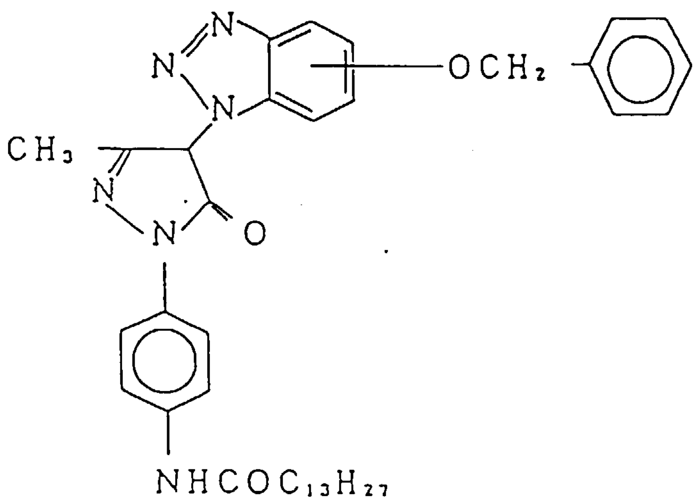

T-109

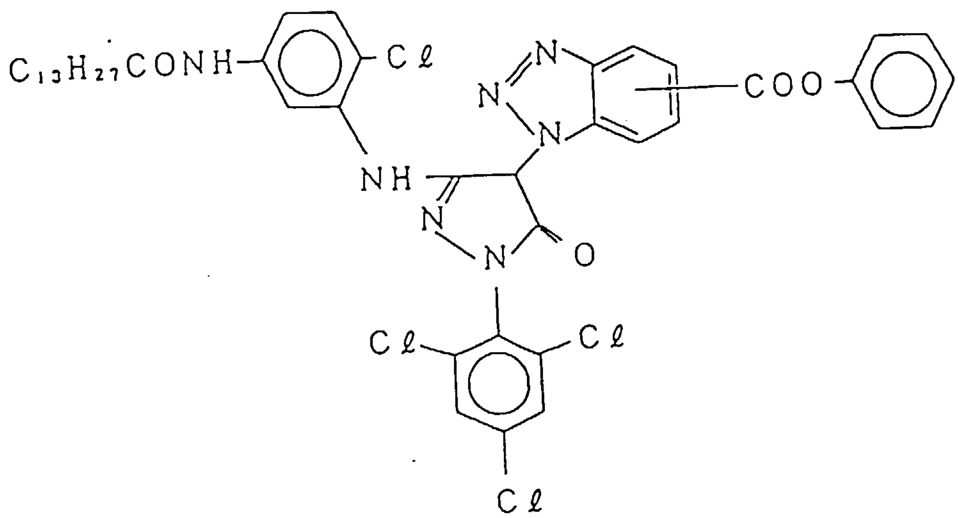

T-110

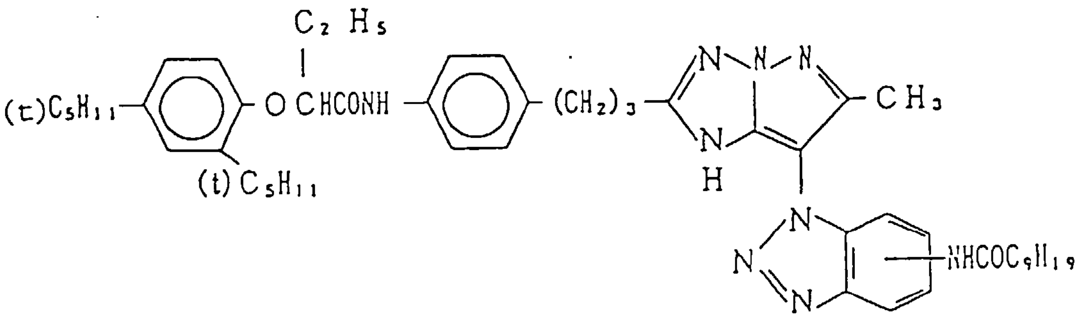

T-111

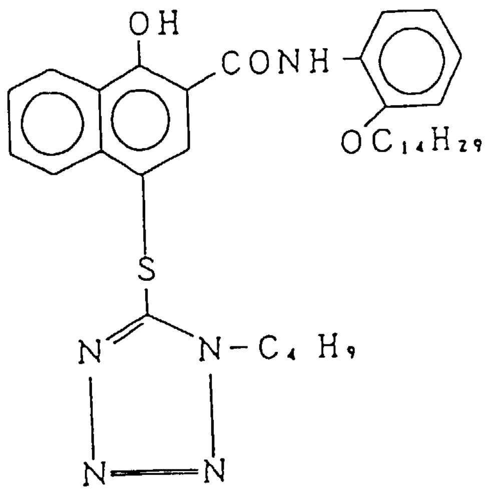

T-112

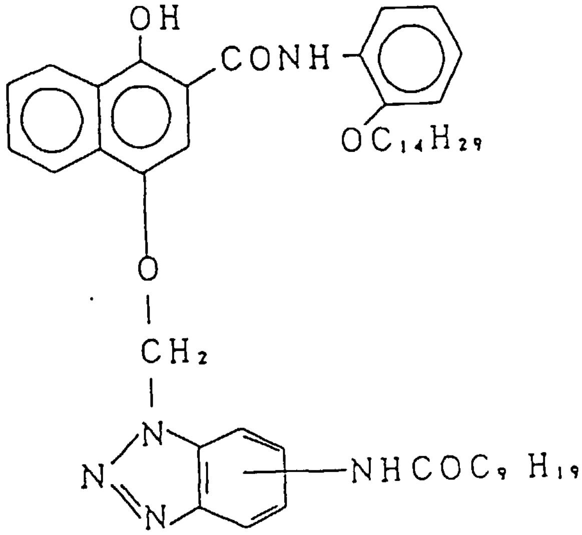

T-113

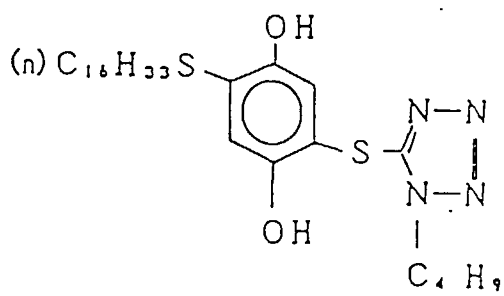

T-114

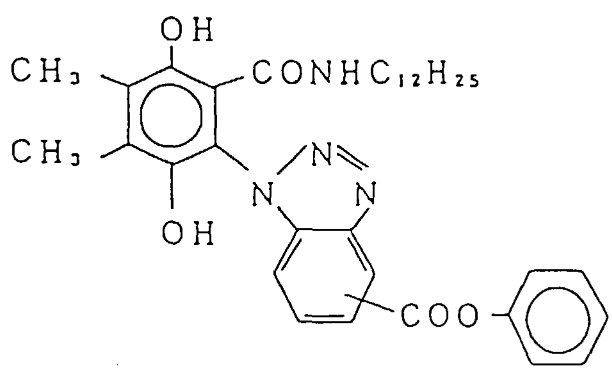

T-115

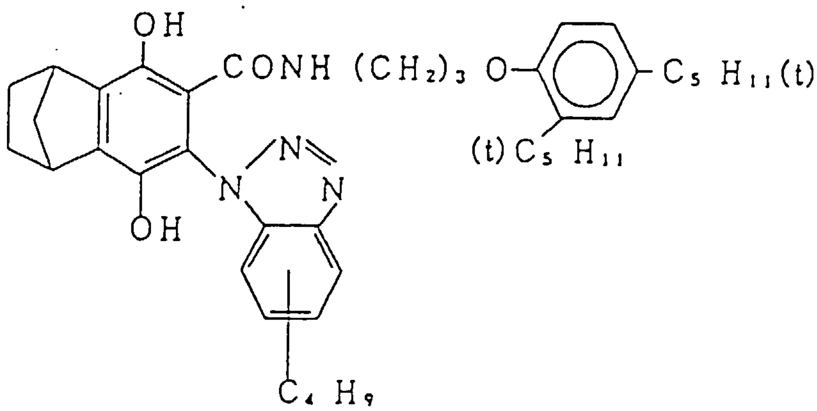

T-116

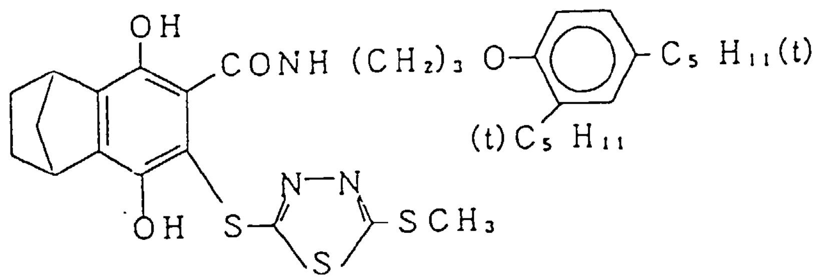

T-117

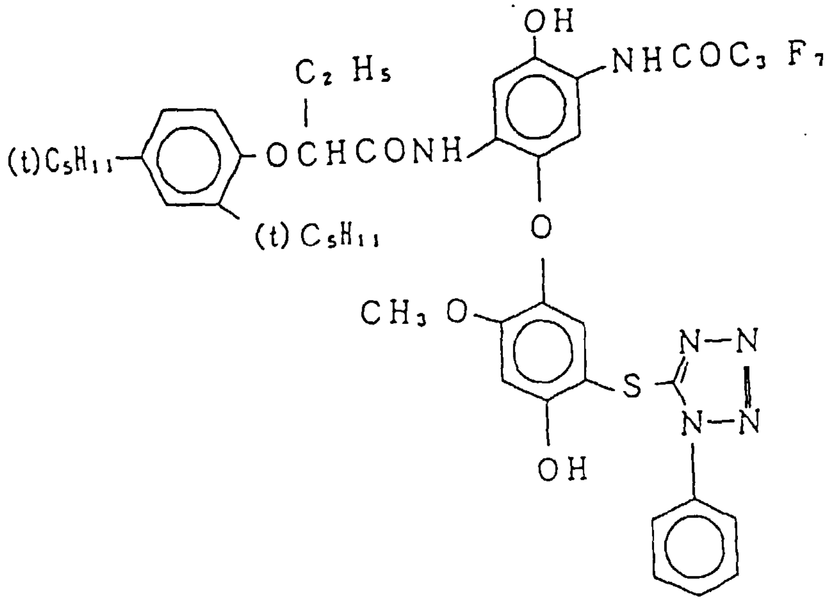

T-118

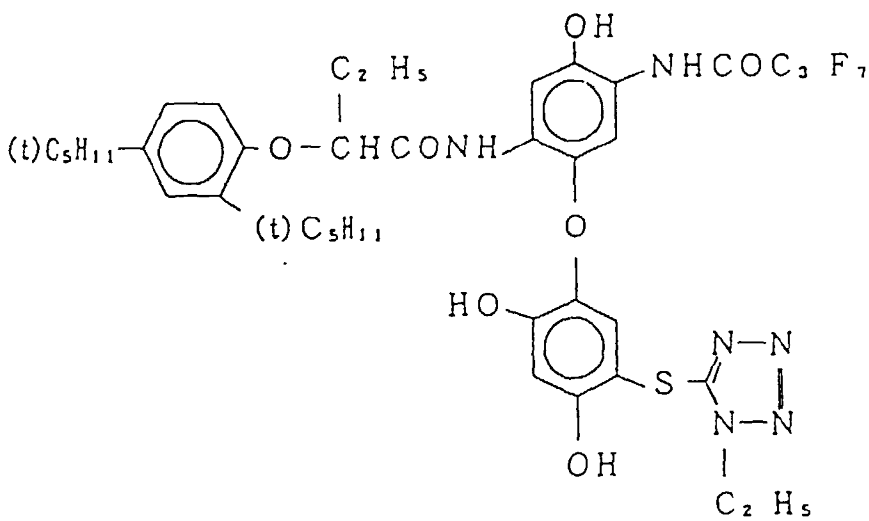

T-119

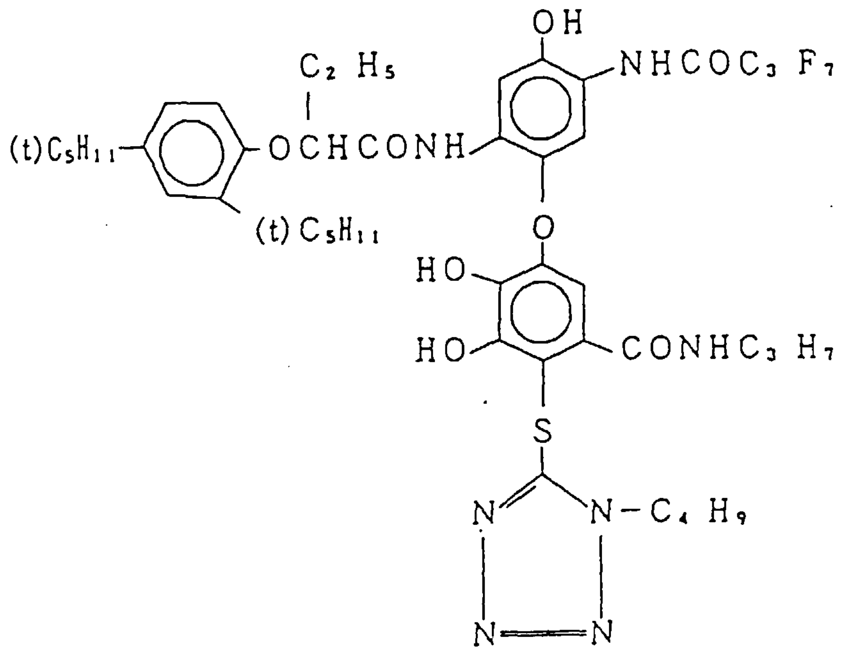

T-120

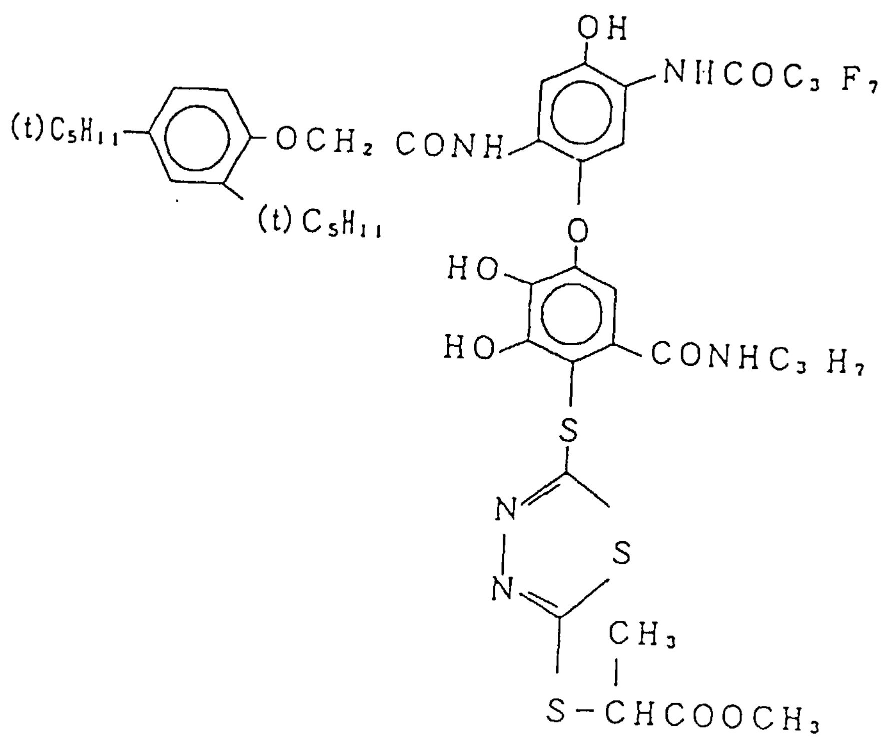

T-121

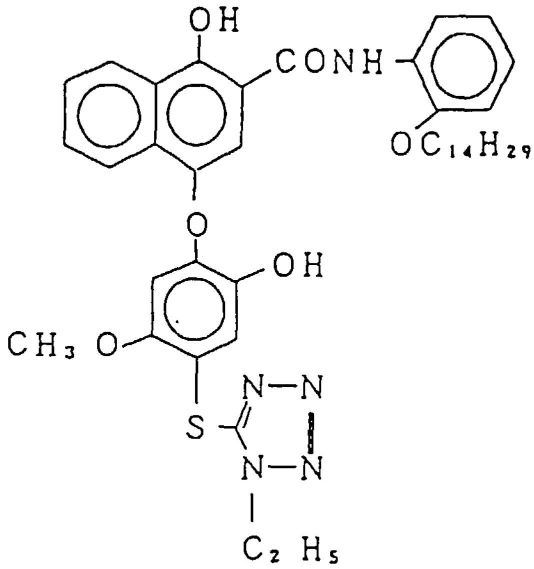

T-122

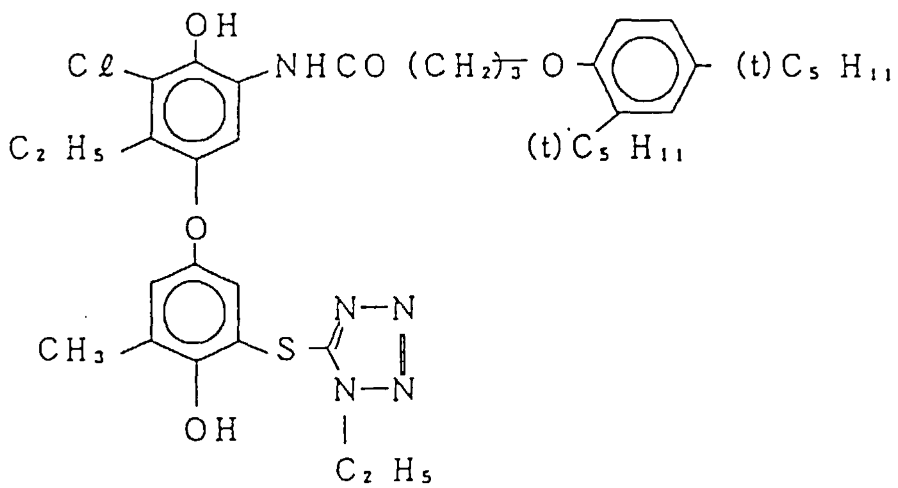

T-123

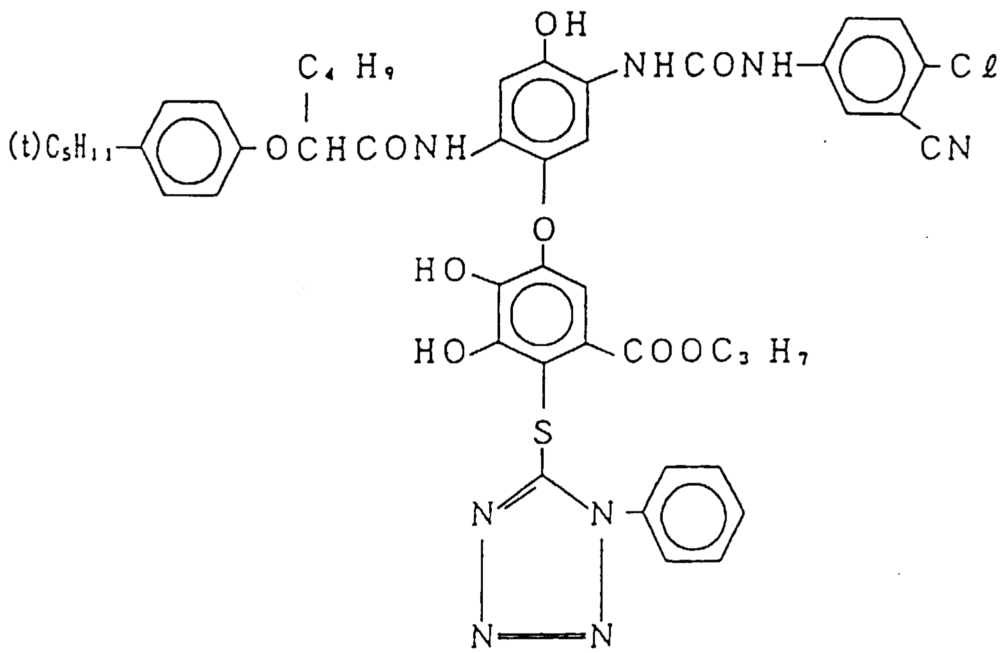

T-124

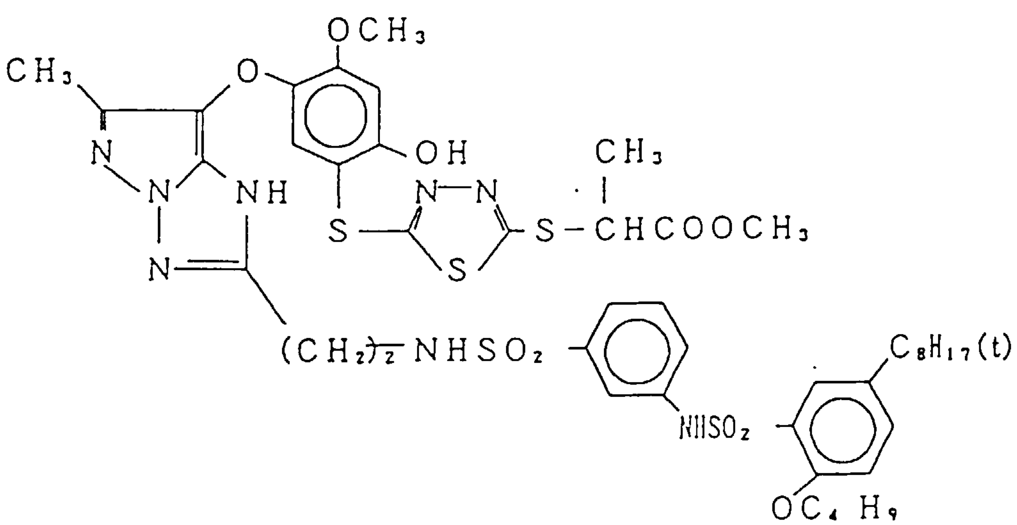

T－125

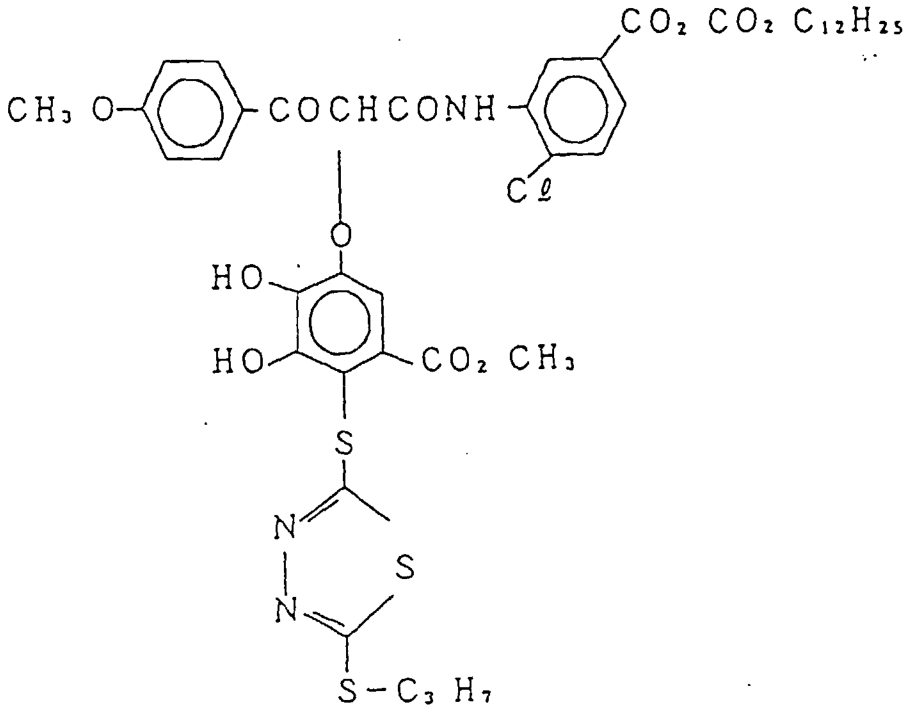

T－126

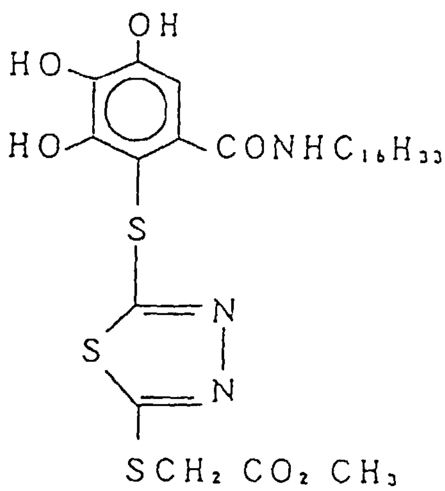

T-127

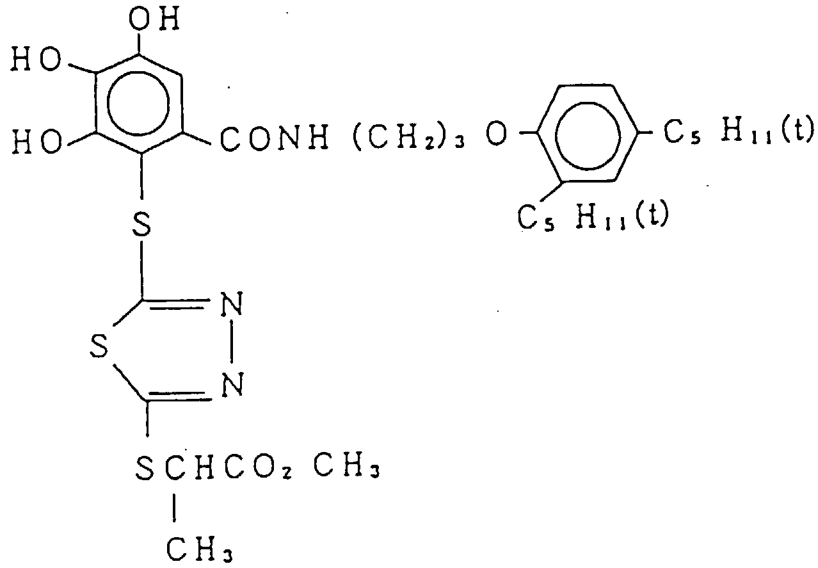

T- 128

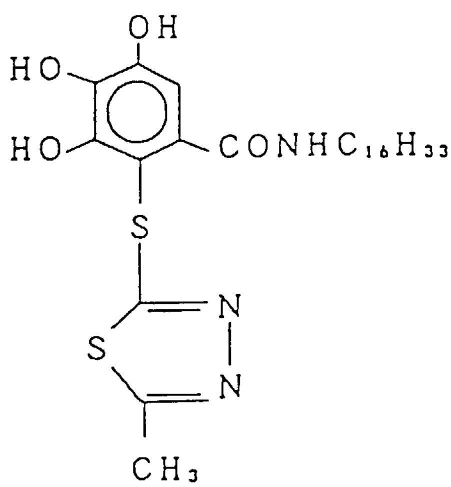

These compounds are preferably incorporated into a photosensitive silver halide emulsion layer or a layer adjacent thereto in a photosensitive material in an amount of 1 x $10^{-6}$ to 1 x $10^{-3}$ mol/$m^2$, preferably 3 x $10^{-6}$ to 5 x $10^{-4}$ mol/$m^2$, still preferably 3 x $10^{-5}$ to 2 x $10^{-4}$ mol/$m^2$.

The compounds of the general formulae [I] through [III] may be used either singly or in combination of them. Further they can be used in combination with other compounds capable of releasing a development inhibitor. In this case, the amount of the compounds of the general formulae [I] through [III] is preferably at least 10 molar %, still preferably at least 20 molar % and particularly preferably at least 30 molar %, based on the total amount of the compounds releasing the development inhibitor.

It is apparent that by using the compounds mentioned above, the sharpness and color reproducibility are remarkably improved and that the effects of them were quite significant from the tests of taking pictures of various subjects.

At least one layer among a blue-sensitive layer, a green-sensitive layer and a red-sensitive layer comprising

a silver halide emulsion is formed cn the support to form the photosensitive material for use in the present invention. The number or the order of the arrangement of the silver halide emulsion layer(s) and the photoinsensitive layer(s) is not particularly limited. A typical example of the sliver halide photosensitive material comprises at least one photosensitive layer (comprising two or more silver halide emulsion layers having substantially the same color sensitivity but different degree of sensitivity) formed on the support. The photosensitive layer is a unit photosensitive layer sensitive to any of blue, green and red light. In the multi-layered silver halide color photosensitive materials, the arrangement of the unit photosensitive layers is: a red-sensitive layer, a green-sensitive layer and a blue-sensitive layer in this order from the support. However, the order may be reversed or a sensitive layer may be interposed between two layers sensitive to another color depending on the purpose.

A photoinsensitive layer such as an intermediate layer can be provided between the silver halide photosensitive layers or as the top layer or the bottom layer.

The intermediate layer may contain a coupler or DIR compound as described in J.P. KOKAI Nos. Sho 61-43748, Sho 59-113438, Sho 59-113440, Sho 61-20037 and Sho 61-20038, or an ordinary color-mixing inhibitor.

The two or more silver halide emulsion layers constituting the unit photosensitive layer have preferably a structure consisting of two layers, i.e. a high sensitivity emulsion layer and a low sensitivity emulsion layer, as described in West German Patent No. 1,121,470 or British Patent No. 923,045. Usually the arrangement of the layers is such that the sensitivity thereof decreases gradually toward the support. A photoinsensitive layer may be provided between the silver halide emulsion layers. An emulsion layer having a low sensitivity may be formed away from the support and an emulsion layer having a high sensitivity may be formed close to the support as described in J.P. KOKAI No. Sho 57-112751, Sho 62-200350, Sho 62-206541 and Sho 62-206543.

An example of the arrangement is a structure consisting of a blue-sensitive layer having a low sensitivity (BL) /blue-sensitive layer having a high sensitivity (BH)/green-sensitive layer having a high sensitivity (GH)/green-sensitive layer having a low sensitivity (GL)/red-sensitive layer having a high sensitivity (RH)/red-sensitive layer having a low sensitivity (RL); BH/BL/GL/GH/RH/RL or BH/BL/GH/GL/RL/RH toward the support.

As described in J.P. KOKOKU No. Sho 55-34932, the arrangement may be a blue-sensitive layer /GH/RH/ GL/RL toward the support. Another arrangemnet is a blue-sensitive layer/GL/RL/GH/RH toward the support as described in J.P. KOKAI Nos. Sho 56-25738 and Sho 62-63936.

Another arrangement is that of three layers having sensitivities gradually lowered toward the support, i.e. a top layer (a silver halide emulsion layer having the highest sensitivity), middle layer (a silver halide emulsion layer having a lower sensitivity) and bottom layer (a silver halide emulsion layer having a sensitivity lower than that of the middle layer) as described in J.P. KOKOKU No. Sho 49-15495. Even in such an arrangement, a sensitive layer may comprise further an emulsion layer having a medium sensitivity / emulsion layer having a high sensitivity / emulsion layer having a low sensitivity in the order toward the support as described in J.P. KOKAI No. Sho 59-202464.

In another example, the arrangement is: high-sensitivity emulsion layer / low sensitivity emulsion layer / medium sensitivity emulsion layer or low sensitivity emulsion layer / medium sensitivity emulsion layer / high sensitivity emulsion layer.

When the photosensitive material has four or more layers, the arrangement of them may be varied as described above.

Thus the layer construction and the arrangement can be selected suitably for the use of the photosensitive material.

Preferred silver halides contained in the photographic emulsion layers of the photosensitive material used in the present invention include silver bromoiodide, silver chloroiodide and silver chlorobromoiodide, which contain about 30 molar % or less of silver iodide. Particularly preferred is silver bromoiodide or silver chlorobromoiodide containing about 2 to 10 molar % of silver iodide.

The silver halide grains in the photographic emulsion may be in a regular crystal form such as a cubic, octahedral or tetradecahedral form; an irregular crystal form such as spherical or plate form; or a complex crystal form thereof. They include also those having a crystal fault such as a twin plate.

The silver halide grain diameter may range from about 0.2 μ m or less to as large as that the projection area diameter thereof is about 10 μ m. The emulsion may be either a polydisperse emulsion or monodisperse emulsion.

The silver halide photographic emulsion usable in the present invention can be prepared by processes described in, for example, 'Research Disclosure (RD)' No. 17643 (December, 1978), pages 22 to 23, '1. Emulsion Preparation and types'; RD No. 18716 (November, 1979), p. 648; RD No. 307105 (November, 1989), pages 863 to 865; P. Glafkides, 'Chemie et Phisique Photographique', Paul Montel, 1967; G.F. Duffin, 'Photographic Emulsion Chemistry' (Focal Press, 1966); and V.L. Zelikman et al., 'Making and Coating Photographic Emulsion', (Focal Press, 1964).

Monodisperse emulsions described in U.S. Patent Nos. 3,574,628 and 3,655,394 and British Patent No. 1,413,748 are also preferred.

Tabular grains having an aspect ratio of 3 or higher are also usable in the present invention. The tabular grains can be easily prepared by processes described in, for example, Gutoff, 'Photographic Science and Engineering', Vol.

14, pages 248 to 257 (1970); U.S. Patent Nos. 4,434,226, 4,414,310, 4,433,048 and 4,439,520 and British Patent No. 2,112,157.

The crystal structure of the grains in the above emulsion may be uniform; the grains may comprise an inside portion and an outside portion which are composed of silver halides different from each other; or the structure may be a laminated one. Different silver halide grains can be bonded together by an epitaxial bond or they can be bonded with a compound other than silver halides such as silver rhodanate or lead oxide. A mixture of grains having various crystal forms can also be used.

The emulsion may be of a surface-latent image type for forming a latent image mainly on the surface thereof, of an internal latent image type for forming a latent image in the grains or of such a type that a latent image is formed both on the surface and in the grains. The emulsion must be a negative one. In the internal latent image type emulsions, a core/shell type internal latent image type emulsion described in J.P. KOKAI No. Sho 63-264740 may also be used. Processes for producing the core/shell type internal latent image type emulsion are described in J.P. KOKAI No. Sho 59-133542. The thickness of the shells in the emulsion which varies depending on the developing process is preferably 3 to 40 nm, particularly preferably 5 to 20 nm.

The silver halide emulsion to be used in the present invention is usually physically and chemically ripened and spectrally sensitized. The additives to be used in these steps are shown in Research Disclosure Nos. 17643, 18716 and 307105. The portions in which the additives are mentioned in these three Research Disclosure's are summarized in the following table.

A mixture of two or more photosensitive silver halide emulsions different from one another in at least one of grain size, grain size distribution, halogen components, shape of the grains and sensitivity can be used for forming a layer.

Silver halide grains having the fogged surface described in U.S. Patent No. 4,082,553, silver halide grains having fogged core and colloidal silver described in U.S. Patent No. 4,626,498 and J.P. KOKAI No. Sho 59-214852 can be preferably used for forming the photosensitive silver halide emulsion layer and/or substantially photo-insensitive, hydrophilic colloid layer. The term 'silver halide grains having fogged core or surface' indicates silver halide grains which can be subjected to uniform (non-imagewise) development irrespective of exposed or non-exposed parts of the photosensitive material. Processes for producing the silver halide grains having the fogged core or surface are described in U.S. Patent No. 4,626,498 and J.P. KOKAI No. Sho 59-214852.

The silver halide for forming the core of the core/shell type silver halide grains having the fogged core may have the same or different halogen composition. The silver halides having the fogged core or surface include silver chloride, silver chlorobromide, silver bromoiodide and silver chlorobromoiodide. Although the size of the fogged silver halide grains is not particularly limited, the average grain size thereof is preferably 0.01 to 0.75 $\mu$ m, particularly 0.05 to 0.6 $\mu$ m. The shape of the grains is not particularly limited. The grains may be regular or in the form of a polydispersed emulsion. The dispersion is preferably of monodisperse system wherein at least 95 % (by weight or by number of the grains) of the silver halide grains have a grain diameter within the average grain diameter$\pm$ 40 %.

Fine grains of a photo-insensitive silver halide are preferably used in the present invention. The term 'fine grains of photo-insensitive silver halide' indicates fine silver halide grains which are not sensitized in the image-forming exposure for forming a dye image and which are substantially not developed in the developing process. They are preferably previously not fogged.

The fine silver halide grains have a silver bromide content of 0 to 100 molar %. If necessary, they may contain silver chloride and/or silver iodide. They preferably contain 0.5 to 10 molar % of silver iodide.

The fine silver halide grains have an average grain diameter (average diameter of a projected area) of preferably 0.01 to 0.5 $\mu$ m, still preferably 0.02 to 0.2 $\mu$ m.

The fine silver halide grains can be prepared by the same processes as those for the production of ordinary photosensitive silver halides. In this case, it is unnecessary to optically sensitize or spectrally sensitize the surface of the silver halide grains. It is preferred, however, to incorporate a known stabilizer such as a triazol, azaindene, benzothiazolium or mercapto compound or a zinc compound thereinto prior to the incorporation thereof into a coating solution. Colloidal silica can be preferably incorporated into the fine silver halide grain-containing layer.

The photosensitive material of the present invention is applied preferably in an amount of not larger than 6.0 $g/m^2$ (in terms of silver), still preferably not larger than 4.5 $g/m^2$.

Known photographic additives usable in the present invention are also mentioned in the three Research Disclosures and the corresponding portions are also shown in the following table.

| Additive | RD 17643 [Dec., 1978] | RD 18716 [Nov., 1979] | RD 307105 [Nov., 1989] |
|---|---|---|---|
| 1. Chemical sensitizer | p. 23 | p.648, right column | p. 866 |

(continued)

| Additive | RD 17643 [Dec., 1978] | RD 18716 [Nov., 1979] | RD 307105 [Nov., 1989] |
|---|---|---|---|
| 2. Sensitivity improver | | ditto | |
| 3. Spectral sensitizer and supersensitizer | pp. 23 to 24 | p. 648, right column to p. 649, right column | pp. 866 to 868 |
| 4. Brightening agent | p. 24 | p. 647, right p. 868 column | |
| 5. Antifoggant and stabilizer | pp. 24 to 25 | p. 649, right pp. 868 to 870 column | |
| 6. Light absorber, filter dye and U.V. absrober | pp. 25 to 26 | p. 649, right p. 873 column to p. 650, left column | |
| 7. Antistaining agent | p. 25, right column | p. 650, left and p. 872 right columns | |
| 8. Dye image stabilizer | p. 25 | p. 650, left ditto columm | |
| 9. Hardener | p. 26 | p. 651, left pp. 874 and 875 column | |
| 10. Binder | p. 26 | p. 651, left pp. 873 to 874 column | |
| 11. Plasticizer and lubricant | p. 27 | p. 650, right p. 876 column | |
| 12. Coating aid and surfactant | pp. 26 and 27 | ditto | pp. 875 to 876 |
| 13. Antistatic agent | p. 27 | ditto | pp. 876 to 877 |
| 14. Matting agent | | | pp. 878 to 879 |

To prevent the deterioration of the photogrtahic properties by gaseous formaldehyde, it is preferred to add to the photosensitive material a compound capable of reacting with formaldehyde to fix it as described in U.S. Patent Nos. 4,411,987 and 4,435,503.

It is preferred to incorporate a mercapto compound described in U.S. Patent Nos. 4,740,454 and 4,788,132, J. P. KOKAI Nos. Sho 62-18539 and Hei 1-283551 into the photosensitive material of the present invention.

It is also preferred to incorporate a fogging agent, development accelerator, solvent for the silver halides or a precursor thereof into the photosensitive material of the present invention irrespective of the amount of the developing silver formed by the development as described in J. P. KOKAI No. Hei 1-106052.

It is also preferred to incorporate a dye dispersed by a process described in International Publication No. WO 88/04794 and JP Kokai No. Hei 1-502912 or a dye described in EP 317,308A, U.S. Patent No. 4,420,555 and J.P. KOKAI No. Hei 1-259358.

Various color couplers can be used in the present invention. Examples of them are given in patents described in the above-described Research Disclosure (RD) No. 17643, VII-C to G and No. 307105, VII-C to G.

Preferred yellow couplers are those described in, for example, U. S. Patent Nos. 3,933,051, 4,022,620, 4,326,024, 4,401,752 and 4,248,961, J.P. KOKOKU No. Sho 58-10739, British Patent Nos. 1,425,020 and 1,476,760, U.S. Patent Nos. 3,973,968, 4,314,023 and 4,511,649, and European Patent No. 249,473A.

Particularly preferred magenta couplers other than those of the general formula [I] of the present invention are those described in U.S. Patent Nos. 4,310,619 and 4,351,897, European Patent No. 73,636, U.S. Patent Nos. 3,061,432 and 3,725,067, J.P. KOKAI Nos. Sho 60-35730, Sho 55-118034 and Sho 60-185951, U.S. Patent No. 4,556,630, and International Publication No. WO 88/04795.

The cyan couplers usable in the present invention are phenolic and naphtholic couplers. Preferred cyan couplers are those described in U.S. Patent Nos. 4,052,212, 4,146,396, 4,228,233, 4,296,200, 2,369,929, 2,801,171, 2,772,162, 2,895,826, 3,772,002, 3,758,308, 4,334,011 and 4,327,173, West German Patent Unexamined Published Application No. 3,329,729, European Patent Nos. 121,365A and 249,453A, U.S. Patent Nos. 3,446,622, 4,333,999, 4,775,616, 4,451,559, 4,427,767, 4,690,889, 4,254,212 and 4,296,199 and J.P. KOKAI No. Sho 61-42658. Further pyrazoloazole couplers described in J.P. KOKAI No. Sho 64-553, Sho 64-554, Sho 64-555 and Sho 64-556 and imidazole couplers described in U.S. Patent No. 4,818,672 are usable.

Typical examples of the polymerized color-forming couplers are described in, for example, U.S. Patent Nos. 3,451,820, 4,080,211, 4,367,282, 4,409,320 and 4,576,910, British Patent No. 2,102,137 and European Patent No. 341,188 A.

The couplers capable of forming a colored dye having a suitable diffusibility are preferably those described in U.S. Patent No. 4,366,237, British Patent No. 2,125,570, European Patent No. 96,570 and West German Patent (Publication) No. 3,234,533.

Colored couplers used for compensation for unnecessary absorption of the colored dye are preferably those described in research Disclosure No. 17643, VII-G and No. 307105, VII-G, U.S. Patent No. 4,163,670, J.P. KOKOKU No. Sho 57-39413, U.S. Patent Nos. 4, 004,929 and 4,138,258 and British Patent No. 1,146,368. Other couplers preferably used herein include couplers capable of compensating for an unnecessary absorption of the colored dye with a fluonescent dye released during the coupling as described in U.S. Patent No. 4,774,181 and couplers having, as a removable group, a dye precursor capable of forming a dye by reacting with a developing agent as described in U.S. Patent No. 4,777,120.

Further, compounds which release a photographically useful residual group during a coupling reaction are also preferably usable in the present invention. DIR couplers which release a development inhibitor are preferably those described in the patents shown in the above described RD 17643, VII-F and No. 307105, VII-F as well as those described in J.P. KOKAI Nos. Sho 57-151944, Sho 57-154234, Sho 60-184248, Sho 63-37346 and So 63-37350 and U.S. Patent Nos. 4,248,962 and 4,782,012.

The couplers which release a nucleating agent or a development accelerator in the image-form in the development step are preferably those described in British Patent Nos. 2,097,140 and 2,131,188 and J.P. KOKAI Nos. Sho 59-157638 and Sho 59-170840. Further compounds capable of releasing a fogging agent, development accelerator, solvent for silver halides, etc. upon the oxidation-reduction reaction with an oxidate of a developing agent as described in J.P. KOKAI Nos. Sho 60-107029, Sho 60-252340, Hei 1-44940 and Hei 1-45687 are also preferred.

Other compounds usable for the photosensitive material include competing couplers described in U.S. Patent No. 4,130,427, polyequivalent couplers described in U.S. Patent Nos. 4, 283,472, 4,338,393 and 4,310,618, DIR redox compound-releasing couplers, DIR coupler-releasing couplers, DIR coupler-releasing redox compounds and DIR redox-releasing redox compounds described in J.P. KOKAI Nos. Sho 60-185950 and Sho 62-24252, couplers which release a dye that restores the color after coupling-off described in European Patent Nos. 173,302 A and 313,308 A,, bleach-accelerator-releasing couplers described in R.D. Nos. 11449 and 24241 and J.P. KOKAI No. Sho 61-201247, ligand-releasing couplers described in U.S. Patent No. 4,555,477, leuco dye-releasing couplers described in J. P. KOKAI No. Sho 63-75747 and fluorescent dye-releasing couplers described in U.S. Patent No. 4,774,181.

The couplers for use in the present invention can be incorporated into the photosensitive material by various known dispersion methods.

High-boiling solvents used for an oil-in-water dispersion method are described in, for example, U.S. Patent No. 2,322,027.

The high-boiling organic solvents having a boiling point under atmospheric pressure of at least 175°C and usable in the oil-in-water dispersion method include, for example, phthalates [such as dibutyl phthalate, dicyclohexyl phthalate, di-2-ethylhexyl phthalate, decyl phthalate, bis(2,4-di-t-amylphenyl) phthalate, bis(2,4-di-t-amylphenyl) isophthalate and bis(l,l-diethylpropyl) phthalate], phosphates and phosphonates [such as triphenyl phosphate, tricresyl phosphate, 2-ethylhexyldiphenyl phosphate, tricyclohexyl phosphate, tri-2-ethylhexyl phosphate, tridecyl phosphate, tributoxyethyl phosphate, trichloropropyl phosphate and di-2-ethylhexylphenyl phosphate], benzoates [such as 2-ethylhexyl benzoate, dodecyl benzoate and 2-ethylhexyl-p-hydroxybenzoate], amides [such as N,N-diethyldodecaneamide, N,N-diethyllaurylamide and N-tetradecyl-pyrrolidone], alcohols and phenols [such as isostearyl alcohol and 2,4-di-tert-amylphenol], aliphatic carboxylates [such as bis(2-ethylhexyl) sebacate, dioctyl azelate, glycerol tributylate, isostearyl lactate and trioctyl citrate], aniline derivatives [such as N,N-dibutyl-2-butoxy-5-tert-octylaniline] and hydrocarbons [such as paraffin, dodecylbenzene and diisopropylnaphthalene]. Co-solvents usable in the present invention include, for example, organic solvents having a boiling point of at least about 30 °C , preferably 50 to about 160°C. Typical examples of them include ethyl acetate, butyl acetate, ethyl propionate, methyl ethyl ketone, cyclohexanone, 2-ethoxyethyl acetate and dimethylformamide.

The steps and effects of the latex dispersion method and examples of the latices usable for the impregnation are described in, for example, U.S. Patent No. 4,199,363 and West German Patent Application (OLS) Nos. 2,541,274 and 2,541,230.

The color photosensitive material preferably contains phenethyl alcohol or an antiseptic or mold-proofing agent described in J.P. KOKAI Nos. Sho 63-257747, Sho 62-272248 and Hei 1-80941 such as 1,2-benzoisothiazolin-3-one, n-butyl p-hydroxybenzoate, phenol, 4-chloro-3,5-dimethylphenol, 2-phenoxyethanol or 2-(4-thiazolyl)benzimidazole.

The present invention is applicable to various color photosensitive materials such as ordinary color negative films, cinema color negative films, reversal color films for slides or televisions, color papers, positive color films and

verversal color papers.

Suitable supports usable in the present invention are described in, for example, on page 28 of the above-descirbed RD. No. 17643, from right column, page 647 to left column, page 648 of RD. No. 18716 and on page 879 of RD. No. 307105.

The photosensitive material has a total thickness of the hydrophilic colloidal layers on the emulsion layer-side of 28 μ m or less, preferably 23 μ m or less, still preferably 18 μ m or less and particularly 16 μ m or less. The film-swelling rate $T_{1/2}$ is preferably 30 sec or less, still preferably 20 sec or less. The thickness is determined at 25°C and at a relative humidity of 55 % (2 days). The film-swelling rate $T_{1/2}$ can be determined by a method known in this technical field. For example, it can be determined with a swellometer described on pages 124 to 129 of A. Green et al. "Photogr. Sci. Eng.", Vol. 19, No. 2. $T_{1/2}$ is defined to be the time required for attaining the thickness of a half (1/2) of the saturated film thickness (the saturated film thickness being 90 % of the maximum thickness of film swollen with the color developer at 30 °C for 3 min 15 sec.).

The film-swelling rate $T_{1/2}$ can be controlled by adding a hardener to gelatin used as the binder or by varying the time conditions after the coating. The swelling rate is preferably 150 to 400 %. The swelling rate is calculated according to the following formula:

[(maximum swollen film thickness) - (film thickness)] / (film thickness)

wherein the maximum swollen film thickness is determined under the above-described conditions.

The photosensitive material preferably has a hydrophillic coloid layer (in other words, back layer) having total thickness of 2 to 20μ m on dry basis. The back layer preferably contains the above-described light absorber, filter dye, U.V. ray absorber, antistatic agent, hardener, binder, plasticizer, lubricant, coating aid, surfactant, etc. The swelling rate of the back layer is preferably 150 to 500 %.

In the second aspect of the present invention, it is preferable that RMS graininess of the photographic film be 15 or below in order to obtain a picture of a satisfactory quality by the pseudo telephoto zoom technique.

The RMS graininess "R" herein is determined by an ordinary method with a microdensitometer having an aperture diameter of 48 μ m, the spectral sensitivity being determined depending on visual characteristics for the determination of density according to ISO. RMS graininess is defined to be [(minimum density) + 1.0](RMS value) x 1,000. To obtain an excellent graininess, it is preferred to use a photosensitive emulsion having a suitable sensitivity/ graininess ratio.

The grains in the photosensitive emulsion for use in the present invention are silver bromoiodide grains having a high-iodine content phase therein. Namely, the grains in the emulsion of the present invention preferably each have a phase having a silver iodide content higher than that of the grain surface by at least 6 molar %.

The grains in the photosensitive emulsion for use in the second aspect preferably have a multi-layer structure as will be described below. The grains are those having a multi-layer structure characterized in that the outermost shell of the silver halide grain has a silver iodide content of 10 molar % or less, a shell having a high silver iodide content higher than that of the outermost shell by at least 6 molar % is formed inside the outermost shell, an intermediate shell having a silver iodide content which is between that of the outermost sell and that of the shell of high-silver iodide content is formed between them, the silver iodide content of the intermediate shell is higher than that of the outermost shell by at least 3 molar % and the silver iodide content of the shell of high silver iodide content is higer than that of the intermediate shell by at least 3 molar %.

The silver iodide content of the high-iodine content shell is preferably 6 to 40 molar %, which is higher than that of the outermost shell layer by at least 6 molar %. When the silver iodide content of the former is less than 6 molar % (or when it is higher than that of the outermost shell layer by only less than 6 molar %), the sensitivity is insufficient and, on the contrary, when it exceeds 40 molar %, a polydisperse system is formed. Also from the viewpoints of sensitivity and sharpness, it is preferably not higher than 40 molar %.

The difference in the silver iodide content between the intermediate layer and the outermost layer or the high-silver iodide content shell must be at least 3 molar %, since when the difference is insufficient, the effect of the intermediate shell is reduced (the sensitivity is reduced). The upper limit of the silver iodide content is 35 molar % from the viewpoint of efficiently obtaining the effect of the intermediate shell (sensitivity, monodispersibility, relationship between fogging and sensitivity and shapness).

Still preferred embodiments of the emulsion of the multi-layer structure grains of the present invention are as follows:

Preferably, the following equations are satisfied:

$$\Delta I = Ih - I\ell > 8 \text{ molar } \%$$

$$\Delta Ih = Ih - Im > 4 \text{ molar } \%$$

and more preferably, the following equations are satisfied:

$$\Delta I > 10 \text{ molar } \%$$

$$\Delta Ih > 4 \text{ molar } \%$$

$$\Delta I\ell > 4 \text{ molar } \%$$

wherein:

Ih represents silver iodide content (molar %) of high-silver iodide content shell,
Im represents silver iodide content (molar %) of the intermediate shell, and
$I\ell$ represents silver iodide content (molar %) of the outermost shell.

$I\ell$ is preferably 0 to 5 molar %, still preferably 0 to 2 molar % and particularly 0 to 1 molar %. Ih is preferably 6 to 40 molar %, still preferably 10 to 40 molar %.

The volume of the outermost shell is preferably 4 to 70 molar %, still preferably 10 to 50 molar %, based on the whole grain. The volume of the high-silver iodide content shell is desirably 10 to 80 %, still preferably 20 to 50 % and particularly 20 to 45 % based on the whole grain. The volume of the intermediate shell is preferably 5 to 55 %, still preferably 20 to 55 %, based on the whole grain. Although the high silver iodide content shell may be at least a part of the inner core, the inner core is preferably formed inside the high silver iodide content shell.

The silver iodide content of the inner core is preferably 0 to 40 molar %, still preferably 0 to 10 molar % and particularly 0 to 6 molar %. The diameter of the inner core is 0.05 to 0.8 μ m, preferably 0.05 to 0.4 μ m.

In the characteristic feature (5) described above, silver iodide content of the whole grain is 1 to 20 molar %, preferably 2 to 15 molar and still preferably 3 to 12 molar %. The grain diameter distribution may be either moncdisperse or polydisperse. The coefficient of variation of the grain diameter distribution is preferably 20 % or below (monodisperse emulsion). The coefficient of variation is still preferably 15 % or below. The coefficient of variation is defined as follows and it is a criterion of the monodispersibility:

$$\text{Coefficient of variation (\%)} = \text{(standard deviation of grain diameter)} / \text{(average grain diameter)} \times 100$$

The color photosensitive material for use in the present invention has a multi-layer structure comprising at least 3 photosensitive layers, i.e. blue-sensitive emulsion layer, red-sensitive emulsion layer and green-sensitive emulsion layer. The silver halide grains of the present invention are desirably incorporated into at least one emulsion layer.

The diameter of the silver halide grain is defined to be the length of a side of a cube having the same volume as that of the silver halide grain and it is preferably 0.1 to 2.0 μ m. The shape of the grain may be octahedral, cubic, spherical or tabular.

The description will be made on the layer structure of the silver halide grains. As described above, the inner core may be the same as the high-silver iodide shell or the former may be formed inside the latter. The inner core may be adjacent to the high-silver iodide content shell, the high-silver iodide content shell may be adjacent to the intermediate shell and the intermediate shell may be adjacent to the outermost shell. Further one or more layers having any composition (hereinafter referred to as optional shell) may be formed between the respective shells.

The optional shell may be a single shell having a homogeneous composition, two or more shells each having a homogeneous composition which varies stepwise or a continuous shell the composition of which is gradually changed, or a combination of them. The high iodine content shell and intermediate shell may be plural or only one each.

The inner core of the silver halide grains can be produced by processes described in, for example, P. Glafkides, "Chimie et Physique. Photographique" published by Paul Montell Co. in 1967, G. F Duffin "Photographic Emulsion Chemistry" published by The Focal Press in 1966 and V. L. Zelikman et al., "Making and Coating Photographic Emulsion" published by The Focal Press in 1964. Namely, it can be produced by any of acid process, neutral process and ammonia process. A soluble silver salt can be reacted with a soluble halide by any of a single-jet method, simultaneous mixing method and a combination of them.

A so-called back mixing method wherein the grains are formed in the presence of an excess amount of silver ion can be also employed. An embodiment of the simultaneous mixing method is a controlled double jet method wherein pAg in the liquid phase in which the silver halide is formed is kept constant. By this method, a silver halide emulsion in which the grain size is substantially uniform and the grains have a regular crystal form is obtained.

Although two or more silver halide emulsions formed separately from each other may be mixed together, the double-jet method or controlled double-jet method is preferably employed.

In the production of the inner cores, pAg which varies depending on the reaction temperature and variety of the solvent for the silver halide is preferably 2 to 11. When a solvent for the silver halide is used, the grains can be produced in a short time favorably. A well-known solvent for silver halides such as ammonia or thioether is usable.

The shape of the inner core may be tabular, spherical, twin, octahedral, cubic, tetradecahedral or mixture of them.

The grain size is made uniform by changing the addition velocity of silver nitrate or an aqueous alkali halide solution depending on the growing velocity of the grains as described in British Patent No. 1,535,016 and J.P. KOKOKU Nos. 48-36890 and 52-16364 or by varying the concentration of the aqueous solution as described in U.S. Patent No. 4,242,445 and J.P. KOKAI No. 55-158124. In such a case, care should be taken so as not to exceed the critical saturation. Such a method is preferred also in the introduction of the Optional shell, high-iodine content shell, intermediate shell or outermost shell, since renucleation is not caused and the silver halide grains are uniformly coated.

If necessary, one or more optional shells can be formed between the high-silver halide content shell and inner core of the silver halide grains. The high-silver halide content shell can be formed by an ordinary halogen replacement method or silver halide coating method after, if necessary, desalting the formed inner core which may be coated with the optional shell.

The halogen replacement method is conducted by, for example, adding an aqueous solution of mainly an iodine compound (preferably potassium iodide) having a concentration of preferably 10 % or less after formation of the inner core. This method is described in detail in, or example, U.S. Patent Nos. 2,592,250 and 4,075,020 and J.P. KOKAI No. 55-127549. To minimize the difference in the iodine distribution in the high-silver iodide content shell between the grains, it is desirable to add an aqueous iodide compound solution having a concentration of $10^{-2}$ molar % or below for 10 min or longer.

The inner core can be coated with a fresh silver halide by simultaneously adding an aqueous halide solution and an aqueous silver nitrate solution by the simultaneous mixing method or controlled double jet method. The details of these methods are described in J.P. KOKAI No. 53-22408, J.P. KOKOKU No. 43-12162, J.P. KOKAI No. 58-14829 and J. Photo. Sci., 24,198 (1976).

The pAg in the formation of the high-silver iodide content shell varies depending on the reaction temperature and the variety and amount of the solvent for the silver halide. It is preferably the same as that described above. When ammonia is used as the solvent, pAg is preferably 7 to 11.

The high-silver iodide content shell is formed preferably by the simultaneous mixing method or controlled double jet method.

The intermediate shell of the silver halide grains can be formed by coating the grain comprising the inner core and the high-silver iodide content shell having, if necessary, one or more optional shells formed over the high-silver iodide content shell with a silver halide having a halogen composition different from that of the high-silver iodide content shell by the simultaneous mixing method or controlled double jet method.

In this step, the above-described method for forming the high-silver iodide shell is also employed.

The outermost shell of the silver halide grains can be formed by coating the grains comprising the intermidiate shell, the high-silver iodide shell and the inner core having the intermediate shell on its surface or, if necessary, one or more optional shells formed over the intermediate shell with a silver halide having a halogen composition different from that of the high-silver iodide content shell by the simultaneous mixing method or controlled double jet method. In this step, the above-described method for forming the high-silver iodide shell is also employed.

One or more optional shells can be formed between the inner core and the high-silver iodide content shell, between the high-silver iodide content shell and the intermediate shell or between the intermediate shell and the outermost shell, if necessary. The optional shells can be formed by the above-described process for forming the high-silver iodide shell. The inner core, high-silver iodide shell, intermediate shell, outermost shell and the respective optional shells can be desalted in the course of forming a shell adjacent thereto or, alternatively, continuous shells can be formed without the desalting step.

The iodine content of the coating shells of the silver halide grains can be determined by, for example, a process described in J.I. Goldstein, D. B. Williams, "X ray analysis in TEM/ATEM" in Scanning Electron Microscopy (1977), vol. 1 (IIT Research institute), p. 651 (March, 1977).

After the formation of the outermost shell of the silver halide grains which are the final main ingredient, excess halogen compounds, by-produced or unnecessary nitrates, ammonium salts and compounds can be removed from the dispersion medium. They can be removed by an ordinary noodle washing method, dialysis method, precipitation

method wherein an inorganic salt, anionic surfactant, anionic polymer (such as polystyrenesulfoni c acid) or gelatin derivative (such as acylated gelatin or carbamoyl derivative of gelatin) is used or flocculation method.

The core/shell silver halide grains can be optically sensitized in a desired wave length region. Method of the optical sensitization is not particularly limited. For example, the grains can be chemically sensitized with one or more optical sensitizers such *as* a cyanine dye, e.g. zeromethine dye, monomethine dye, dimethine dye or trimethine dye or a merocyanine dye. The sensitizing dyes is frequently used in combination of them for the purpose of supersensitization. The emulsion may contain, in addition to the sensitizing dye, a dye which per se has no sepectral sensitizing effect or a substance which has the supersensitizing effect but which absorbs substantially no visible light. These techniques are described in U.S. Patent Nos. 2,688,545, 2,912,329, 3,397,060, 3,615,635 and 3,628,964, British Patent Nos. 1,195,302, 1,242,588 and 1,293,862, West German Patent (OLS) No. 2,030,326 and 2, 121,780, J.P. KOKOKU Nos. 43-4936 and 44-14030 and Research Disclosure Vol. 176, No. 17643 (December, 1978), (published in December, 1978), p. 23, IV-J. The technique can be selected depending on the wave length zone of the sensitization, sensitivity, and purpose and use of the photosensitive material.

The core/shell type silver halide crystals can be subjected to various chemical sensitization processes usually employed for processing emulsions.

For the chemical sensitization, methods described on pages 675 to 734 of "Die Grundlagen der Photographische Prozesse mit Silberhalogeniden" edited by H. Frieser and published by Academische Verlagsgesellschaft, 1968 can be employed. Namely, sulfur sensitization method wherein a sulfur-containing compound capable of reacting with silver ion and active gelatin are used, reductive sensitization method wherein a reducing substance is used and noble metal sensitization method wherein a noble compound such as a gold compound is used can be employed either singly or in combination of them. The sulfur sensitizers usable herein include thiosulfates, thioureas, thiazoles, rhodanine, etc. Examples of them are given in U. S. Patent Nos. 1,574,944, 2,410,689, 2,278,947, 2,728,668, 3,656,955, 4,032,928 and 4,067,740. The reducing sensitizers usable herein include stannous salts, amines, hydrazine derivatives, formamidinesulfinic acids and silane compounds. Examples of them are give in U.S. Patent Nos. 2,487,850, 2,419,974, 2,518,698, 2,983,609, 2,983,610, 2,694,637, 3,930,867 and 4,054,458. In the noble metal sensitization, complex salts of metals of Group VIII in the Periodic Table such as platinum, iridium and palladium can be used in addition to gold complex salts. Examples of them are given in U.S. Patent Nos. 2,399,083 and 2,448,060 and British Patent No. 618,061.

The silver salt grains can be processed by a combination of two or more of the above-described chemical sensitization methods.

The amount of silver to be coated is not particularly limited. It is preferably 1,000 to 15,000 mg/$m^2$, still preferably 2,000 to 10,000 mg/$m^2$.

The photosensitive layer containing the grains may be formed on both surfaces of a support.

In the course of forming the respective. shells of the core/shell grains in the emulsion, doping can be conducted with various dopants. The internal dopants include, for example, silver, sulfur, iridium, gold, platinum, osmium, rhodium, tellurium, selenium, cadmium, zinc, lead, thallium, iron, antimony, bismuth and arsenic.

The photosensitive material used in the second aspect also comprises silver halide emulsion layers, i.e. blue-sensitive layer, green-sensitive layer and red-sensitive layer, formed on the support, as mentioned in the first aspect. The photosensitive material may have the same arrangement of the unit photosensitive layers is: a red-sensitive layer, green-sensitive layer and blue-sensitive layer. However, a preferred layer structure of the photosensitive material for use in the second aspect is as follows:

The first layer (the bottom layer): Antihalation layer
The second layer: Intermediate layer
The third layer: Red-sensitive layer of low sensitivity (RL)
The fourth layer: Red-sensitive layer of high sensitivity (RH)
The fifth layer: Intermediate layer
The sixth layer: Green-sensitive layer of low sensitivity (GL)
The seventh layer: Green-sensitive layer of high sensitivity (GH)

The eighth layer: Intermediate layer
The ninth layer: Blue-sensitive layer of low sensitivity (BL)
The tenth layer: Blue-sensitive layer of high sensitivity (BH)
The eleventh layer: The first protective layer
The twelfth layer (the top layer): The second protective layer.

The following layer structure of the photosensitive material is also quite preferred:

The first layer (the bottom layer): Antihalation layer
The second layer: Intermediate layer
The third layer: Red-sensitive layer of low sensitivity (RL)
The fourth layer: Red-sensitive layer of medium sensitivity (RM)
The fifth layer: Red-sensitive layer of high sensitivity (RH)
The sixth layer: Intermediate layer
The seventh layer: Green-sensitive layer of low sensitivity (GL)
The eighth layer: Green-sensitive layer of medium sensitivity (GM)
The ninth layer: Green-sensitive layer of high sensitivity (GH)
The tenth layer: Intermediate layer
The eleventh layer: Blue-sensitive layer of low sensitivity (BL)
The twelfth layer: Blue-sensitive layer of medium sensitivity (BM)
The thirteenth layer: Blue-sensitive layer of high sensitivity (BH)
The fourteenth layer: The first protective layer
The fifteenth layer (the top layer): The second protective layer.

Although the amount of the silver halide is not particularly limited, it is preferably 2.5 to 8 $g/m^2$, more preferably 2.5 to 6 $g/m^2$ (in terms of silver).
Although the silver density based on the gelatin binder is also not particularly limited, silver is used in such an amount that the weight ratio of silver to gelatin will be in the range of 0.01 to 5.0 depending on the intended sensitivity of the emulsion layer.
Preferred silver halides contained in the photographic emulsion layers of the photosensitive material include silver bromoiodide, silver chloroiodide and silver chlorobromoiodide, which contain about 30 molar % or less of silver iodide. Particularly preferred is silver bromoiodide or silver chlorobromoiodide containing about 2 to 25 molar % of silver iodide.
The silver halide grains in the photographic emulsion may be in a regular crystal form such as a cubic, octahedral or tetradecahedral form; an irregular crystal form such as spherical or plate form; those having a crystal fault such as a twin plate; or a complex crystal form thereof.
The silver halide grain diameter may range from about 0.2 μ m or less to as large as that the projection area diameter thereof is about 10μ m. The emulsion may be either a polydisperse emulsion or monodisperse emulsion.
The silver halide photographic emulsion usable in the present invention can be prepared by processes described in, for example, 'Research Disclosure (RD)' No. 17643 (December, 1978), pages 22 to 23, '1. Emulsion Preparation and types'; RD No. 18716 (November, 1979), p. 648; p. Glafkides, 'Chemic et Phisique Photographique', Paul Montel, 1967; G.F. Duffin, 'Photographic Emulsion Chemistry' (Focal Press, 1966); and V.L. Zelikman et al., 'Making and Coating Photographic Emulsion', (Focal Press, 1964).
Monodisperse emulsions described in U.S. Patent Nos. 3,574,628 and 3,655,394 and British Patent No. 1,413,748 are also preferred.
Tabular grains having an aspect ratio of 5 or higher are also usable. The tabular grains can be easily prepared by processes described in, for example, Gutoff, 'Photographic Science and Engineering', Vol. 14, pages 248 to 257 (1970); U.S. Patent Nos. 4,434, 226, 4,414,310, 4,433,048 and 4,439,520 and British Patent No. 2,112,157.
The crystal structure of the grains in the above emulsion may be homogeneous; the grains may comprise an inside portion and an outside portion which are composed of silver halides different from each other; or the structure may be a laminated one. Different silver halide grains can be bonded together by an epitaxial bond or they can be bonded with a compound other than silver halides such as silver rhodanate or lead oxide.
A mixture of grains having various crystal forms can also be used.
The silver halide emulsion for use in the present invention is usually physically and chemically ripened and spectrally sensitized. The additives to be used in these steps are shown in Research Disclosure Nos. 17643 and 18716 mentioned above.
Known photographic additives are also mentioned in the two Research Disclosures as mentioned in the first aspect. Couplers usable in the second aspect may be the same as in the first aspect.
The method of the second aspect of the invention can be used to provide a photographic film which makes pseudo telephoto zoom printing possible by recording the photographic information. Further a picture of a high quality can be yielded even by zooming up by pseudo telephoto zoom due to excellent graininess.
Photographic film products produced by the methods of the present invention can be developed by an ordinary method described in the above-described RD.No. 17643, pages 28 to 29, No. 18716, page 651, left to right columns and No. 307105, pages 880 to 881.

The colour developer used for the development of the photosensitive material is preferably an alkaline aqueous solution containing an aromatic primary amine developing agent as the main ingredient. p-Phenylenediamine compounds are preferably used as the color developing agent, though aminophenol compounds are also usable. Typical examples of them include 3-methyl-4-amino-N,N-diethylaniline, 3-methyl-4-amino-N-ethyl-N- β - hydroxyethylaniline, 3-methyl-4-amino-N-ethyl-N-β-methanesulfonamid ethylaniline, 3-methyl-4-amino-N-ethyl-β-methoxyethylaniline as well as their sulfates, hydrochlorides and p-toluenesulfonates. Among them, 3-methyl-4-amino-N-ethyl-N-β -hydroxyethylaniline sulfate is preferred. They can be used either alone or in combination of two or more of them.

The color developer usually contains a pH buffering agent such as an alkali metal carbonate, borate or phosphate; a development inhibitor such as a chloride, bromide, iodide, benzimidazole, benzothiazole or mercapto compound; or a fog inhibitor. If necessary, the color developer may further contain preservatives such as hydroxylamine, diethylhydroxylamine, sulfites, hydrazines, e.g. N,N-biscarboxymethylhydrazine, phenylsemicarbazides, triethanolamine and catecholsulfonic acids; organic solvents such as ethylene glycol and diethylene glycol; development accelerators such as benzyl alcohol, polyethylene glycol, quaternary ammonium salts and amines; dye-forming couplers; competing couplers; assistant developing agents such as 1-phenyl-3-pyrazolidone; thickening agents; chelating agents such as aminopolycarboxylic acids, aminopolyphosphonic acids, alkylphosphonic acids and phosphonocarboxylic acids, e.g. ethylenediaminetetraacetic acid, nitrilotriacetic acid, diethylenetriaminepentaacetic acid, cyclohexanediaminetetraacetic acid, hydroxyethyliminodiacetic acid, 1-hydroxyethylidene-1,1-diphosphonic acid, nitrilo-N,N,N-trimethylenephosphonic acid, ethylenediamine-N,N,N,N-tetramethyleneph osphonic acid, ethylenediamine-di-(o-hydroxyphenylacetic acid) and salts of them.

When a reversal process is employed, usually black-and-white development is conducted and then color development is conducted. The black-and-white developer comprises one or a combination of two or more known black-and-white developing agents such as dihydroxybenzene s, e.g. hydroquinone, 3-pyrazolidones, e.g. 1-phenyl-3-pyrazolidone and aminophenols, e.g. N-methyl-p-aminophenol.

The pH of these color developers or black-and-white developers is usually 9 to 12. The amount of the developer to be replenished varies depending on the color photosensitive material to be processed. It is usually not larger than 3 ℓ per $m^2$ of the photosensitive material. When bromide ion concentration in the replenisher is reduced, the amount of the replenisher can be reduced to 500 ml or less. When the amount of the replenisher is reduced, the evaporation of the liquid and oxidation thereof with air are preferably inhibited by reducing the contact area of the processing vessel with air.

The contact area of the processing liquid with air in the processing vessel can be represented by the following opening rate:

Opening rate = [(contact area of processing solution with air ($cm^2$)] / [volume of processing solution ($cm^3$)]

The opening rate defined above is preferably not higher than 0. 1, still preferably 0.001 to 0.05. The opening rate is reduced by covering the surface of the photographic processing solution in the processing vessel with a floating lid or the like, by providing a movable lid as described in J.P. KOKAI No. Hei 1-82033 or by a slit development process described in J.P. KOKAI No. Sho 63-216050. It is preferred to reduce the opening rate not only in the color development and black-and-white cevelopment steps but also in all of the subsequent steps such as bleaching, bleach-fixing, fixing, water washing and stabilization steps. The amount of the replenisher can be reduced also by inhibiting accumulation of bromide ion in the developer.

The color development time is usually 2 to 5 min. The time can be reduced by elevating the temperature and pH and by increasing the concentration of the color developing agent.

After completion of the color development, the photographic emulsion layer is usually bleached. The bleaching process can be conducted simultaneously with the fixing process (bleach-fixing process) or separately from it. For acceleration, the bleach-fixing process may be conducted after the bleaching process. Depending on the purpose, two bleach-fixing vessels connected with each other can be employed; the fixing process can be conducted prior to the bleach-fixing process; or the bleaching process can be conducted after the bleach-fixing process. Examples of the bleaching agents include compounds of polyvalent metals such as iron (III), peracids, quinones and nitro compounds. Typical examples of the bleaching agents include organic complex salts of iron (III) such as aminopolycarboxylates, e.g. ethylenediaminetetraacetate, diethylenetriaminepentaacetate, cyclohexanediaminetetraacetate, methyliminodiacetate, 1,3-diaminopropanetetraacetate and glycol ether diaminetetraacetate and complex salts thereof with citric acid, tartaric acid and malic acid. Among them, iron (III) complex salts of aminopolycarboxylic acids such as iron (III) complex salt of ethylenediaminetetraacetic acid and iron (III) complex salt of 1,3-diaminopropanetetraacetic acid are preferred from the viewpoints of the rapidity of the process and prevention of environmental pollution. The iron (III) complex salts of aminopolycarboxylic acids are particularly effective in both bleaching solution and bleach-fixing solution. pH of the

bleaching solution or bleach-fixing solution containing such an iron (III) complex salt of aminopolycarboxylic acid is usually 4.0 to 8. For acceleration of the process, a lower pH can also be employed.

The bleaching solution, bleach-fixing solution, pre-bleaching bath and pre-bleach-fixing bath may contain a bleaching accelerator, if necessary. Examples of the bleaching accelerators include compounds having a mercapto group or disulfide group described in U.S. Patent No. 3,893,858, West German Patent Nos. 1,290,812 and 2,059,988, J.P. KOKAI Nos. Sho 53-32736, Sho 53-57831, Sho 53-37418, Sho 53-72623, Sho 53-95630, Sho 53-95631, Sho 53-104232, Sho 53-124424, Sho 53-141623 and 53-28426 and Research Disclosure No. 17,129 (July, 1978); thiazolidine derivatives described in J.P. KOKAI No. 50-140,129; thiourea derivatives described in J.P. KOKOKU No. Sho 45-8506, J.P. KOKAI Nos. Sho 52-20832 and 53-32735 and U.S. Patent No. 3, 706,561; iodides described in West German Patent No. 1,127,715 and J.P. KOKAI No. Sho 58-16,235; polyoxyethylene compounds described in West German Patent Nos.966,410 and 2,748,430; polyamine compounds described in J.P. KOKOKU No. Sho 45-8836; compounds described in J.P. KOKAI Nos. Sho 49-40,943, Sho 49-59,644, Sho 53-94,927, Sho 54-35,727, Sho 55-26,506 and Sho 58-163,940; and bromide ions. Among them, the compounds having a mercapto group or disulfide group are preferred, since they have a remarkable acceleration effect. Compounds described in U.S. Patent No. 3,893,858, West German Patent No. 1,290,812 and J.P. KOKAI No. Sho 53-95,630 are particularly preferred. Further compounds described in U.S. Patent No. 4,552,834 are also preferred. These bleach-accelerators may be added to the photosensitive material. When a color photosensitive material for photography is to be bleach-fixed, these bleaching accelerators are particularly effective.

An organic acid is preferably incorporated into the bleaching solution and bleach-fixing solution in order to prevent a bleach stain, in addition to the above-described compounds. Particularly preferred organic acids are compounds having an acid dissotiation constant (pKa) of 2 to 5 such as acetic acid, propionic acid and hydroxyacetic acid.

The fixing agents usable for the fixing solution or bleach-fixing solution include, for example, thiosulfates, thiocyanates, thioether compounds, thioureas and a large amount of iodides. Among them, the thiosulfates are commonly used and ammonium thiosulfate is most widely usable. A combination of a thiosulfate with a thiocyanate, thioether compound or thiourea is also preferred. Preferred examples of the preservatives for the fixing solution and bleach-fixing solution include sulfites, hydrogensulfites, carbonylhydrogensulfite adducts and sulfinic acid compounds described in European Patent No. 294769 A. Further it is preferred to add an aminopolycarboxylic acid or organic phosphonic acid to the fixing solution or bleach-fixing solution in order to stabilize it.

It is preferred to incorporate 0.1 to 10 mol/ℓ of a compound having a pKa of 6.0 to 9.0 such as an imidazole compound, e.g. imidazole, 1-methylimidazole, 1-ethylimidazole or 2-methylimidazole into the fixing solution or bleach-fixing solution in order to adjust pH thereof.

The total time of the desilverization steps is preferably as short as possible so far as the desilverization is satisfactory conducted. It is preferably 1 to 3 min, still preferably 1 to 2 min. The processing temperature is 25 to 50°C preferably 35 to 45°C. In the preferred temperature range, the desilverization velocity is improved and staining after the process is effectively inhibited.

In the desilverization step, the stirring is conducted as strongly as possible. The strong stirring is conducted by a process wherein a jet of the processing solution is impinged against the surface of the emulsion layer of the photosensitive material as described in J.P. KOKAI No. Sho 62-183460, process wherein the stirring effect is improved by providing a rotating means as described in J.P. KOKAI No. Sho 62-183461, process wherein a wiper blade is placed in the solution so that the photosensitive material is moved while the emulsion surface thereof is kept in contact with the blade to make the emulsion surface turbulent and thereby to improve the stirring effect, and process wherein the total flow of the circulating processing solution is increased. Such a means is effective for all of the bleaching solution, bleach-fixing solution and fixing solution. When the stirring is improved, the supply of the bleaching agent and fixing agent into the emulsion membrane is accelerated and, as a result, the demineralization velocity is increased. The above-described means of improving the stirring is effective particularly when a bleaching accelerator is used. In such a case, the accelerating effect is remarkably improved or inhibition of fixing by the bleaching accelerator can be overcome.

An automatic developing machine used for processing the photosensitive material preferably has a means of transporting the photosensitive material as described in J.P. KOKAI Nos. Sho 60-191257, Sho 60-191258 and Sho 60-191259. As described in J.P. KOKAI No. Sho 60-191257 referred to above, with this transportation means, the entrainment of the processing solution from the pre-processing bath into the post-processing bath can be remarkably inhibited and the performance of the processing solution can be remarkably prevented from deterioration. These effects are particularly advantageous for reducing the processing time in each step and reducing the quantity of the replenisher.

The color photosensitive silver halide material is usually subjected to washing with water and/or stabilization step after desilverization. The amount of water used in the washing step varies in a wide range depending on the properties of the photosensitive material (such as couplers used), temperature of water used for washing, number of the tanks used for washing with water (number of stages), replenishing method such as counter flow or down-flow system and various other conditions. Among them, the relationship between the number of the tanks for washing with

water and the amount of water can be determined by a method described in "Journal of the Society of Motion Picture and Television Engineers", Vol. 64, pages 248 to 253 (May, 1955).

Although the amount of water necessitated for washing can be remarkably reduced by the multi-stage counter flow system described in the above-described journal, another problem is posed in this method that bacteria propagate themselves while water is kept for a longer time in the tanks and, as a result, a suspended matter thus formed is fixed on the photosensitive material. For solving this problem in the processing of the color photosensitive material, a quite effective method for reducing in amount of calcium ion and magnesium ion described in J.P. KOKAI No. Sho 62-288,838 can be employed. Further this problem can be solved also by using isothiazolone compounds described in J.P. KOKAI No. Sho 57-8,542, thiabendazoles, chlorine-containing germicides such as chlorinated sodium isocyanurates, benzotriazoles and germicides described in Hiroshi Horiguchi "Bokin Bobai-zai no Kagaku" published by Sankyo Shuppan Co. in 1986, "Biseibutsu no Mekkin, Sakkin, Bobai Gijutsu" edited by Eisei Gijutsu-kai and published by Kogyo Gijutsu-kai in 1982 and "Bokinbobai-zai Jiten" edited by Nippon Bokinbobai Gakkai and published in 1986.

The pH of washing water used for processing the photosensitive material is 4 to 9, preferably 5 to 8. The temperature of water to be used for washing and the washing time which vary depending on the properties and use of the photosensitive material are usually 14 to 45°C and 20 sec to 10 min, respectively, and preferably 25 to 40°C and 30 sec to 5 min. The photosensitive material can be processed directly with a stabilizing solution in place of washing with water. The stabilization can be conducted by any of known processes described in J.P. KOKAI Nos. 57-8,543, 58-14,834 and 60-220,345.

The washing process with water may be followed by a stabilization process. In the stabilization, a stabilizing bath containing a dye-stabilizer and a surfactant which is usually used as the final bath for photosensitive material for color photography can be used. The dye-stabilizers include, for example, aldehydes such as formalin and glutaraldehyde; N-methylol compounds; hexamethylenetetram ine and aldehyde / sulfuric acid adducts.

The stabilizing bath may also contain chelating agents and mold-proofing agents.

An overflow obtained by washing with water or replenishing the stabilizing solution can be used again in another step such as desilverization step.

When the processing solution is concentrated by, for example, evaporation, in the processing step with the automatic developing machine or the like, it is preferred to add water so as to control the concentration.

The color photosensitive silver halide material may contain a color developing agent for the purpose of simplifying and accelerating the process. The color developing agents are preferably used in the form of precursors thereof in such a case. Examples of them include indoaniline compounds described in U.S. Patent No. 3,342,597, Schiff base compounds described in U.S. Patent No. 3,342,599 and Research Disclosure Nos. 14,850 and 15,159, aldol compunds described in Research Disclosure No. 13,924, metal salt complexes described in U.S. Patent No. 3,719,492 and urethane compounds described in J.P. KOKAI No. Sho 53-135628.

The color photosensitive material comprising a silver halide may contain a 1-phenyl-3-pyrazolidone compound, if necessary, for the purpose of accelerating the color development. Typical examples of the compounds are described in J.P. KOKAI Nos. Sho 56-64339, Sho 57-144547 and Sho 58-115438.

The temperature of the processing solutions used in the present invention are controlled at 10 to 50°C. The standard temperature is 33 to 68°C, but a higher temperature can be employed to accelerate the process and thereby to reduce the process time or, on the contrary, a lower temperature can also be employed to improve the quality of the image and stability of the processing liquid.

The silver halide photosensitive material is also applicable to heat-developing photosensitive materials described in U.S. Patent No. 4,500,626, J.P. KOKAI Nos. Sho 60-133449, Sho 59-218443 and Sho 61-238056 and European Patent No. 210, 660 A.

The present invention will be further illustrated by the following Examples and Comparative Examples.

Examples and Comparative Examples.

Preparation of photosensitive materials

Layers of the following compositions were formed on a primed cellulose triacetate film support to form a multi-layered color photosensitive material (Sample 101).

(Composition of photosensitive layers)

The amounts of the components are given in terms of $g/m^2$ and th ose of silver halides are given in terms of $g/m^2$ of silver. The amount of sensitizing dyes were given in terms of mol per mol of the silver halide contained in the same layer.

(Sample 101)

| The first layer (antihalation layer): | | |
|---|---|---|
| Black colloidal silver | silver | 0.18 |
| Gelatin | | 1.40 |

| The second layer (intermediate layer): | |
|---|---|
| 2,5-Di-t-pentadecylhydroquinone | 0.18 |
| EX-1 | 0.070 |
| EX-3 | 0.020 |
| EX-12 | $2.0 \times 10^{-3}$ |
| U-1 | 0.060 |
| U-2 | 0.080 |
| U-3 | 0.10 |
| HBS-1 | 0.10 |
| HBS-2 | 0.020 |
| Gelatin | 1.04 |

| The third layer (the first red-sensitive emulsion layer) | | |
|---|---|---|
| Emulsion A | silver | 0.25 |
| Emulsion B | silver | 0.25 |
| Sensitizing Dye I | | $6.9 \times 10^{-5}$ |
| Sensitizing Dye II | | $1.8 \times 10^{-5}$ |
| Sensitizing Dye III | | $3.1 \times 10^{-4}$ |
| EX-2 | | 0.34 |
| EX-8 | | 0.015 |
| U-1 | | 0.070 |
| U-2 | | 0.050 |
| U-3 | | 0.070 |
| HBS-1 | | 0.060 |
| Gelatin | | 0.87 |

| The fourth layer (the second red-sensitive emulsion layer) | | |
|---|---|---|
| Emulsion G | silver | 1.00 |
| Sensitizing Dye I | | $5.1 \times 10^{-5}$ |
| Sensitizing Dye II | | $1.4 \times 10^{-5}$ |
| Sensitizing Dye III | | $2.3 \times 10^{-4}$ |
| EX-2 | | 0.40 |
| EX-3 | | 0.050 |
| EX-8 | | 0.015 |
| U-1 | | 0.070 |
| U-2 | | 0.050 |
| U-3 | | 0.070 |
| Gelatin | | 1.30 |

| The fifth layer (the third red-sensitive emulsion layer) | |
|---|---|
| Emulsion D silver | 1.60 |
| Sensitizing Dye I | $5.4 \times 10^{-5}$ |
| Sensitizing Dye II | $1.4 \times 10^{-5}$ |
| Sensitizing Dye III | $2.4 \times 10^{-4}$ |
| EX-2 | 0.097 |
| EX-3 | 0.010 |
| EX-4 | 0.080 |
| HBS-1 | 0.22 |
| HBS-2 | 0.10 |
| Gelatin | 1.63 |

| The sixth layer (intermediate layer) | |
|---|---|
| EX-5 | 0.040 |
| HBS-1 | 0.020 |
| Gelatin | 0.80 |

| The seventh layer (the first green-sensitive emulsion layer) | |
|---|---|
| Emulsion A silver | 0.15 |
| Emulsion B silver | 0.15 |
| Sensitizing Dye IV | $3.0 \times 10^{-5}$ |
| Sensitizing Dye V | $1.0 \times 10^{-4}$ |
| Sensitizing Dye VI | $3.8 \times 10^{-4}$ |
| EX-1 | 0.021 |
| EX-6 | 0.26 |
| EX-7 | 0.030 |
| EX-10 | 0.020 |
| HBS-1 | 0.10 |
| HBS-3 | 0.010 |
| Gelatin | 0.63 |

| The eighth layer (the second green-sensitive emulsion layer) | |
|---|---|
| Emulsion C silver | 0.45 |
| Sensitizing Dye IV | $2.1 \times 10^{-5}$ |
| Sensitizing Dye V | $7.0 \times 10^{-5}$ |
| Sensitizing Dye VI | $2.6 \times 10^{-4}$ |
| EX-6 | 0.094 |
| EX-7 | 0.026 |
| EX-10 | 0.020 |
| HBS-1 | 0.16 |
| HBS-3 | $8.0 \times 10^{-3}$ |
| Gelatin | 0.50 |

| The ninth layer (the third green-sensitive emulsion layer) | |
|---|---|
| Emulsion E silver | 1.20 |

(continued)

| The ninth layer (the third green-sensitive emulsion layer) | |
|---|---|
| Sensitizing Dye IV | $3.5 \times 10^{-5}$ |
| Sensitizing Dye V | $8.0 \times 10^{-5}$ |
| Sensitizing Dye VI | $3.0 \times 10^{-4}$ |
| EX-1 | 0.025 |
| EX-11 | 0.10 |
| EX-13 | 0.015 |
| HBS-1 | 0.25 |
| HBS-2 | 0.10 |
| Gelatin | 1.54 |

| The tenth layer (yellow filter layer) | |
|---|---|
| Yellow colloidal silver silver | 0.050 |
| EX-5 | 0.080 |
| HBS-1 | 0.030 |
| Gelatin | 0.95 |

| The eleventh layer (the first blue-sensitive emulsion layer) | |
|---|---|
| Emulsion A silver | 0.080 |
| Emulsion B silver | 0.070 |
| Emulsion F silver | 0.070 |
| Sensitizing Dye VII | $3.5 \times 10^{-4}$ |
| EX-10 | 0.030 |
| EX-9 | 0.72 |
| HBS-1 | 0.28 |
| Gelatin | 1.10 |

| The twelfth layer (the second blue-sensitive emulsion layer) | |
|---|---|
| Emulsion G silver | 0.45 |
| Sensitizing Dye VII | $2.1 \times 10^{-4}$ |
| EX-9 | 0.15 |
| EX-8 | 0.010 |
| HBS-1 | 0.050 |
| Gelatin | 0.78 |

| The thirteenth layer (the third blue-sensitive emulsion layer) | |
|---|---|
| Emulsion H silver | 0.77 |
| Sensitizing Dye VII | $2.2 \times 10^{-4}$ |
| EX-9 | 0.20 |
| HBS-1 | 0.070 |
| gelatin | 0.69 |

| The fourteenth layer (the first protecting layer) | |
|---|---|
| Emulsion I silver | 0.20 |

(continued)

| The fourteenth layer (the first protecting layer) | |
|---|---|
| U-4 | 0.11 |
| U-5 | 0.17 |
| HBS-1 | $5.0 \times 10^{-2}$ |
| Gelatin | 1.00 |

| The fifteenth layer (the second protecting layer) | |
|---|---|
| H-1 | 0.40 |
| B-1 (diameter: 1.7 μ m) | $5.0 \times 10^{-2}$ |
| B-2 (diameter: 1.7 μ m) | 0.10 |
| B-3 | 0.10 |
| S-1 | 0.20 |
| Gelatin | 1.20 |

Further, W-1, W-2, W-3, B-4, B-5, F-1, F-2, F-3, F-4, F-5, F-6, F-7, F-8, F-9, F-10, F-11, F-12 and F-13 as well as an iron salt, lead salt, gold salt, platinum salt, iridium salt and rhodium salt were incorporated into all the layers in order to improve the storability, processability, pressure resistance, mildew resistance, antimicrobial properties, antistatic properties and spreadability.

| Emulsion | Average AgI content (%) | Average grain diameter (μ m) | Coefficient of variation of grain diameter (%) | Diameter/ thickness ratio | Silver amount ratio (AgI content %) |
|---|---|---|---|---|---|
| A | 4.0 | 0.45 | 27 | 1 | Core/shell = 1/3 (13/1), double structure grains |
| B | 8.9 | 0.70 | 14 | 1 | Core/shell = 3/7 (25/2), double structure grains |
| C | 10 | 0.75 | 30 | 2 | Core/shell = 1/2 (24/3), double structure grains |
| D | 16 | 1.05 | 35 | 2 | Core/shell = 4/6 (40/0), double structure grains |
| E | 10 | 1.05 | 35 | 3 | Core/shell = 1/2 (24/3), double structure grains |
| F | 4.0 | 0.25 | 28 | 1 | Core/shell = 1/3 (13/1), double structure grains |
| G | 14.0 | 0.75 | 25 | 2 | Core/shell = 1/2 (42/0), double structure grains |
| H | 14.5 | 1.30 | 25 | 3 | Core/shell = 37/63 (34/3) double structure grains |
| I | 1 | 0.07 | 15 | 1 | Homogeneous grains |

EX-1

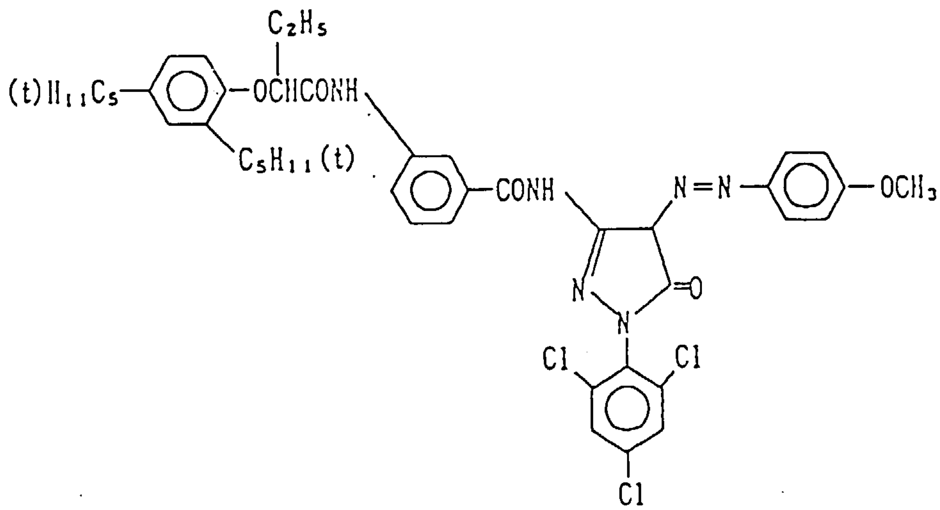

EX-2

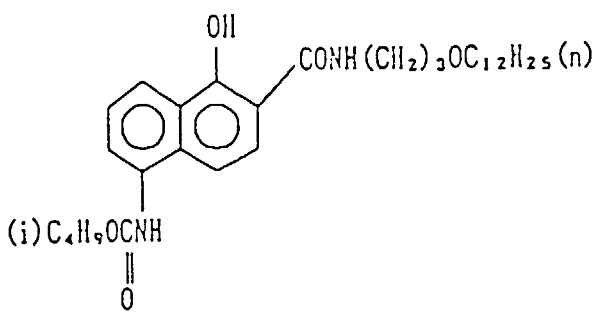

EX-3

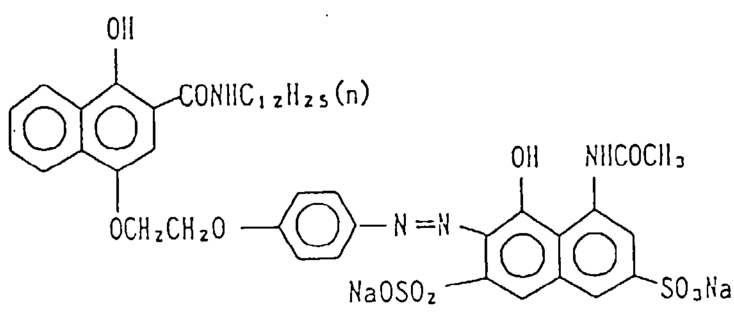

EX-4

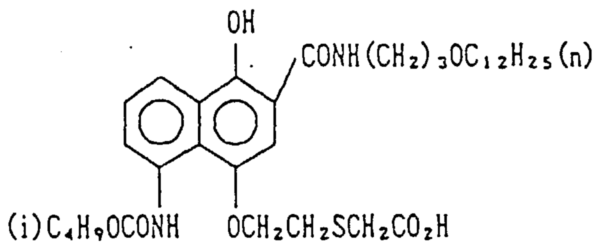

EX-5

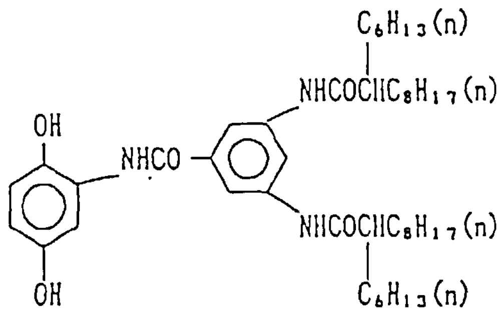

EX-6

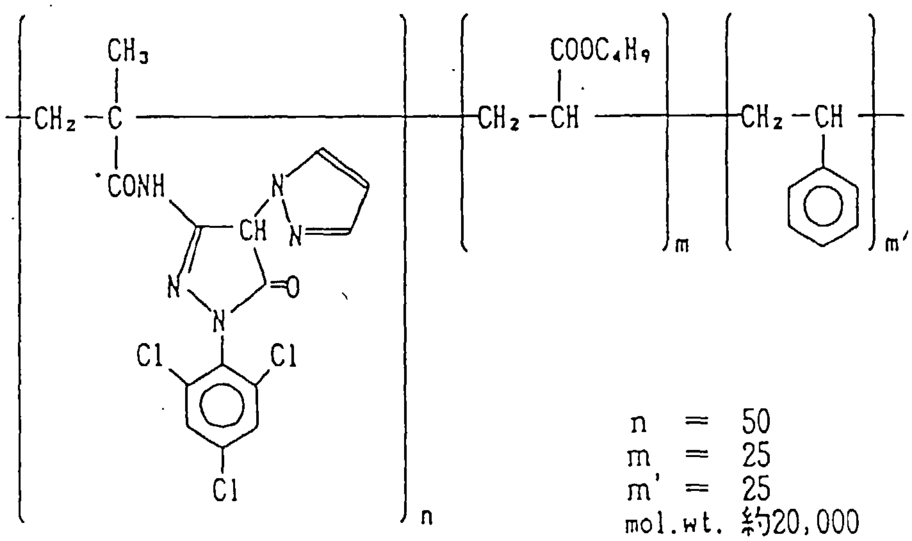

n = 50
m = 25
m' = 25
mol.wt. 約20,000

EX-7

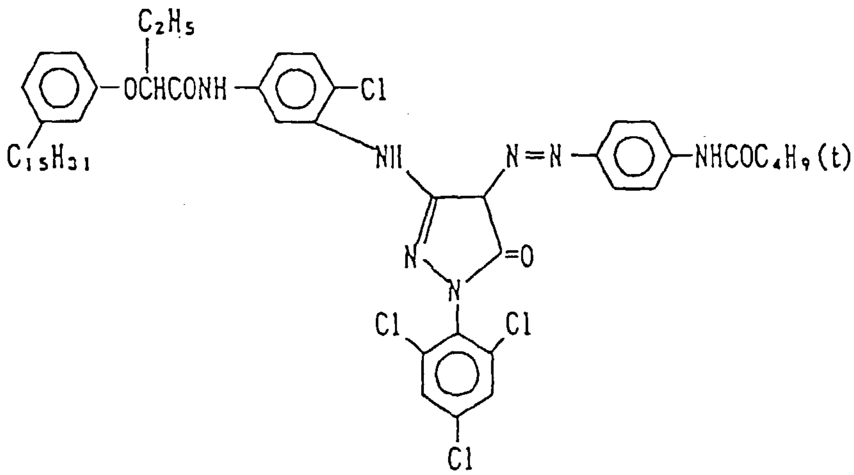

EX-8

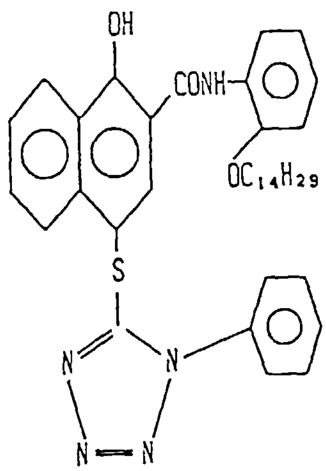

EX-9

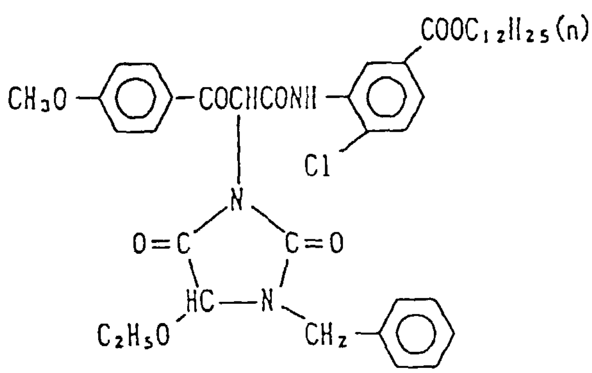

EX-10

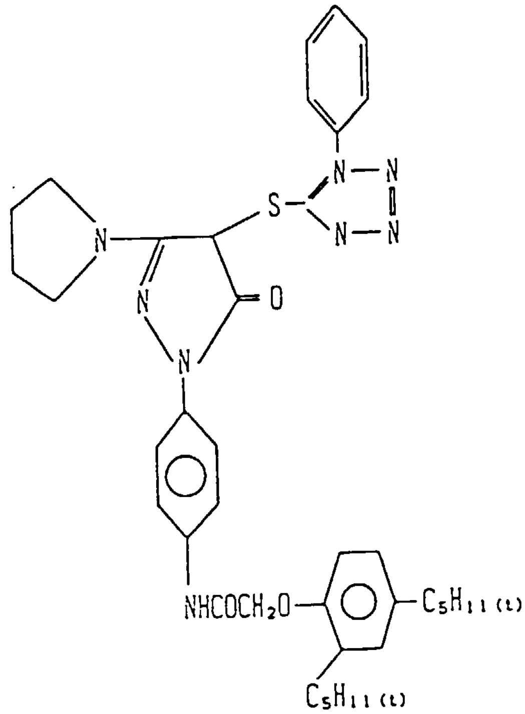

EX-11

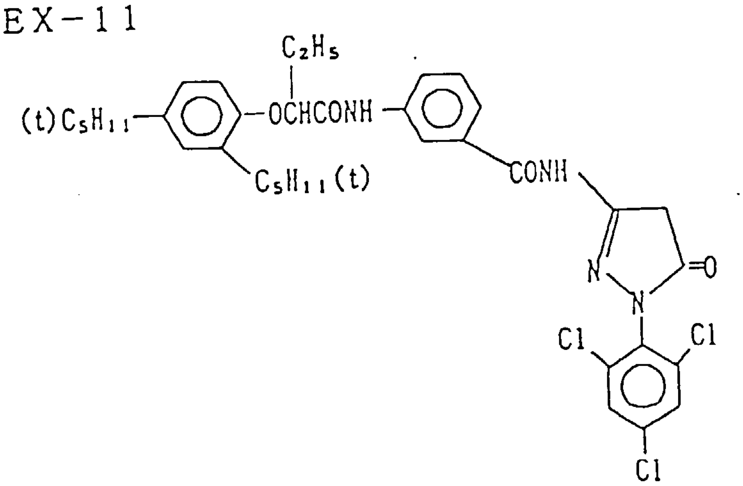

EX-12

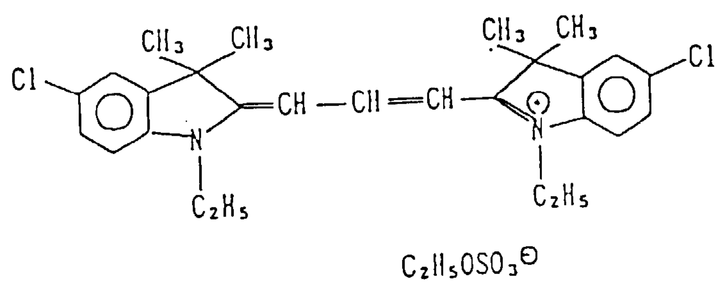

EX-13

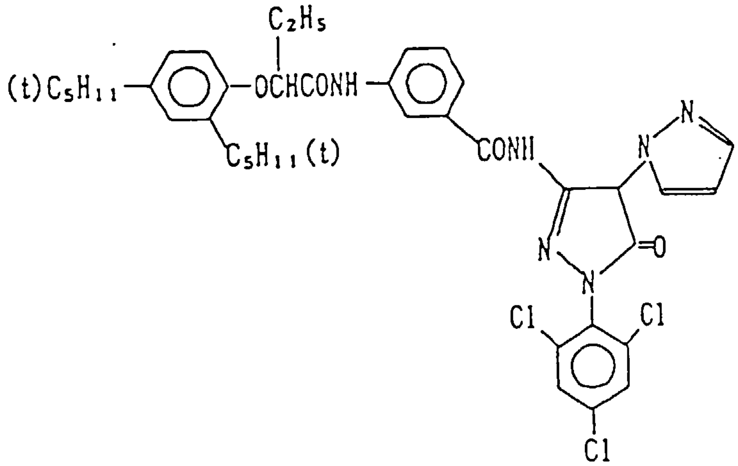

U-1

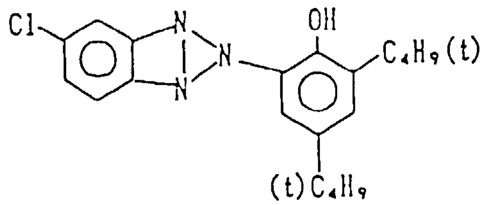

U-2

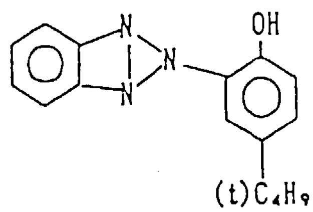

U-3

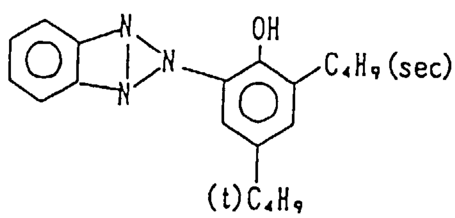

U-4

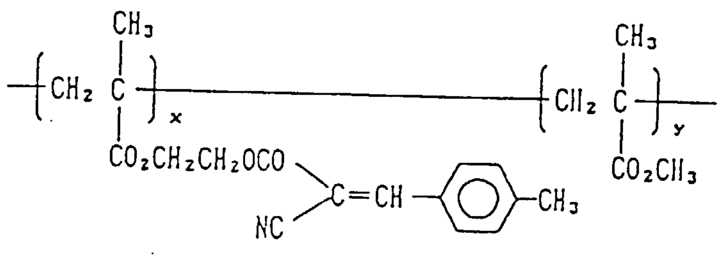

x : y =70 : 30 (wt%)

U-5

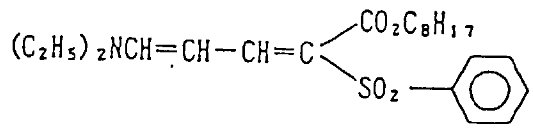

UBS-1 Tricresyl phosphate

UBS-2 Di-n-butyl phthalate

UBS-3

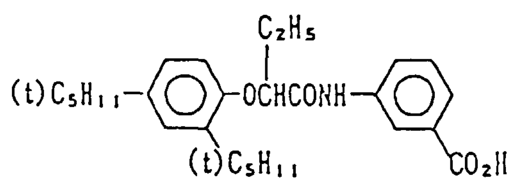

Sensitizing dye I

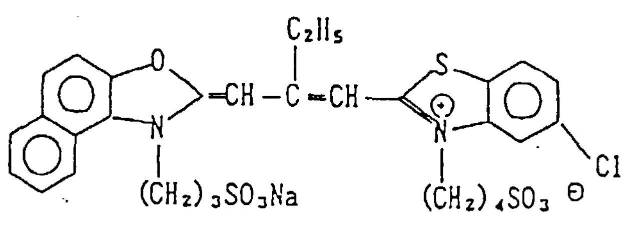

Sensitizing dye II

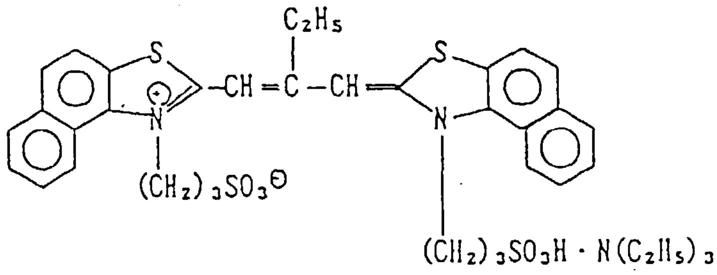

Sensitizing dye III

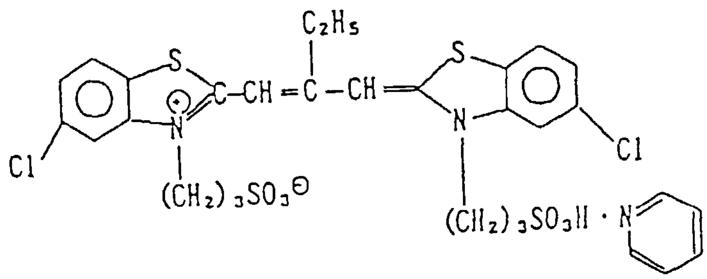

Sensitizing dye IV

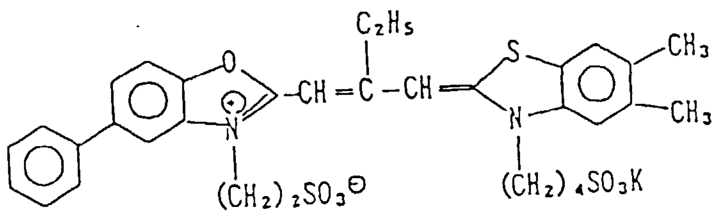

Sensitizing dye V

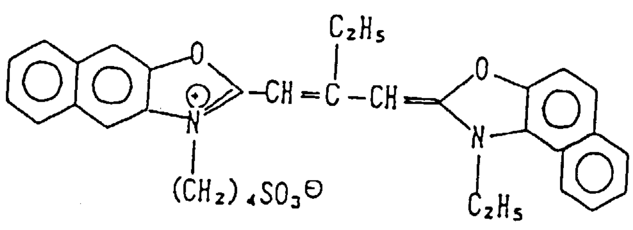

Sensitizing dye VI

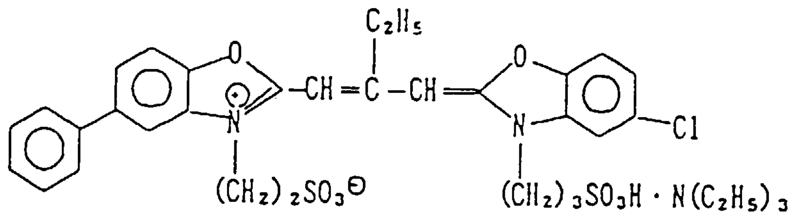

Sensitizing dye VII

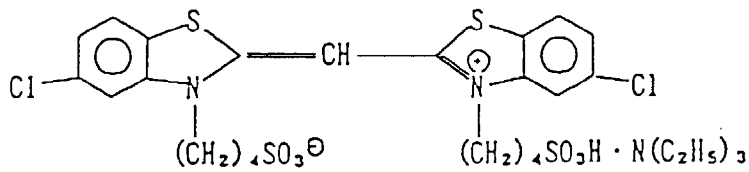

S-1

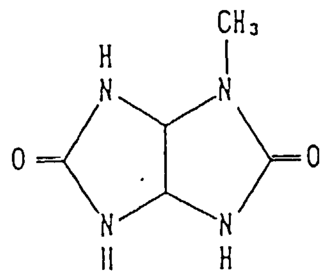

H-1

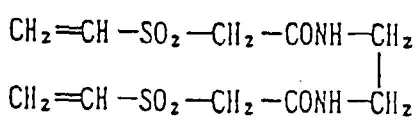

B-1

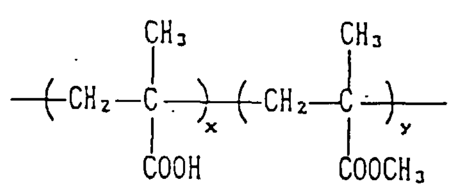

x/y=10/90

B−2

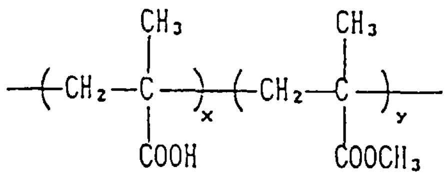

x/y=40/60

B−3

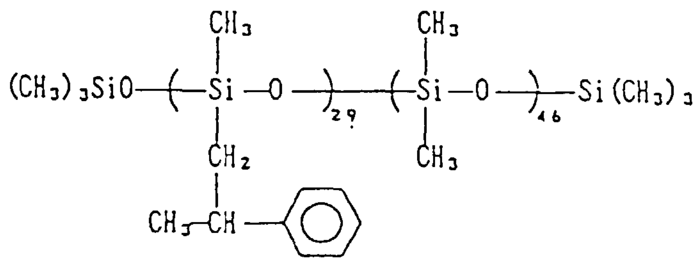

B−4

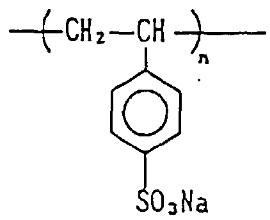

B−5

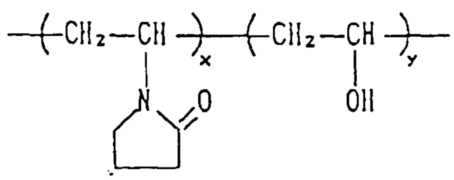

x/y=70/30

W−1

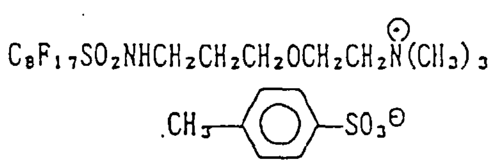

W－2

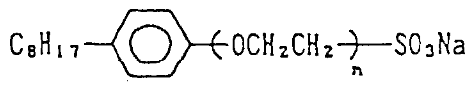

n＝2 ～ 4

W－3

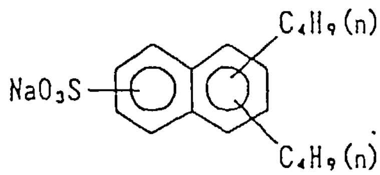

F－1

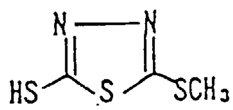

F－2

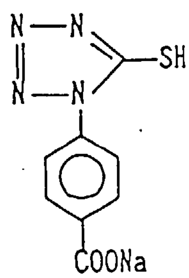

F－3

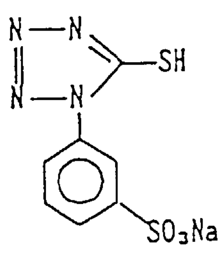

F－4

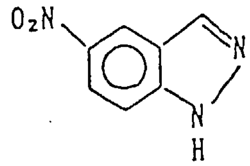

F－5

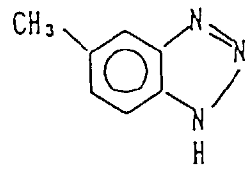

F－6

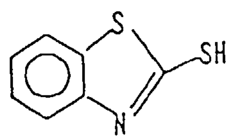

F－7

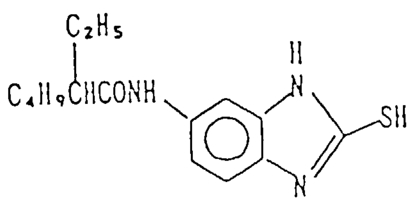

F－8

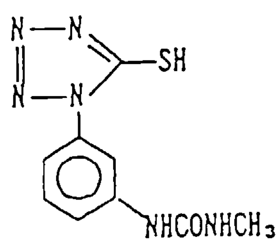

F－9

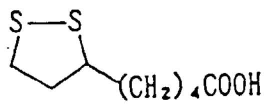

F－10

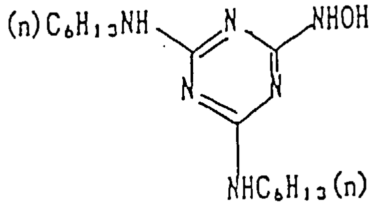

F－11

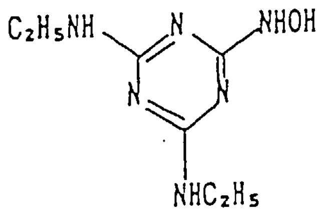

F－12

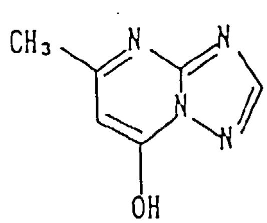

F－13

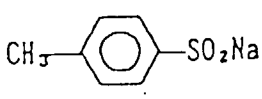

Then sample 102 was prepared in the same manner as that described above except that EX-8 in the third, fourth, eleventh and twelfth layers of the sample 101 was replaced with twice as much molar amount of compound T-120 and that EX-10 in the eighth and ninth layers was replaced with an equimolar amount of compound T-104.

Preparation of package of photographic film

The samples 101 and 102 were processed into 135-format films, which were each wound and placed in a patrone of 135-format to form photographic film packages (I) and (II).

The samples 101 and 102 were processed as shown in Fig. 3 and they were each wound and placed in a patrone of 135-format to form photographic film packages (III) and (IV).

Table 2

| Photographic film package | Sample | Perforation | Film width |
|---|---|---|---|
| (I) | 101 | Perforation of 135 format | 35 mm |
| (II) | 102 | Perforation of 135 format | 35 mm |
| (III) | 101 | 1 perforation per frame | 35 mm |
| (IV) | 102 | 1 perforation per frame | 35 mm |

Modification of camera

Fuji Zoom CARDIA 800 was modified as described below.

(1) A mechanism for feeding a film having 1 perforation per frame was provided.
(2) LED array was provided and a mechanism capable of putting informations of use of the strobo light,strobo guide No., shooting distance, LV value, focal distance of lens, and date and time of photographing was provided (see J.P. KOKAI No. 60-237436).

Photographing

Photographs of a human subject and Machbeth color rendition chart were taken with Fuji Zoom CARDIA 800 having the photograhic film package (I) or (II) or the modfied camera having the photographic film package (III) or (IV) under the conditions given in Table 3.

Table 3

| Scene | Light source | LV value | Strobo | Background | Remarks |
|---|---|---|---|---|---|
| (A) | Luminescent lamp | 9 | off | Gray wall | Focal distance: 40 mm<br><br>Shooting distance: 1.5 m |
| (B) | Strobo / Ambient light | 8 | on | ditto | |
| (C) | Daylight | 14 | off | Green bush | |

Development

The following process was conducted with an automatic developing machine until the amount of replenisher became 3-times as much as the capacity of the mother liquid tank.

| Process | | | | |
|---|---|---|---|---|
| Step | Time | Temp. | Amount of replenisher | Capacity of tank |
| Color development | 3 min 15 sec | 38 °C | 33 ml | 20 ℓ |
| Bleaching | 6 min 30 sec | 38 °C | 25 ml | 40 ℓ |
| Washing with water | 2 min 10 sec | 24 °C | 1200 ml | 20 ℓ |
| Fixing | 4 min 20 sec | 38 °C | 25 ml | 30 ℓ |
| Washing with water (1) | 1 min 05 sec | 24 °C | Counter current from (2) to (1) | 10 ℓ |
| Washing with water (2) | 1 min 00 sec | 24 °C | 1200 ml | 10 ℓ |
| Stabilization | 1 min 05 sec | 38 °C | 25 ml | 10 ℓ |
| Drying | 4 min 20 sec | 55 °C | | |

The amount of replenisher is given per 35 mm width and 1 m length.
The compositions of processing solutions were as follows:

| (Color developer) | | |
|---|---|---|
| | Mother liquor (g) | Replenisher (g) |
| Diethylenetriaminepentaacetic acid | 1.0 | 1.1 |
| 1-Hydroxyethylidene-1,1-diphosphonic acid | 3.0 | 3.2 |
| Sodium sulfite | 4.0 | 4.4 |
| Potassium carbonate | 30.0 | 37.0 |

(continued)

| (Color developer) | | |
|---|---|---|
| | Mother liquor (g) | Replenisher (g) |
| Potassium bromide | 1.4 | 0.7 |
| Potassium iodide | 1.5 mg | - |
| Hydroxylamine sulfate | 2.4 | 2.8 |
| 4-[N-Ethyl-N-β-hydroxyethylamino]-2-methylaniline sulfate | 4.5 | 5.5 |
| Water ad | 1.0 ℓ | 1.0 ℓ |
| pH | 10.05 | 10.10 |

| (Bleaching solution) | | |
|---|---|---|
| | Mother liquor (g) | Replenisher (g) |
| Sodium ferric ethylenediaminetetraacetate trihydrate | 100.0 | 120.0 |
| Disodium ethylenediaminetetraacetate | 10.0 | 10.0 |
| Ammonium bromide | 140.0 | 160.0 |
| Ammonium nitrate | 30.0 | 35.0 |
| Aqueous ammonia (27 %) | 6.5 ml | 4.0 ml |
| Water ad | 1.0 ℓ | 1.0 ℓ |
| pH | 6.0 | 5.7 |

| (Fixing solution) | | |
|---|---|---|
| | Mother liquor (g) | Replenisher (g) |
| Disodium ethylenediaminetetraacetate | 0.5 | 0.7 |
| Sodium sulfite | 7.0 | 8.0 |
| Sodium hydrogensulfite | 5.0 | 5.5 |
| Aqueous ammonium thiosulfate solution (70 %) | 170.0 ml | 200.0 ml |
| Water ad | 1.0 ℓ | 1.0 ℓ |
| pH | 6.7 | 6.6 |

| (Stabilizing solution) | | |
|---|---|---|
| | Mother liquor (g) | Replenisher (g) |
| Formalin (37 %) | 2.0 ml | 3.0 ml |
| Polyoxyethylene-p-monononylphenyl ether (average degree of polymerization: 10) | 0.3 | 0.45 |
| Disodium ethylenediaminetetraacetate | 0.05 | 0.08 |
| Water ad | 1.0 ℓ | 1.0 ℓ |
| pH | 5.0-8.0 | 5.0-8.0 |

Printing

The negatives of (III) and (IV) were printed on Fuji Color HG papers with a printer capable of determining the printing conditions by reading the photographic informations put in the film (see Japanese Patent Application No. Hei 1-293650). The negatives of (I) and (II) were printed also on Fuji Color HG papers with a printer capable of determining the printing conditions from LATD. The results evaluated by 10 monitors are shown in Table 4. The photographic film packages usable in the present invention gave rise to excellent results in every scene.

Table 4

| Film package | Scene A (Luminescent lamp) | Scene B (Strobo) | Scene C (Daylight) |
|---|---|---|---|
| I | ✕<br>The whole scene was green and unnatural. | ✕<br>The face was quite whitened and color reproducibility was very poor. | ✕ to Δ<br>The face was unnaturally colored with magenta and color reprocucibility was not good. |
| II | ✕ to Δ<br>The image was sharp but the whole was green and unnatural. | ✕ to Δ<br>The face was quite whitened and color reproducibility was not good. | ✕ to Δ<br>The face was unnaturally colored with magenta and color reprocucibiilty was not good. |
| III | Δ<br>The image was very slightly green and lacked in sharpness. | Δ<br>The whitening of face was reduced but color reproducibility was not good. | Δ<br>The tint of face was substantially natural but other color reproducibility was bad. |
| IV | ○<br>The image was very slightly green. The image was sharp and color reproducibility was tolerable. | ○<br>The whitening of face was not caused. Color reproducibility was tolerable. | ○<br>The tint of face and reproducibility of other colors were good. |
| Total image quality:<br>○ : good<br>Δ : tolerable<br>✕ to Δ : relatively bad<br>✕ : bad. | | | |

Example 2

Packages V and VI similar to the film packages II and IV prepared in Example 1 were prepared in the same manner as that in Example 1 except that sample 201 described in Example 2 in J.P. KOKAI No. Hei 2-90151 was used.

The photographing, processing, printing and evaluation were conducted in the same manner as that of Example 1 by using Fuji Zoom CARDIA 800 for the film package V and the modified camera for the film package VI. It was found that the samples usable in the methods of the present invention exhibited excellent results as in Example 1.

Example 3

Photosensitive material 9 in Example 3 in J.P. KOKAI No. Hei 2-93641 was subjected to the same evaluation as that of Example 2 to find that the samples usable in the methods of the present invention exhibited excellent results.

Example 4

Sample 401 which was a multi-layered color photosensitive material composed of layers of the following compositions formed on a primed cellulose triacetate film support was prepared. 0.1 g/m$^2$ of a magnetic substance ( $\gamma$ -$Fe_2O_3$ ) was applied to the back surface of the support as described above.

(Compositions of the photosensitive layers)

The amounts of the silver halides and colloidal silver are given in terms of silver (g/m$^2$), the amounts of the coupler, additives and glatin are given by g/m$^2$ and the amount of the sensitizing dye is given in terms of the molar number per mol of the silver halide contained in the same layer.

| The first layer (antihalation layer) | |
|---|---|
| Black colloidal silver | 0.20 |
| Gelatin | 1.30 |

(continued)

| The first layer (antihalation layer) | |
|---|---|
| UV-1 | 0.050 |
| UV-2 | 0.050 |
| UV-3 | 0.10 |
| UV-4 | 0.10 |
| Oil-1 | 0.10 |
| Oil-2 | 0.10 |

| The second layer (intermediate layer): | |
|---|---|
| Gelatin | 1.00 |

| The third layer (the first red-sensitive emulsion layer) | | |
|---|---|---|
| Silver bromoiodide emulsion A | silver | 1.00 |
| Gelatin | | 2.00 |
| S-1 | | $2.8 \times 10^{-4}$ |
| S-2 | | $2.0 \times 10^{-4}$ |
| S-3 | | $1.0 \times 10^{-5}$ |
| CP-1 | | 0.40 |
| Cp-2 | | 0.040 |
| Cp-3 | | 0.020 |
| Cp-4 | | $2.0 \times 10^{-3}$ |
| Oil-1 | | 0.15 |
| Oil-2 | | 0.15 |

| The fourth layer (the second red-sensitive emulsion layer) | | |
|---|---|---|
| Silver bromoiodide emulsion B | silver | 1.20 |
| Gelatin | | 0.80 |
| S-1 | | $2.0 \times 10^{-4}$ |
| S-2 | | $1.5 \times 10^{-4}$ |
| S-3 | | $8.0 \times 10^{-6}$ |
| Cp-1 | | 0.30 |
| Cp-2 | | 0.030 |
| Cp-3 | | 0.030 |
| Cp-4 | | $2.0 \times 10^{-3}$ |
| Oil-1 | | 0.12 |
| Oil-2 | | 0.12 |

| The fifth layer (the third red-sensitive emulsion layer) | | |
|---|---|---|
| Silver bromoiodide emulsion C | silver | 1.00 |
| Gelatin | | 1.50 |
| S-1 | | $1.5 \times 10^{-4}$ |
| S-2 | | $1.5 \times 10^{-4}$ |
| S-3 | | $8.0 \times 10^{-6}$ |
| CP-1 | | 0.10 |
| Cp-2 | | 0.10 |

(continued)

| The fifth layer (the third red-sensitive emulsion layer) | |
|---|---|
| Oil-1 | 0.05 |
| Oil-2 | 0.05 |

| The sixth layer (intermediate layer) | |
|---|---|
| Gelatin | 0.70 |
| Cpd-11 | 0.030 |
| Oil-1 | 0.050 |

| The seventh layer (the first green-sensitive emulsion layer) | | |
|---|---|---|
| Silver bromoiodide emulsion A | silver | 1.10 |
| Gelatin | | 2.50 |
| S-4 | | $2.4 \times 10^{-4}$ |
| S-5 | | $2.4 \times 10^{-4}$ |
| S-6 | | $1.2 \times 10^{-4}$ |
| S-7 | | $5.0 \times 10^{-5}$ |
| CP-5 | | 0.15 |
| Cp-6 | | 0.10 |
| Cp-7 | | 0.030 |
| Cp-8 | | 0.020 |
| Oil-1 | | 0.30 |
| Oil-2 | | 0.30 |

| The eighth layer (the second green-sensitive emulsion layer) | | |
|---|---|---|
| Silver bromoiodide emulsion B | silver | 1.10 |
| Gelatin | | 0.80 |
| S-4 | | $2.0 \times 10^{-4}$ |
| S-5 | | $1.9 \times 10^{-4}$ |
| S-6 | | $1.1 \times 10^{-4}$ |
| S-7 | | $4.0 \times 10^{-5}$ |
| CP-5 | | 0.10 |
| Cp-6 | | 0.070 |
| Cp-7 | | 0.030 |
| Cp-8 | | 0.025 |
| Oil-1 | | 0.20 |
| Oil-2 | | 0.20 |

| The ninth layer (the third green-sensitive emulsion layer) | | |
|---|---|---|
| Silver bromoiodide emulsion C | silver | 1.20 |
| Gelatin | | 1.80 |
| S-4 | | $1.3 \times 10^{-4}$ |
| S-5 | | $1.3 \times 10^{-4}$ |
| S-6 | | $9.0 \times 10^{-5}$ |
| S-7 | | $3.0 \times 10^{-5}$ |
| CP-6 | | 0.20 |

(continued)

| The ninth layer (the third green-sensitive emulsion layer) | |
|---|---|
| Cp-7 | 0.030 |
| Oil-1 | 0.20 |
| Oil-2 | 0.05 |

| The tenth layer (yellow filter layer) | |
|---|---|
| Yellow colloidal silver | 0.080 |
| Gelatin | 1.20 |
| Cpd-12 | 0.10 |
| Oil-1 | 0.30 |

| The eleventh layer (the first blue-sensitive emulsion layer) | | |
|---|---|---|
| Silver bromoiodide emulsion D | silver | 0.20 |
| Silver bromoiodide emulsion E | silver | 0.45 |
| Gelatin | | 1.75 |
| S-7 | | $1.0 \times 10^{-4}$ |
| S-8 | | $2.0 \times 10^{-4}$ |
| CP-9 | | 0.45 |
| Cp-10 | | 0.50 |
| Oil-1 | | 0.20 |
| Oil-2 | | 0.10 |

| The twelfth layer (the second blue-sensitive emulsion layer) | | |
|---|---|---|
| Silver bromoiodide emulsion F | silver | 1.10 |
| Gelatin | | 1.20 |
| S-7 | | $1.0 \times 10^{-4}$ |
| S-8 | | $1.0 \times 10^{-4}$ |
| Cp-9 | | 0.25 |
| Oil-1 | | 0.060 |
| Oil-2 | | 0.030 |

| The thirteenth layer (the first protective layer) | | |
|---|---|---|
| Fine grain silver bromoiodide emulsion (AgI 2.0 molar %, average grain diameter: 0.08 μ m) | silver | 0.40 |
| Gelatin | | 1.30 |
| UV-1 | | 0.050 |
| UV-2 | | 0.050 |
| UV-3 | | 0.10 |
| UV-4 | | 0.10 |
| UV-5 | | 0.030 |
| Oil-1 | | 0.10 |
| Oil-2 | | 0.10 |

| The fourteenth layer (the second protective layer) | |
|---|---|
| Gelatin | 0.50 |

(continued)

| The fourteenth layer (the second protective layer) | |
|---|---|
| Polymethyl methacrylate grains (diameter: 1.5 μ m) | 0.20 |
| B-11 | 0.030 |

Further Coating aids W-ll and W-12, dispersing aid W-13, hardeners H-ll and H-12, formalin scavengers Cpd-13 and Cpd-14, antiseptics Cpd-15 and Cpd-16, stabilizer Cpd-17 and antifoggants Cpd-18 and Cpd-19 were incorporated into all the layers.

UV－1

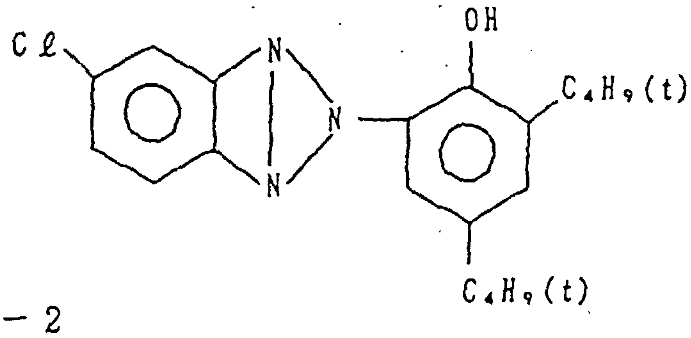

UV－2

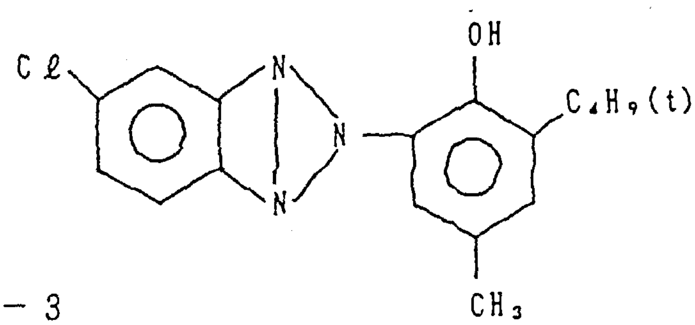

UV－3

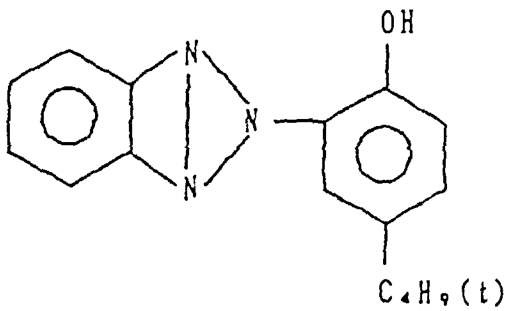

UV－4

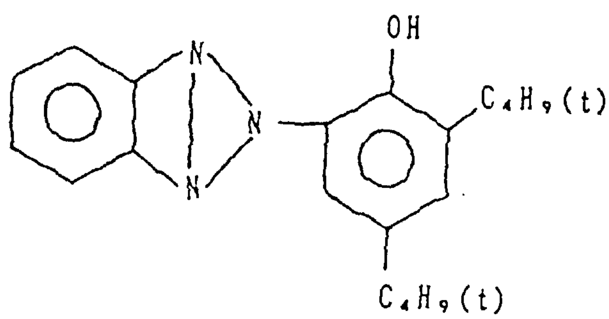

UV－5

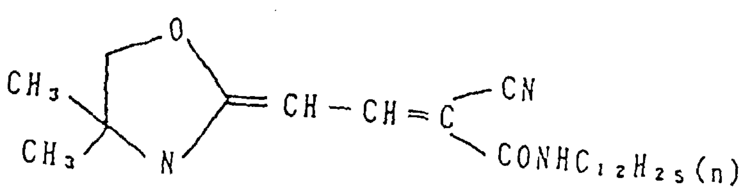

Oil-1 Tricresyl phosphate

Oil-2 Dibutyl phthalate

Cp－1

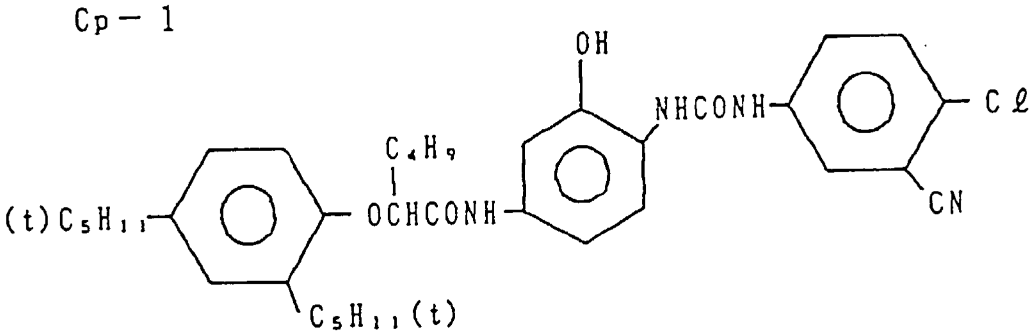

Cp－2

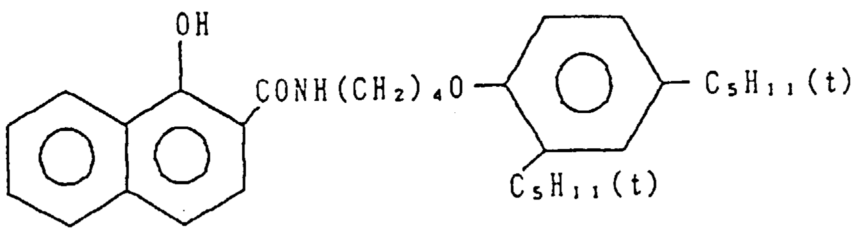

Cp－3

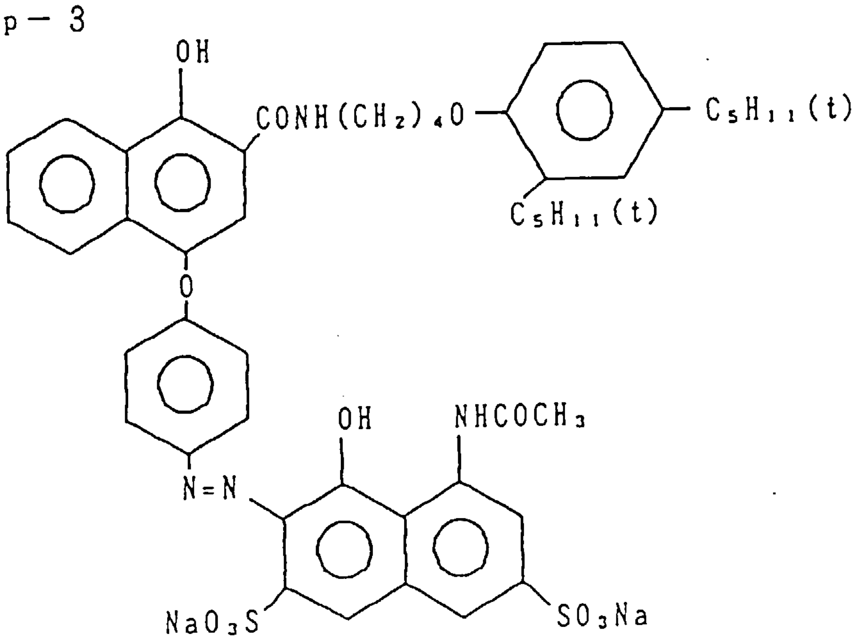

Cp－ 4

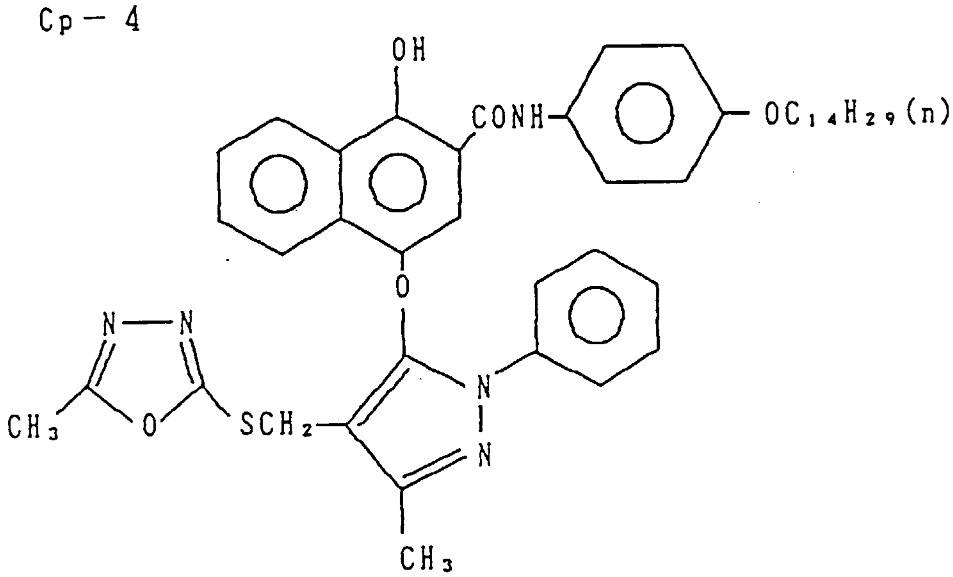

Cp－ 5

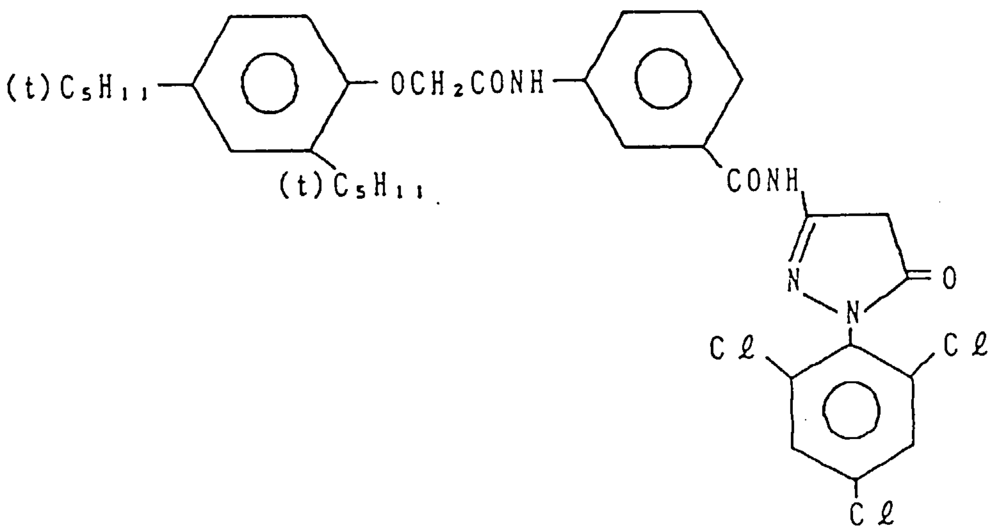

Cp－ 6

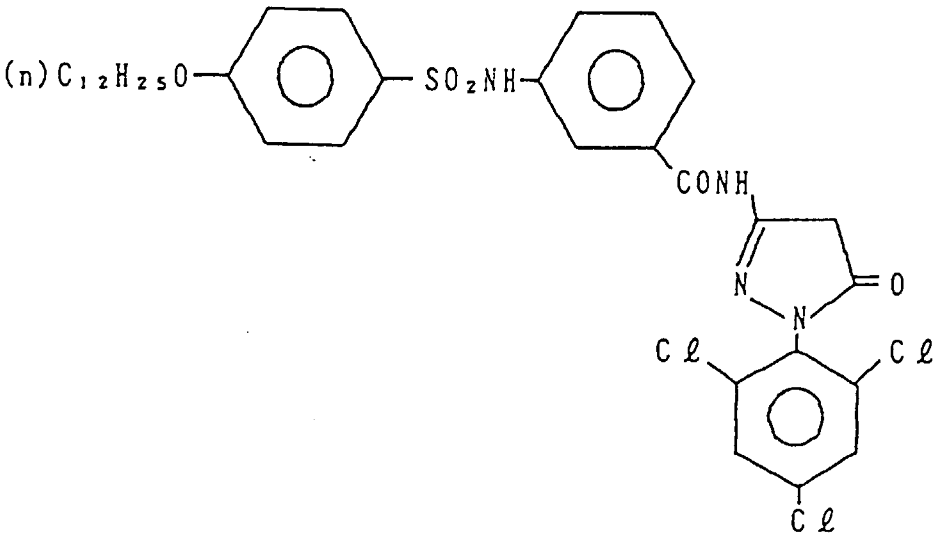

Cp－ 7

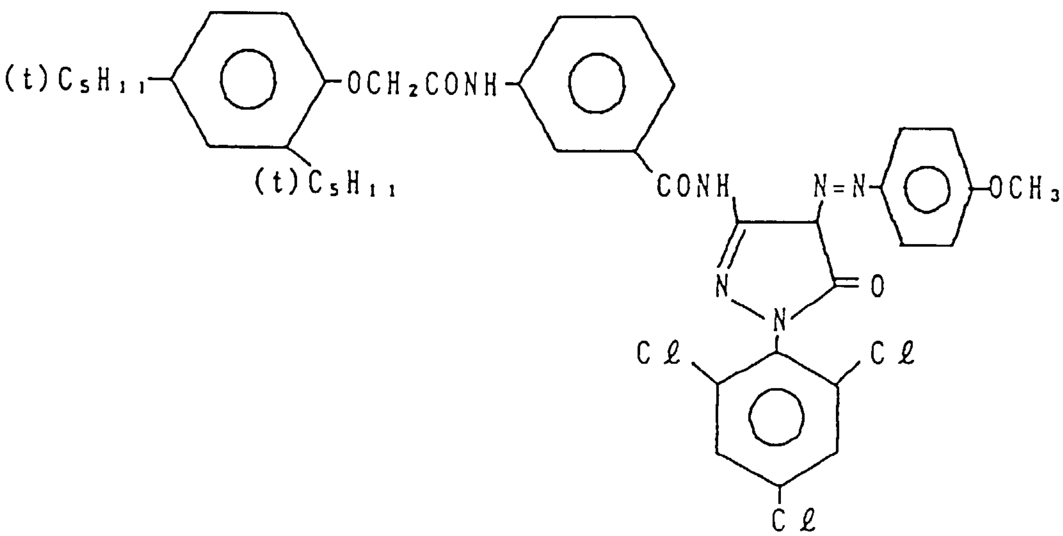

Cp－ 8

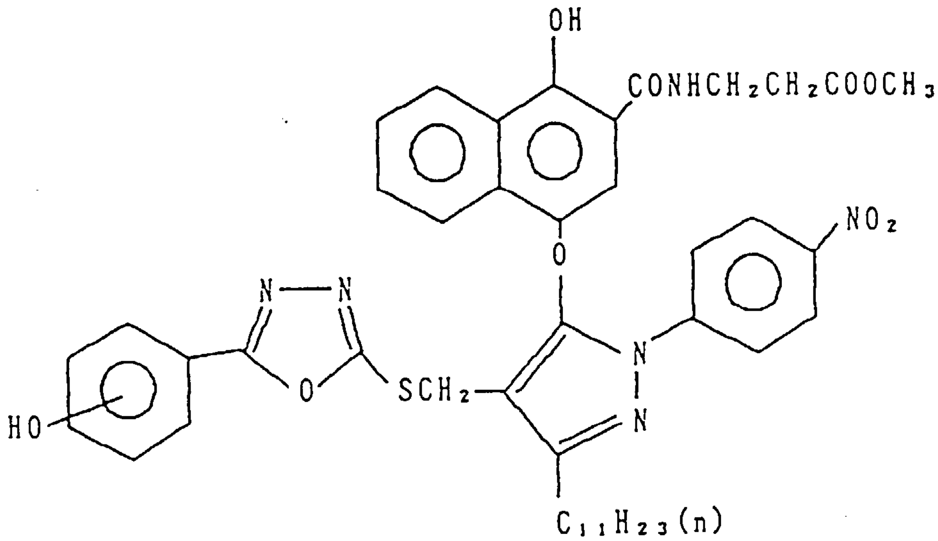

Cp－ 9

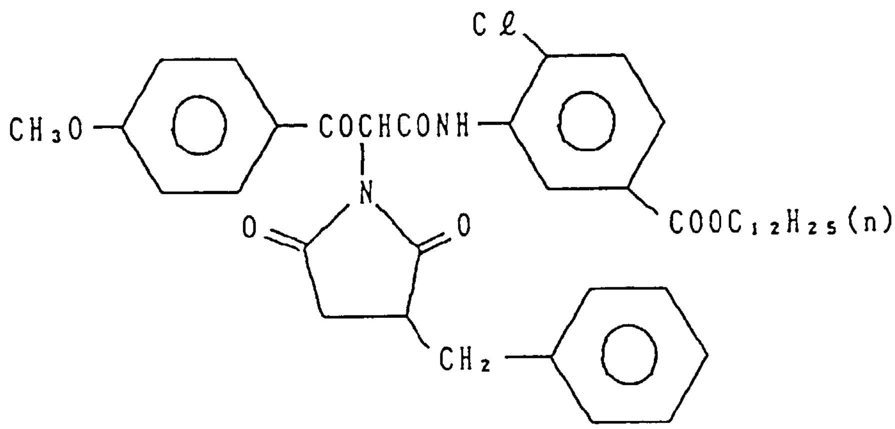

Cp－ 1 0

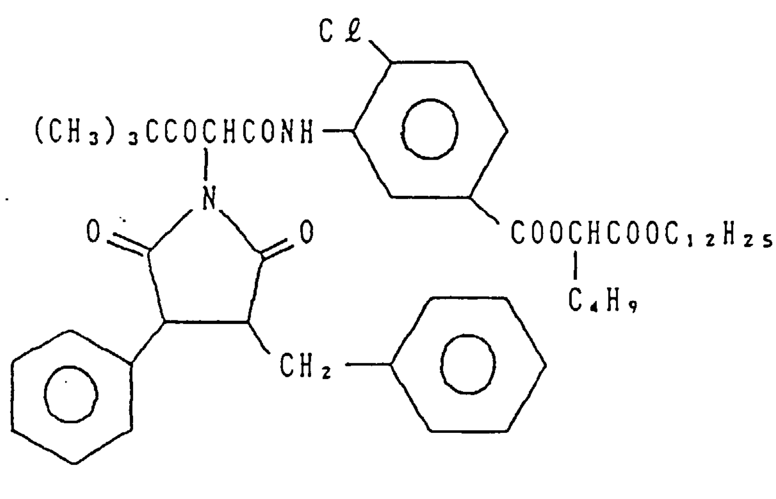

Cpd-11

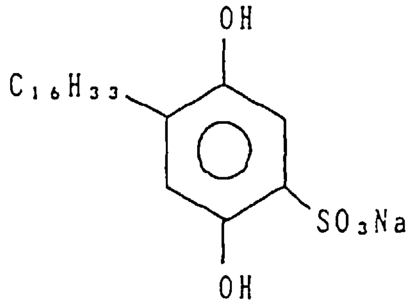

Cpd-12

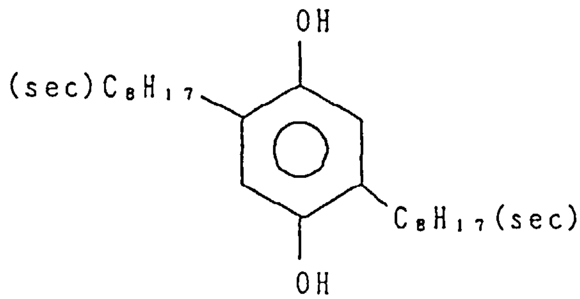

Cpd-13

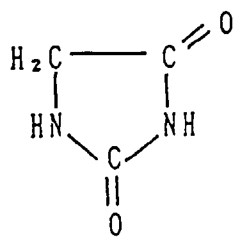

Cpd-14

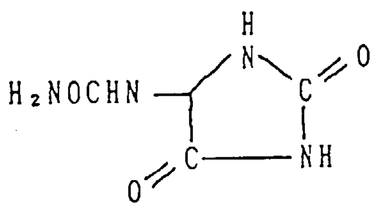

W-11

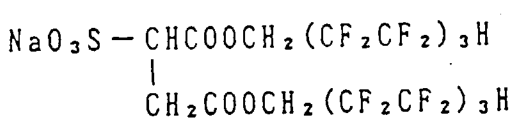

W-12

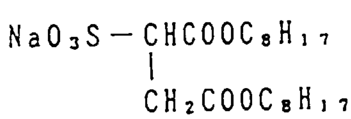

W-13

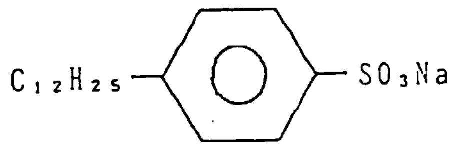

B-11

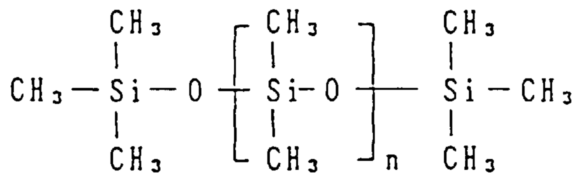

H-11

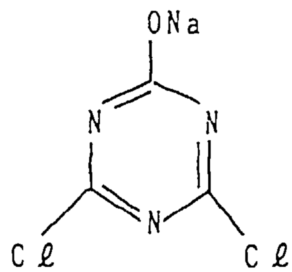

H-12 $\{(CH_2=CHSO_2CH_2)_2CCH_2SO_2(CH_2)_2\}_2N(CH_2)_2SO_3K$

Cpd-15

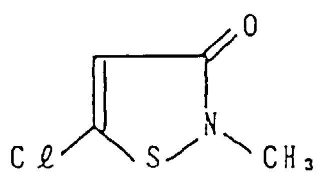

Cpd-16

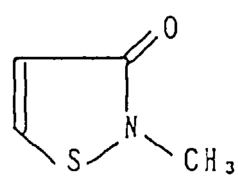

Cpd－17

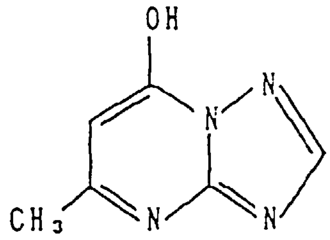

Cpd－18

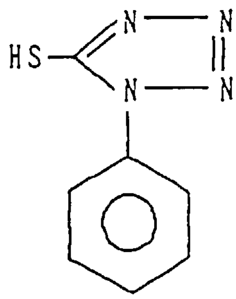

Cpd－19

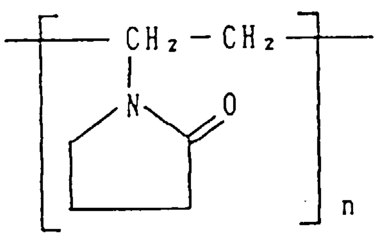

S－1

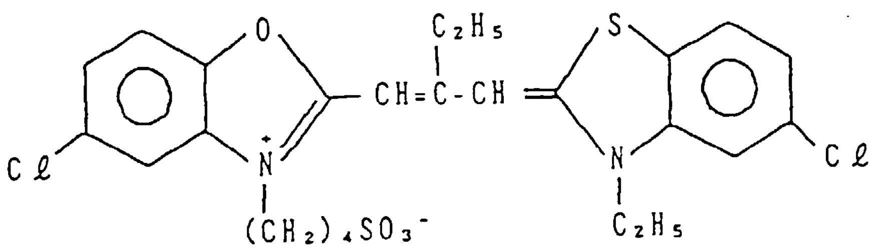

S − 2

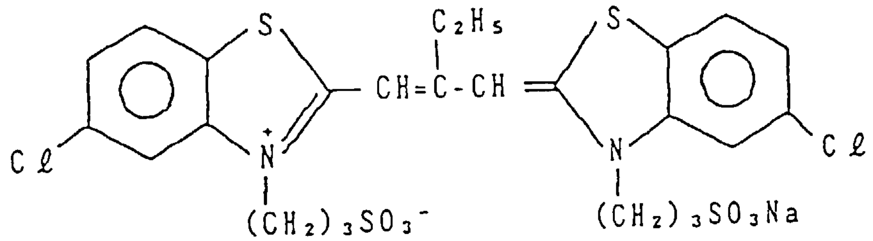

S − 3

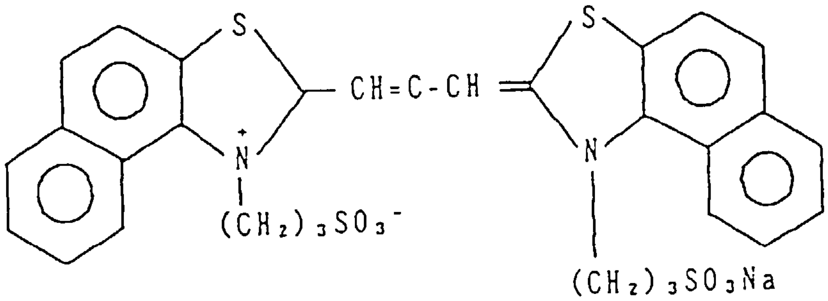

S − 4

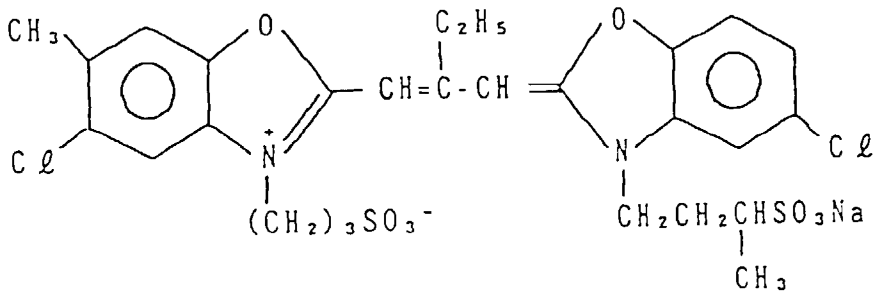

S − 5

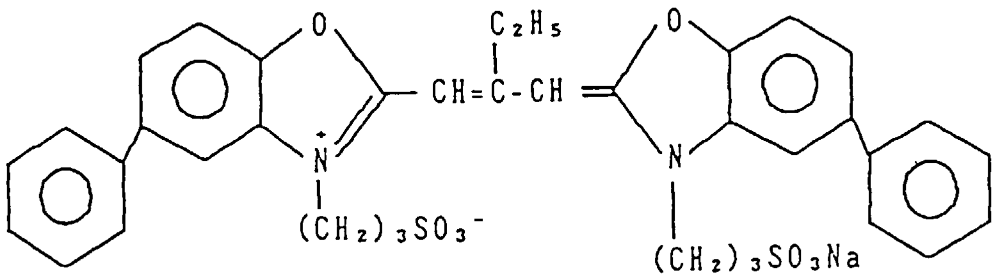

S − 6

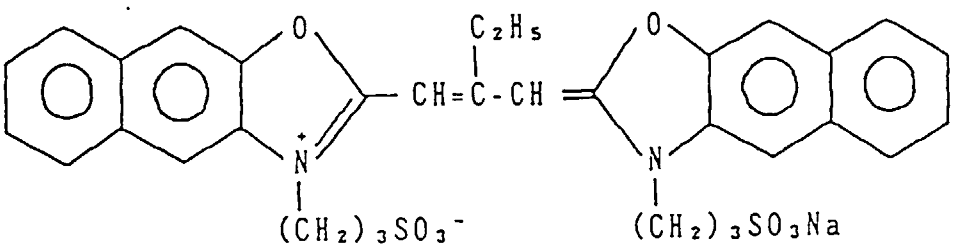

S − 7

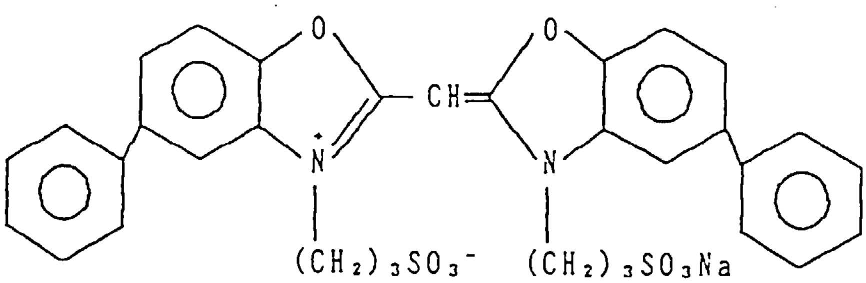

S - 8

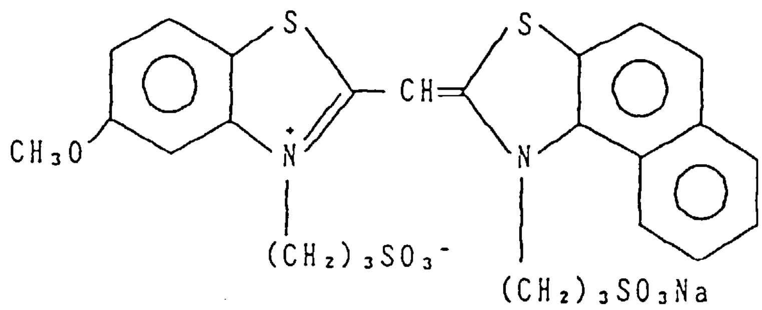

Samples 402 to 408 were prepared in the same manner as the preparation of Sample 401 except that the emulsions in the fifth, ninth and twelfth layers were replaced with the same amount (in terms of silver) of an emulsion given in Table 6.

The sensitivities of Samples 401 to 408 were determined by a method according to ISO. The development conditions in this step were processing conditions A.

Samples 401 to 408 were each processed to form packages as shown in Fig. 4, which were subjected to the photography in the light of a given artificial light source set at a dark cloudy lightness. The exposure and F were 1/125 sec and 5.6, respectively. A picture of a human subject was taken at a distance of 3 m, the focal distance being set at 40 mm. The information-recording parts were provided on both sides of the photosensitive material (16 %) (Comparative Examples). The trimming information was put in one of the information recording parts by means of bar codes.

After taking pictures, the sample was developed under processing conditions A and the bar codes were optically read to form prints of an ordinary L-size (9 cm x 13 cm). Only a picture of the pseudo telephoto zoom was trimmed so that the available negative area would be 1/4 and printed to form the picture of L-size.

The quality, of the obtained prints was classified into 5 groups by five professional panel members for the evaluation,of the quality of photographs based on the following criteria:

5: quite satisfactory
4: relatively satisfactory
3: tolerable with difficulty
2: unsatisfactory
1: quite unsatisfactory

The average points given by the five panel members and the sensitivity of each sample are given in Table 7.

Table 5 Characteristics of grains in emulsion

| Emulsion | Average grain diameter (μm) | Relative standard deviation of grain diameter (%) | Average silver iodide content (mol %) | Grain structure | Inner core: Silver iodide content (mol %) | Inner core: Volume fraction (%) |
|---|---|---|---|---|---|---|
| A | 0.4 | 22 | 3 | Cubic grain of homogeneous structure | - | - |
| B | 0.8 | 16 | 5 | Cubic grain of homogeneous structure | - | - |
| C | 1.2 | 14 | 5 | Octahedral grain of homogeneous structure | - | - |
| D | 0.4 | 25 | 4 | Tabular grain of homogeneous structure having aspect ratio of 4 | - | - |
| E | 0.8 | 23 | 5 | Tabular grain of homogeneous structure having aspect ratio of 7 | - | - |
| F | 1.4 | 13 | 7 | Octahedral grain of homogeneous structure | - | - |
| G | 1.15 | 14 | 5 | Octahedral grain of double structure | 7 | 50 |
| H | 1.35 | 13 | 6 | ditto | 8 | 50 |
| I | 1.1 | 14 | 6 | ditto | 10 | 50 |
| J | 1.25 | 13 | 8 | ditto | 14 | 50 |
| K | 1.05 | 14 | 10 | ditto | 18 | 50 |
| L | 1.2 | 13 | 15 | ditto | 30 | 50 |
| M | 1.15 | 14 | 5.3 | Octahedral grain of multi-layer structure | 7 | 30 |
| N | 1.35 | 13 | 6.3 | ditto | 8 | 30 |
| O | 1.1 | 14 | 7.9 | ditto | 12 | 40 |
| P | 1.25 | 13 | 8.8 | ditto | 16 | 40 |
| Q | 1.05 | 14 | 10.3 | ditto | 20 | 30 |
| R | 1.2 | 13 | 18.6 | ditto | 38 | 30 |
| S | 1.2 | 13 | 14.6 | ditto | 5 | 30 |

Table 5 (continue)

| Emulsion | The first shell | | The secound shell | | The third shell | |
|---|---|---|---|---|---|---|
| | Silver iodide content (mol %) | Volume fraction (%) | Silver iodide content (mol %) | Volume fraction (%) | Silver iodide content (mol %) | Volume fraction (%) |
| A | – | – | – | – | – | – |
| B | – | – | – | – | – | – |
| C | – | – | – | – | – | – |
| D | – | – | – | – | – | – |
| E | – | – | – | – | – | – |
| F | – | – | – | – | – | – |
| G | 3 | 50 | – | – | – | – |
| H | 4 | 50 | – | – | – | – |
| I | 2 | 50 | – | – | – | – |
| J | 2 | 50 | – | – | – | – |
| K | 2 | 50 | – | – | – | – |
| L | 0 | 50 | – | – | – | – |
| M | 5 | 40 | 4 | 30 | – | – |
| N | 6 | 40 | 5 | 30 | – | – |
| O | 6 | 30 | 1 | 30 | – | – |
| P | 8 | 30 | 0 | 30 | – | – |
| Q | 10 | 40 | 1 | 30 | – | – |
| R | 18 | 40 | 0 | 30 | – | – |
| S | 38 | 25 | 18 | 20 | 0 | 25 |

The shells are the first shell, the second shell---toward the surface. " —" means that there is no corresponding structure.

Table 6

| Emulsion of the fifth, ninth and twelfth layers | | | | | | | | |
|---|---|---|---|---|---|---|---|---|
| Sample No. | 401 | 402 | 403 | 404 | 405 | 406 | 407 | 408 |
| 5th layer | C | G | I | K | M | O | Q | Q |
| 9th layer | C | G | I | K | M | O | Q | Q |
| 12th layer | F | H | J | L | N | P | R | S |

Table 7

| Sensitivity and results of evaluation of quality of Samples 401 to 408 | | | | | | | | |
|---|---|---|---|---|---|---|---|---|
| Sample No. | 401 | 402 | 403 | 404 | 405 | 406 | 407 | 408 |
| Sensitivity | 415 | 418 | 420 | 420 | 417 | 423 | 425 | 421 |
| Results of quality evaluation (ordinary print) | 3.2 | 4.2 | 4.6 | 4.6 | 4.0 | 4.8 | 4.8 | 4.8 |
| Results of quality evaluation (pseudo telephoto zoom) (x2) | 1.8 | 3.0 | 3.6 | 3.8 | 2.8 | 4.0 | 4.2 | 4.0 |

It is apparent from Table 7 that the emulsion of the grains having the structure usable in the present invention is capable of exhibiting a sensitivity equal to that of an emulsion of grains having a uniform structure, though the former is smaller than the latter. As a result, the samples usable in the methods of the present invention have a high quality. Particularly, Samples 403, 404, 406, 407 and 408 had a sufficiently satisfactory quality even when zooming on the subject (x2) was made by the pseudo telephoto zoom technique.

The effects of the present invention are also exhibited when processing process B is employed.

| Process (A) | | |
|---|---|---|
| Step | Time | Temp. |
| Color development | 3 min 15 sec | 38 °C |
| Bleaching | 6 min 30 sec | 38 ° C |
| Washing with water | 2 min 10 sec | 24 ° C |
| Fixing | 4 min 20 sec | 38 ° C |
| Washing with water (1) | 1 min 05 sec | 24 ° C |
| Washing with water (2) | 1 min 00 sec | 24 ° C |
| Stabilization | 1 min 05 sec | 38 ° C |
| Drying | 4 min 20 sec | 55 ° C |

The compositions of processing solutions were as follows:

| (Color developer) | |
|---|---|
| | (unit: g) |
| Diethylenetriaminepentaacetic acid | 1.0 |
| 1-Hydroxyethylidene-1,1-diphosphonic acid | 3.0 |
| Sodium sulfite | 4.0 |
| Potassium carbonate | 30.0 |
| Potassium bromide | 1.4 |
| Potassium iodide | 1.5 mg |
| Hydroxylamine sulfate | 2.4 |
| 4-[N-Ethyl-N-β-hydroxyethylamino]-2-methylaniline sulfate | 4.5 |
| Water ad | 1.0 ℓ |
| pH | 10.05 |

| (Bleaching solution) | |
|---|---|
| | (unit: g) |
| Sodium ferric ethylenediaminetetraacetate trihydrate | 100.0 |
| Disodium ethylenediaminetetraacetate | 10.0 |
| Ammonium bromide | 140.0 |
| Ammonium nitrate | 30.0 |
| Aqueous ammonia (27 %) | 6.5 ml |
| Water ad | 1.0 ℓ |
| pH | 6.0 |

| (Fixing solution) | |
|---|---|
| | (unit: g) |
| Disodium ethylenediaminetetraacetate | 0.5 |
| Sodium sulfite | 7.0 |
| Sodium hydrogensulfite | 5.0 |
| Aqueous ammonium thiosulfate solution (70 %) | 170.0 ml |
| Water ad | 1.0 ℓ |
| pH | 6.7 |

| (Stabilizing solution) | |
|---|---|
| | (unit: g) |
| Formalin (37 %) | 2.0 ml |
| Polyoxyethylene-p-monononylphenyl ether (average degree of polymerization: 10) | 0.3 |
| Disodium ethylenediaminetetraacetate | 0.05 |
| Water ad | 1.0 ℓ |
| pH | 5.0-8.0 |

| Process (B) | | | | |
|---|---|---|---|---|
| Step | Time | Temp. | Amount of replenisher | Capacity of tank |
| Color development | 3 min 15 sec | 38.8°C | 25 ml | 10 ℓ |
| Bleaching | 45 sec | 38 °C | 5 ml | 4 ℓ |
| Bleach-fixing (1) | 45 sec | 38 °C | - | 4 ℓ |
| Bleach-fixing (2) | 45 sec | 38 °C | 30 ml | 4 ℓ |
| Washing with water (1) | 20 sec | 38 °C | - | 2 ℓ |
| Washing with water (2) | 20 sec | 38 °C | 30 ml | 2 ℓ |
| Stabilization | 20 sec | 38 °C | 20 ml | 2 ℓ |
| Drying | 1 min | 55 °C | | |

The amount of replenisher is given per 35 mm width and 1 m length.

In the bleach-fixing step and washing step with water, the solution or water flowed countercurrently from (2) to (1). The overflow of the bleaching solution was wholly introduced into the bleach-fixing step (2).

The amount of the bleach-fixing solution entrained into the step of washing with water in the above-described process was 2 ml per meter of the photosensitive material having a width of 35 mm.

| (Color developer) | | |
|---|---|---|
| | Mother liquor (g) | Replenisher (g) |
| Diethylenetriaminepentaacetic acid | 5.0 | 6.0 |
| Sodium sulfite | 4.0 | 5.0 |
| Potassium carbonate | 30.0 | 37.0 |
| Potassium bromide | 1.3 | 0.5 |
| Potassium iodide | 1.2 mg | - |
| Hydroxylamine sulfate | 2.0 | 3.6 |
| 4-[N-Ethyl-N-β-hydroxyethylamino]-2-methylaniline sulfate | 4.7 | 6.2 |
| Water ad | 1.0 ℓ | 1.0 ℓ |
| pH | 10.00 | 10.15 |

| (Bleaching solution) | | |
|---|---|---|
| | Mother liquor (g) | Replenisher (g) |
| Ferric ammonium 1,3-diaminopropane tetraacetate monohydrate | 144.0 | 206.0 |
| 1,3-Diaminopropane tetraacetate | 2.8 | 4.0 |
| Ammonium bromide | 84.0 | 120.0 |
| Ammonium nitrate | 17.5 | 25.0 |
| Aqueous ammonia (27 %) | 10.0 | 1.8 |
| Acetic acid (98 %) | 51.1 | 73.0 |
| Water ad | 1.0 ℓ | 1.0 ℓ |
| pH | 4.3 | 3.4 |

| (Bleach-fixing solution) | | |
|---|---|---|
| | Mother liquor (g) | Replenisher (g) |
| Ferric ammonium ethylenediamine tetraacetate dihydrate | 50.0 | - |
| Disodium ethylenediamine tetraacetate | 5.0 | 25.0 |
| Ammonium sulfite | 12.0 | 20.0 |
| Aqueous ammonium thiosulfate solution (700 g/ℓ ) | 290.0 ml | 320.0 ml |
| Aqueous ammonia (27 %) | 6.0 ml | 15.0 ml |
| Water ad | 1.0 ℓ | 1.0 ℓ |
| pH | 6.8 | 8.0 |

(Water for washing) (both mother liquor and reprenisher)

City water was passed through a column of mixed bed type containing an H-type strong acidic cation exchange resin (Amberlite IR-120 B mfd. by Rohm & Haas Co.) and an OH-type strong basic anion exchange resin (Amberlite IRA-400 mfd. by Rohm & Haas Co.) to reduce calcium and magnesium concentrations to not higher than 3 mg/ ℓ and then 20 mg/ℓ of sodium dichloroisocyanurate and 150 mg/ℓ of sodium sulfate were added thereto. pH of water thus processed was in the range of 6.5 to 7.5.

| (Stabilizing solution) (both mother liquor and replenisher) | |
|---|---|
| | (unit: g) |
| Formalin (37 %) | 1.2 ml |
| Surfactant [$C_{10}H_{21}$-O-(-$CH_2CH_2O$-)$_{10}$-H] | 0.4 |
| Ethylene glycol | 1.0 |

(continued)

| (Stabilizing solution) (both mother liquor and replenisher) | |
|---|---|
| | (unit: g) |
| Water ad | 1.0 ℓ |
| pH | 5.0-7.0 |

## Claims

**1.** A method of forming an image on a color photographic film product, which product comprises:

a cartridge,
a spool carried in the cartridge for rotation about a longitudinal axis of the spool, and
an elongate silver halide photosensitive film for color photography having a photosensitive side,
the film being wound into a roll around the spool and comprising at least one red-sensitive silver halide emulsion layer, at least one green-sensitive silver halide emulsion layer and at least one blue-sensitive silver halide emulsion layer formed on a support, and further containing
a compound capable of reacting with an oxidate of a developing agent to release a diffusing development inhibitor or its precursor, and/or
a compound capable of reacting with an oxidate of a developing agent to form a cleaved compound capable of reacting with another molecule of the oxidate of the color developing agent to cleave a development inhibitor;

the method comprising:
exposing an image on the photosensitive side of the film, characterized by:

recording information on the photosensitive side of the film in an information-recording area comprising an optical memory means located between a long edge of the film and the image area of the film, wherein said image is exposed on a portion of the photosensitive side of the film having four or less perforations or notches for deciding the position of the image.

**2.** A method according to Claim 1, in which the film product further comprises an information-recording part consisting of an electric memory means and/or a magnetic memory means.

**3.** A method according to Claim 1, wherein the area of one image-exposing area of the photographic film is 200 $mm^2$ to 1200 $mm^2$ and each information-recording area is 15 to 60% of this area.

**4.** A method according to Claim 1 wherein the compound capable of reacting with an oxidate of a developing agent is represented by the following formulae [I] through [III]:

General formula [I] $A\text{-}Z_1$

General formula (II) $B\text{-}Z_1$

General formula [III] $A\text{(or B)-P-}Z_2$

wherein A represents a coupling component capable of reacting with an oxidate of a color developing agent to release a $Z_1$ group (formula I) or a P-$Z_2$ group (formula III), B represents a redox part capable of participating in an oxidationion reaction with an oxidate of a color developing agent and then being alkali-hydrolyzed to release $Z_1$, $Z_1$ represents a diffusing development inhibitor, -P-$Z_2$ represents a group separated from A or B by cleavage and capable of reacting with an oxidate of a developing agent to form a development inhibitor, $Z_2$ represents a diffusing development-inhibitor or a development inhibitor having only a low diffusibility and when -P-$Z_2$ is diffusible, A(or B)-P-$Z_2$ represents a diffusing DIR compound.

**5.** A method according to Claim 4 wherein the development inhibitor of $Z_1$ and $Z_2$ is represented by the following formulae:

(Z - 1)

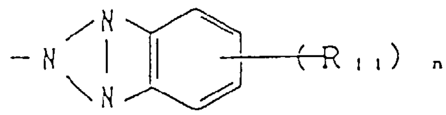

(Z - 2)

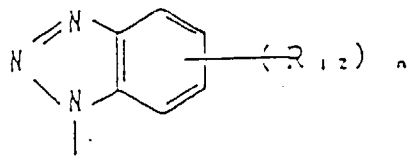

(Z - 3)

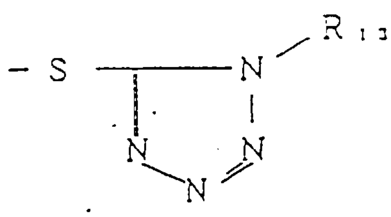

or

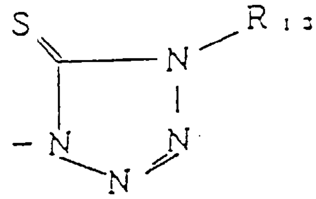

(Z - 4)

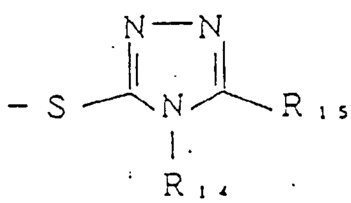

(Z - 5)

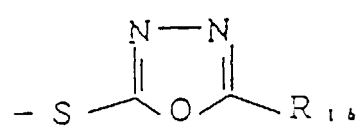

(Z - 6)

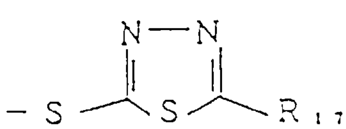

(Z - 7)

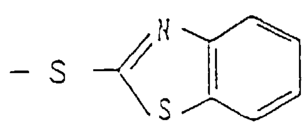

(Z - 8)

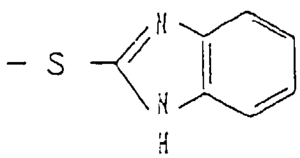

(Z - 9)

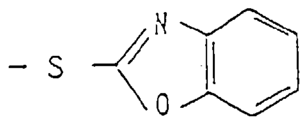

wherein $R_{11}$ and $R_{12}$ each represent an alkyl group, alkoxy group, acylamino group, halogen atom, alkoxycarbonyl group, thiazolilydeneamino group, aryloxycarbonyl group, acyloxy group, carbamoyl group, N-alkylcarbamoyl group, N,N-dialkylcarbamoyl group, nitro group, amino group, N-arylcarbamoyloxy group, sulfamoyl group, sulfonamide group, N-alkylcarbamoyloxy group, ureido group, hydroxyl group, alkoxycarbonylamino group, aryloxy group, alkylthio group, arylthio group, anilino group, aryl group, imido group, heterocyclic group, cyano group, alkylsulfonyl group or aryloxycarbonylamino group, n represents 1 or 2 and when n is 2, $R_{11}$ and $R_{12}$ may be the same or different from each other and n-$R_{11}$ 's and n-$R_{12}$ 's have 0 to 20 carbon atoms in total; $R_{13}$, $R_{14}$, $R_{15}$, $R_{16}$ and $R_{17}$ each represent an alkyl group, aryl group or heterocyclic group, and the total number of carbon atoms in $R_{13}$ through $R_{17}$ in the general formulae [Z-3], [Z-4], [R-5] and [R-6] is 0 to 20.

**6.** A method according to Claim 4 wherein A is represented by the following formulae [IV] through [VII]:

Formula [IV]

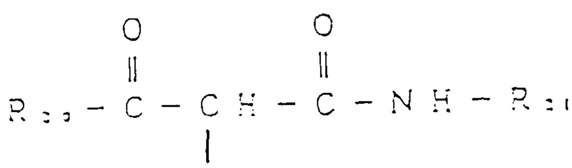

Formula [V]

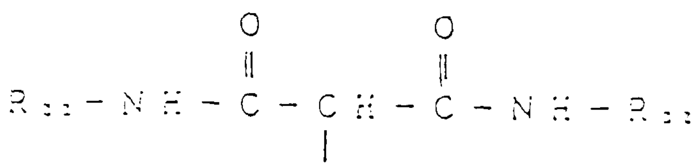

Formula [VI]

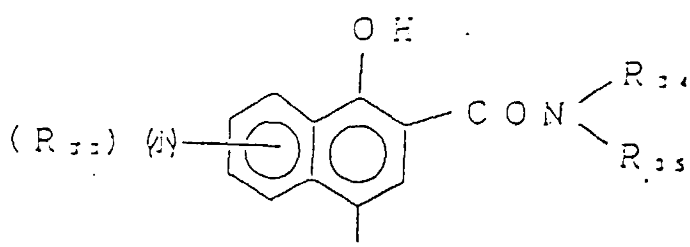

Formula [VII]

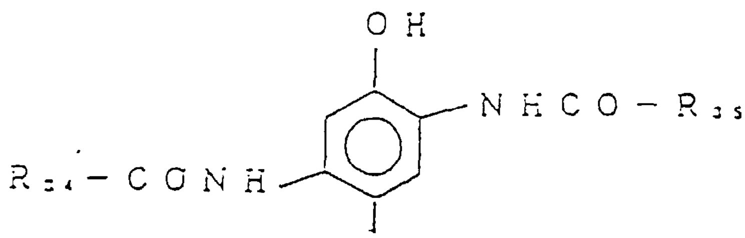

wherein $R_{30}$ represents an aliphatic group, aromatic group, alkoxy group or heterocyclic group, $R_{31}$ and $R_{32}$ each represent an aromatic group or heterocyclic group, $R_{33}$ represents a hydrogen atom, alkyl group, halogen atom, carbonamide group or sulfonamide group and $\ell$ represents an integer of 1 to 5, $R_{34}$ and $R_{35}$ each represent a hydrogen atom, alkyl group or aryl group.

**7.** A method according to Claim 4 wherein the compound of the general formula [II] is represented by the following formula [VIII]:

Formula [VIII]

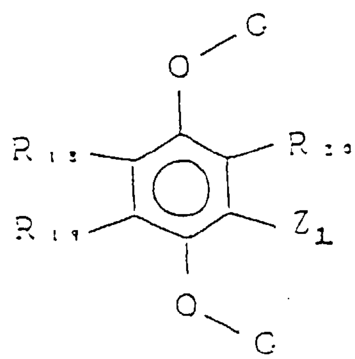

wherein G and G' each represent a hydrogen atom or a protective group for the phenolic hydroxyl group which can be removed during the photographic process, $R_{18}$, $R_{19}$ and $R_{20}$ may be the same or different from one another and each represent a hydrogen atom, halogen atom, alkyl group, aryl group, alkoxy group, aryloxy group, alkylthio group, arylthio group, cyano group, alkoxycarbonyl group, carbamoyl group, sulfamoyl group, carboxyl group, sulfo group, sulfonyl group, acyl group, carboxamide group, sulfonamide group or heterocyclic group, $R_{18}$ and $R_{19}$, $R_{18}$ and G, $R_{19}$ and G', and $R_{20}$ and G may be bonded together to form an aromatic or non-aromatic ring, at least one of $R_{18}$, $R_{19}$ and $R_{20}$ contains a diffusion-resistant group having 10 to 20 carbon atoms, and $Z_1$ is as defined above.

**8.** A method according to Claim 4 wherein the compound capable of reacting with an oxidate of a developing agent is incorporated into a photosensitive silver halide emulsion layer or a layer adjacent thereto in a photosensitive material in an amount of $1 \times 10^{-6}$ to $1 \times 10^{-3}$ mol/$m^2$.

**9.** A method of forming an image on a colour photographic film product, which product comprises:

a cartridge,
a spool carried in the cartridge for rotation about a longitudinal axis of the spool, and
an elongate silver halide photosensitive film for color photography having a photosensitive side,
the film being wound into a roll around the spool and comprising at least one red-sensitive silver halide emulsion layer, at least one green-sensitive silver halide emulsion layer and at least one blue-sensitive silver halide emulsion layer formed on a support, wherein at least one of the silver halide emulsion layers contains at least one kind of photosensitive halide grain having a high silver iodide phase therein;

the method comprising:

exposing an image on the photosensitive side of the film, characterized by:

recording information on the photosensitive side of the film in an information-recording area comprising an optical memory means located between a long edge of the film and the image area of the film, wherein said image is exposed on a portion of the photosensitive side of the film having four or less perforations or notches for deciding the position of the image.

**10.** A method according to Claim 9 wherein at least one of the silver halide emulsion layers comprises negative type silver halide grains each of which comprises an inner core substantially comprising silver bromide and/or silver bromoiodide and two or more outer shells surrounding the core and substantially comprising silver bromide and/or silver bromoiodide, wherein the outermost shell of the silver halide grain has a silver iodide content of 10 molar % or less, an inner shell having a silver iodide content higher than that of the outermost shell by at least 6 molar % is formed inside the outermost shell, an intermediate shell having a silver iodide content which is between that of the outermost shell and that of the inner shell is formed between them, the silver iodide content of the intermediate shell being higher than that of the outermost shell by at least 3 molar % and the silver iodide content of the inner shell being higher than that of the intermediate shell by at least 3 molar %.

**11.** A method according to Claim 10, wherein the outermost shell of the silver halide grain has a silver iodide content of 0 to 5 molar %, and the inner shell has a silver iodide content higher than that of the outermost shell by 6 to 40 molar %.

**12.** A method according to Claim 10, wherein the volume of the outermost shell is 4 to 70 molar %, the volume of the high silver iodide content shell is 10 to 80% and the volume of the intermediate shell is 5 to 55%.

**13.** A method according to Claim 10, wherein the silver iodide content of the inner core is 0 to 40 molar % and the diameter of the inner core is 0.05 to 0.8 μm.

**14.** A method according to Claim 10, wherein the silver iodide content of the whole grain is 1 to 20 molar %.

**15.** A method according to Claim 9, wherein the film product further comprises an information-recording part consisting of an electric memory means and/or a magnetic memory means.

**16.** A method according to Claim 9, wherein the area of one image-exposing area of the photographic film is 200 $mm^2$ to 1200 $mm^2$ and the information-recording area is 15 to 60% of this area.

**17.** A method of forming an image on a photographic film product, which product comprises:

a cartridge;
a spool carried in the cartridge for rotation about a longitudinal axis of the spool, and
an elongate film wound into a roll around the spool, said film having a photosensitive side and a width in the range of 20 mm to 35 mm;

the method comprising:
exposing an image having an area in the range of 200 $mm^2$ to 500 $mm^2$ on the photosensitive side of the film, characterized by:

recording information on the photosensitive side of the film in an optical data-input region located between a long edge of the film and the image-exposed area of the film, said region having an area of from 30% to 60% of the image-exposed area; and wherein said image is exposed on a portion of the photosensitive side of the film having four or less perforations or notches for deciding the position of the image and wherein at least one of an electrical data-input means and a magnetic data-input means is also provided in the film or the cartridge.

**18.** A method of producing color prints comprising (a) forming an image by a method as defined in any preceding Claim and (b) determining the printing conditions of the developed photographic film from the photographic information recorded in the information-recording area of the photographic film product.

## Patentansprüche

1. Verfahren zur Erzeugung eines Bildes auf einem farbfotografischen Filmprodukt, welches umfasst:

   eine Patrone,

   eine in der Patrone zur Rotation um eine Längsachse der Spule gehalterte Spule, und

   einen länglichen lichtempfindlichen Silberhalogenidfilm zur Farbfotografie mit einer lichtempfindlichen Seite,

   wobei der Film zu einer Rolle um die Spule gewickelt ist und wenigstens eine rotempfindliche Silberhalogenid-Emulsionsschicht, wenigstens eine grünempfindliche Silberhalogenid-Emulsionsschicht und wenigstens eine blauempfindliche Silberhalogenid-Emulsionsschicht auf einem Träger ausgebildet umfasst und ausserdem enthält:

   eine Verbindung, die mit einem Oxidationsprodukt eines Entwicklungsmittels zur Abspaltung eines Diffusionsentwicklungsmittels oder eines Vorläufers davon reagieren kann und/oder

   eine Verbindung, die mit einem Oxidationsprodukt eines Entwicklungsmittels unter Bildung einer Abspaltungsverbindung reagieren kann, die mit einem weiteren Molekül des Oxidationsprodukts des Farbentwicklungsmittels unter Abspaltung eines Entwicklungsinhibitors reagieren kann;

   wobei das Verfahren umfasst:
   Belichtung eines Bildes auf der lichtempfindlichen Seite des Filmes, gekennzeichnet durch:

   Aufzeichnung von Information auf der lichtempfindlichen Seite des Filmes auf einer Informationsaufzeichnungsfläche mit optischen Speichermitteln zwischen einem Längsrand des Filmes und der Bildfläche des Filmes, wobei dieses Bild auf einem Teil der lichtempfindlichen Seite des Filmes mit vier oder weniger Perforationen oder Einkerbungen zur Festlegung der Position des Bildes belichtet wird.

2. Verfahren gemäss Anspruch 1, worin das Filmprodukt ausserdem einen Informationsaufzeichnungsteil aus einem elektronischen Speichermittel und/oder einem magnetischen Speichermittel umfasst.

3. Verfahren gemäss Anspruch 1, worin die Fläche einer Bildbelichtungsfläche des fotografischen Filmes 200 bis 1200 $mm^2$ beträgt und jede Informationsaufzeichnungsfläche 15 bis 60 % dieser Fläche einnimmt.

4. Verfahren gemäss Anspruch 1, worin die Verbindung, die mit einem Oxidationsprodukt eines Entwicklungsmittels reagieren kann, durch die folgenden Formeln (I) bis (III) dargestellt wird:

   allgemeine Formel (I) $A\text{-}Z_1$

   allgemeine Formel (II) $B\text{-}Z_1$

   allgemeine Formel (III) $A$ (oder $B$)$\text{-}P\text{-}Z_2$

   worin A eine Kupplerkomponente bedeutet, die mit einem Oxidationsprodukt eines Farbentwicklungsmittels unter Abspaltung einer $Z_1$-Gruppe (Formel (I)) oder oder einer $P\text{-}Z_2$-Gruppe (Formel (III)) reagieren kann, B einen Redoxteil bedeutet, der an einer Oxidationsreduktionsreaktion mit einem Oxidationsprodukt eines Farbentwicklungsmittels teilnehmen kann, und dann alkalisch unter Abspaltung von $Z_1$ hydrolysiert wird, $Z_1$ einen Diffusionsentwicklungsinhibitor bedeutet, $P\text{-}Z_2$ eine Gruppe bedeutet, die von A oder B durch Abspaltung abgetrennt wird und mit einem Oxidationsprodukt eines Entwicklungsmittels unter Bildung eines Entwicklungsinhibitors reagieren kann, $Z_2$ einen Diffusionsentwicklungsinhibitor oder einen Entwicklungsinhibitor mit nur einer geringen Diffusionsfähigkeit darstellt, und wenn $P\text{-}Z_2$ diffusionsfähig ist, bedeuten A(oder B)-$P\text{-}Z_2$ eine diffusionsfähige DIR-Verbindung.

5. Verfahren gemäss Anspruch 4, worin der Entwicklungsinhibitor von $Z_1$ oder $Z_2$ durch die folgenden Formeln dar-

gestellt wird:

(Z-1)

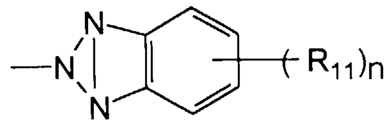

(Z-2)

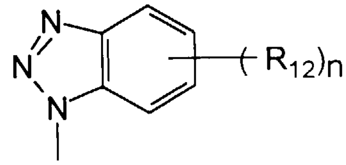

(Z-3)

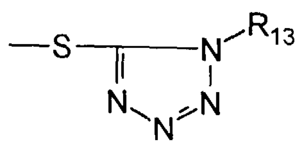

oder

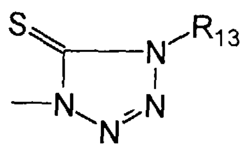

(Z-4)

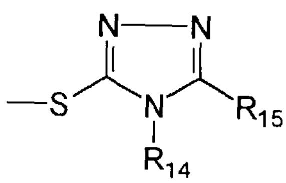

(Z-5)

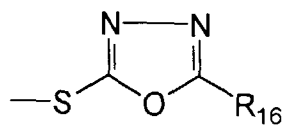

(Z-6)

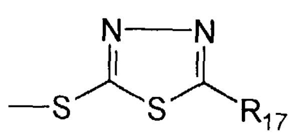

(Z-7)

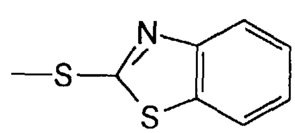

(Z-8)

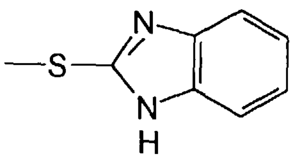

(Z-9)

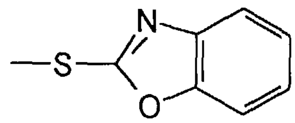

worin $R_{11}$ und $R_{12}$ jeweils eine Alkylgruppe, eine Alkoxygruppe, eine Acylaminogruppe, ein Halogenatom, eine Alkoxycarbonylgruppe, eine Thiazolylidenaminogruppe, eine Aryloxycarbonylgruppe, eine Acyloxygruppe, eine Carbamoylgruppe, eine N-Alkylcarbamoylgruppe, eine N,N-Dialkylcarbamoylgruppe, eine Nitrogruppe, eine Aminogruppe, eine N-Arylcarbamoyloxygruppe, eine Sulfamoylgruppe, eine Sulfonamidgruppe, eine N-Alkylcarbamoyloxygruppe, eine Ureidogruppe, eine Hydroxylgruppe, eine Alkoxycarbonylaminogruppe, eine Aryloxygruppe, eine Alkylthiogruppe, eine Arylthiogruppe, eine Anilinogruppe, eine Arylgruppe, eine Imidogruppe, eine heterocyclische Gruppe, eine Cyanogruppe, eine Alkylsulfonylgruppe oder eine Aryloxycarbonylaminogruppe darstellen, n ist 1 oder 2, und wenn n 2 ist, können $R_{11}$ und $R_{12}$ jeweils gleich oder verschieden voneinander sein und n-$R_{11}$ und n-$R_{12}$ haben zusammen 0 bis 20 Kohlenstoffatome; $R_{13}$, $R_{14}$, $R_{15}$, $R_{16}$ und $R_{17}$ bedeuten jeweils eine Alkylgruppe, eine Arylgruppe oder eine heterocyclische Gruppe, und die Gesamtzahl der Kohlenstoffatome von $R_{13}$ bis $R_{17}$ in den allgemeinen Formeln (Z-3), (Z-4), (R-5) und (R-6) ist 0 bis 20.

**6.** Verfahren gemäss Anspruch 4, worin A durch die folgenden Formeln (IV) bis (VII) dargestellt wird:

Formel (IV)

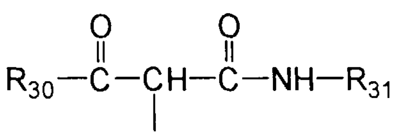

Formel (V)

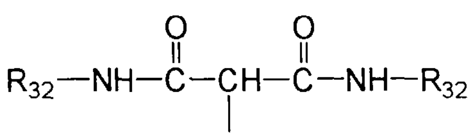

Formel (VI)

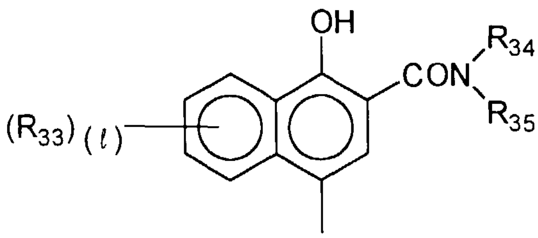

Formel (VII)

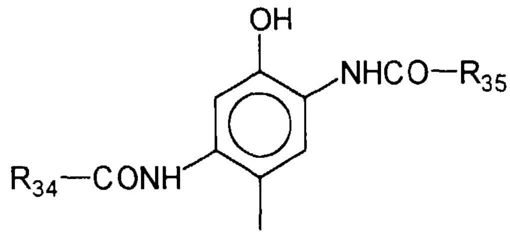

worin $R_{30}$ eine aliphatische Gruppe, eine aromatische Gruppe, eine Alkoxygruppe oder eine heterocyclische Gruppe darstellt, $R_{31}$ und $R_{32}$ jeweils eine aromatische Gruppe oder eine heterocyclische Gruppe bedeuten, $R_{33}$ ein Wasserstoffatom, eine Alkylgruppe, ein Halogenatom, eine Carbonamidgruppe oder eine Sulfonamidgruppe darstellen, und $\ell$ eine ganze Zahl von 1 bis 5 bedeutet, $R_{34}$ und $R_{35}$ jeweils ein Wasserstoffatom, eine Alkylgruppe oder eine Arylgruppe bedeuten.

7. Verfahren gemäss Anspruch 4, worin die Verbindung mit der allgemeinen Formel (II) durch die allgemeine Formel (VIII) dargestellt wird:

Formel (VIII):

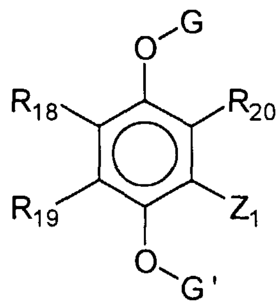

worin G und G' jeweils ein Wasserstoffatom oder eine Schutzgruppe für die phenolische Hydroxylgruppe darstellen, die während des fotografischen Verfahrens entfernt werden kann, $R_{18}$, $R_{19}$ und $R_{20}$ gleich oder voneinander verschieden sein können und jeweils ein Wasserstoffatom, ein Halogenatom, eine Alkylgruppe, eine Arylgruppe, eine Alkoxygruppe, eine Aryloxygruppe, eine Alkylthiogruppe, eine Arylthiogruppe, eine Cyanogruppe, eine Alkoxycarbonylgruppe, eine Carbamoylgruppe, eine Sulfamoylgruppe, eine Carboxylgruppe, eine Sulfogruppe, eine Sulfonylgruppe, eine Acylgruppe, eine Carboxamidgruppe, eine Sulfonamidgruppe oder eine heterocyclische Gruppe bedeuten, $R_{18}$ und $R_{19}$, $R_{18}$ und G, $R_{19}$ und G', $R_{20}$ und G miteinander unter Bildung eines aromatischen oder nicht-aromatischen Ringes verbunden sein können, wenigstens eine Gruppe aus $R_{18}$, $R_{19}$ und $R_{20}$ eine diffusionsfeste Gruppe mit 10 bis 20 Kohlenstoffatomen enthält, und $Z_1$ wie oben definiert ist.

8. Verfahren gemäss Anspruch 4, worin die Verbindung, die mit einem Oxidationsprodukt eines Entwicklungsmittels reagieren kann, zu einer lichtempfindlichen Silberhalogenid-Emulsionsschicht oder einer dazu benachbarten Schicht in einem lichtempfindlichen Material in einer Menge von $1 \times 10^{-6}$ bis $1 \times 10^{-3}$ mol/m$^2$ gegeben wird.

9. Verfahren zur Erzeugung eines Bildes auf einem farbfotografischen Filmprodukt, welches umfasst:

eine Patrone,

eine in der Patrone zur Rotation um eine Längsachse der Spule gehalterte Spule, und

einen länglichen lichtempfindlichen Silberhalogenidfilm zur Farbfotografie mit einer lichtempfindlichen Seite,

wobei der Film zu einer Rolle um die Spule gewickelt ist und wenigstens eine rotempfindliche Silberhalogenid-Emulsionsschicht, wenigstens eine grünempfindliche Silberhalogenid-Emulsionsschicht und wenigstens eine blauempfindliche Silberhalogenid-Emulsionsschicht auf einem Träger ausgebildet umfasst, wobei wenigstens eine der Silberhalogenid-Emulsionsschichten wenigstens eine Art von lichtempfindlichen Halogenidkörnern mit einer silberiodidreichen Phase darin enthält:

wobei das Verfahren umfasst:
Belichtung eines Bildes auf der lichtempfindlichen Seite des Filmes, gekennzeichnet durch:

Aufzeichnung von Information auf der lichtempfindlichen Seite des Filmes auf einer Informationsaufzeichnungsfläche mit einem optischen Speichermittel, das zwischen einem Längsrand des Filmes und der Bildfläche des Filmes angeordnet ist, wobei das Bild auf einem Teil der lichtempfindlichen Seite des Filmes mit vier oder weniger Perforationen oder Einkerbungen zur Festlegung der Position des Bildes belichtet wird.

**10.** Verfahren gemäss Anspruch 9, worin wenigstens eine der Silberhalogenid-Emulsionsschichten negative Silberhalogenidkörner, von denen jedes einen inneren Kern aus im wesentlichen Silberbromid und/oder Silberbromiodid und zwei oder mehrere äussere Schalen umfasst, die den Kern umgeben und im wesentlichen Silberbromid und/oder Silberbromiodid umfassen, wobei die äusserste Schale des Silberhalogenidkorns einen Silberiodidgehalt von 10 mol-% oder weniger hat, eine innere Schale mit einem Silberiodidgehalt, der um wenigstens 6 mol-% höher ist als der der äusseren Schale, innerhalb der äusseren Schale gebildet wird, eine Zwischenschale mit einem Silberiodidgehalt, der zwischen dem der äusseren Schale und dem der inneren Schale liegt, zwischen ihnen ausgebildet wird, wobei der Silberiodidgehalt der Zwischenschale um wenigstens 3 mol-% höher ist als der der äussersten Schale und der Silberiodidgehalt der inneren Schale um wenigstens 3 mol-% höher ist als der der Zwischenschale.

**11.** Verfahren gemäss Anspruch 10, worin die äusserste Schale des Silberhalogenidkorns einen Silberiodidgehalt von 0 bis 5 mol-% hat und die innere Schale einen um 6 bis 40 mol-% höheren Silberiodidgehalt hat als die äusserste Schale.

**12.** Verfahren gemäss Anspruch 10, worin das Volumen der äussersten Schale 4 bis 70 mol-%, das Volumen der silberiodidreichen Schale 10 bis 80 % und das Volumen der Zwischenschale 5 bis 55 % beträgt.

**13.** Verfahren gemäss Anspruch 10, wobei der Silberiodidgehalt des inneren Kerns 0 bis 40 mol-% und der Durchmesser des inneren Kerns 0,05 bis 0,8 μm beträgt.

**14.** Verfahren gemäss Anspruch 10, worin der Silberiodidgehalt des gesamten Korns 1 bis 20 mol-% beträgt.

**15.** Verfahren gemäss Anspruch 9, worin das Filmprodukt ausserdem einen Informationsaufzeichnungsteil aus einem elektronischen Speichermittel und/oder einem magnetischen Speichermittel enthält.

**16.** Verfahren gemäss Anspruch 9, worin die Fläche einer Bildbelichtungsfläche des fotografischen Filmes 200 bis 1200 $mm^2$ beträgt und die Informationsaufzeichnungsfläche 15 bis 60 % dieser Fläche einnimmt.

**17.** Verfahren zur Erzeugung eines Bildes auf einem fotografischen Filmprodukt, welches umfasst:

eine Patrone;

eine in der Patrone zur Rotation um eine Längsachse der Spule gehalterte Spule; und

einen länglichen, zu einer Rolle um die Spule gewickelten Film, der eine lichtempfindliche Seite und eine Breite im Bereich von 20 bis 35 mm hat;

wobei das Verfahren umfasst:
Belichtung eines Bildes mit einer Fläche im Bereich von 200 bis 500 $mm^2$ auf der lichtempfindlichen Seite des Filmes, gekennzeichnet durch:

Aufzeichnung von Information auf der lichtempfindlichen Seite des Filmes in einer optischen Dateneingabefläche, die zwischen dem Längsrand des Filmes und der belichteten Bildfläche des Filmes liegt, wobei diese Region eine Fläche von 30 bis 60 % der belichteten Bildfläche hat; und wobei das Bild auf einem Teil der

lichtempfindlichen Seite des Filmes mit vier oder weniger Perforationen oder Einkerbungen zur Festlegung der Position des Bildes belichtet wird und wenigstens ein elektrisches Dateneingabemittel und ein magnetisches Dateneingabemittel ebenfalls im Film oder der Patrone vorgesehen ist.

**18.** Verfahren zur Erzeugung von Farbabzügen, umfassend

(a) Erzeugung eines Bildes nach einem Verfahren gemäss einem der vorhergehenden Ansprüche und (b) Bestimmung der Abzugsbedingungen des entwickelten fotografischen Filmes aus den fotografischen Informationen, die in der Informationsaufzeichnungsfläche des fotografischen Filmprodukts aufgezeichnet sind.

## Revendications

**1.** Procédé pour former une image sur un produit de film pour photographie en couleurs, lequel produit comprend :

une cartouche,
une bobine supportée à l'intérieur de la cartouche pour pouvoir tourner autour d'un axe longitudinal de la bobine, et
un film photosensible allongé à base d'un halogénure d'argent, pour photographie en couleurs, ayant un côté photosensible,
le film étant enroulé en rouleau autour de la bobine et comprenant au moins une couche d'une émulsion à base d'un halogénure d'argent sensible au rouge, au moins une couche d'une émulsion à base d'un halogénure d'argent sensible au vert et au moins une couche d'une émulsion à base d'un halogénure d'argent sensible au bleu, formées sur un support, et comprenant en outre :
un composé capable de réagir avec un oxydat d'un agent de développement pour libérer un inhibiteur de développement diffusant ou un précurseur de celui-ci, et/ou
un composé capable de réagir avec un oxydat d'un agent de développement pour former un composé clivé capable de réagir avec une autre molécule de l'oxydat de l'agent de développement de couleur pour cliver un inhibiteur de développement;

le procédé comprenant:
l'exposition d'une image sur le côté photosensible du film, le procédé étant caractérisé par:

l'enregistrement d'une information sur le côté photosensible du film dans une région d'enregistrement d'information comprenant un moyen de mémoire optique se trouvant entre un bord longitudinal du film et la zone pour image du film, où ladite image est exposée sur une portion du côté photosensible du film ayant quatre perforations ou entailles ou moins pour déterminer la position de l'image.

**2.** Procédé selon la revendication 1, dans lequel le produit de film comprend, en outre, une partie d'enregistrement d'information constituée par un moyen de mémoire électrique et/ou un moyen de mémoire magnétique.

**3.** Procédé selon la revendication 1, dans lequel la superficie d'une zone d'exposition d'image du film photographique est de 200 $mm^2$ à 1200 $mm^2$ et chaque zone d'enregistrement d'information constitue de 15 à 60 % de cette superficie.

**4.** Procédé selon la revendication 1, dans lequel le composé capable de réagir avec un oxydat d'un agent de développement est représenté par les formules suivantes [I] à [III] :

Formule générale [I] $A\text{-}Z_1$

Formule générale [II] $B\text{-}Z_1$

Formule générale [III] $A\text{ (ou B)-}P\text{-}Z_2$

dans lesquelles A représente un composant de couplage capable de réagir avec un oxydat d'un agent de développement de couleur pour libérer un groupe $Z_1$ (formule I) ou un groupe P-$Z_2$ (formule III), B représente une partie rédox capable de participer à une réaction d'oxydation-réduction avec un oxydat d'un agent de développement de couleur et ensuite d'être hydrolysée par un alcali pour libérer $Z_1$, $Z_1$ représente un inhibiteur du développement diffusant, -P-$Z_2$ représente un groupe séparé de A ou de B par clivage et capable de réagir avec un oxydat d'un agent de développement pour former un inhibiteur de développement, $Z_2$ représente un inhibiteur de développement diffusant ou un inhibiteur de développement ayant seulement une faible diffusibilité et quand -P-$Z_2$ est diffusible, A (ou B)-P-$Z_2$ représente un composé DIR diffusant.

**5.** Procédé selon la revendication 4, dans lequel l'inhibiteur d'un développement de $Z_1$ et $Z_2$ est représenté par les formules suivantes :

(Z - 1)

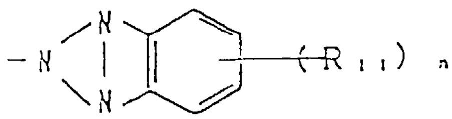

(Z - 2)

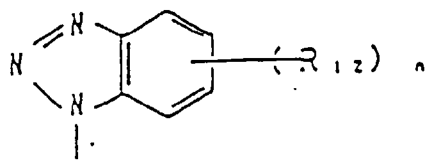

(Z - 3)

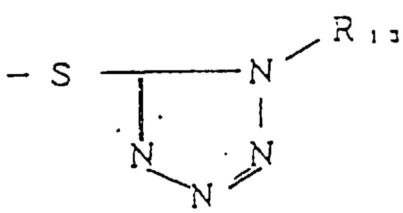

or

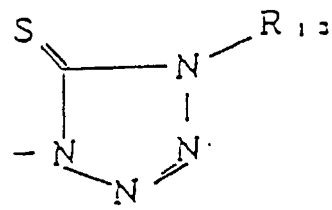

(Z - 4)

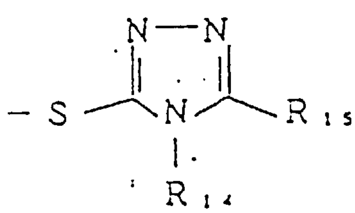

(Z - 5)

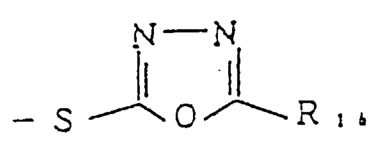

(Z - 6)

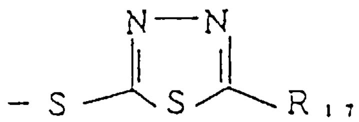

(Z - 7)

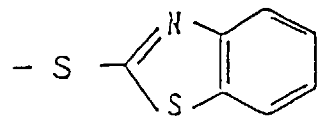

(Z - 8)

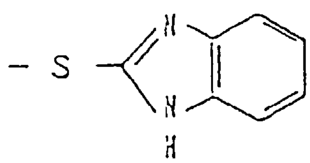

(Z - 9)

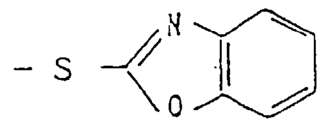

dans lesquelles $R_{11}$ et $R_{12}$ représentent chacun un groupe alkyle, un groupe alcoxy, un groupe acylamino, un atome d'halogène, un groupe alcoxycarbonyle, un groupe thiazolilydèneamino, un groupe aryloxycarbonyle, un groupe acyloxy, un groupe carbamoyle, un groupe N-alkylcarbamoyle, un groupe N,N-dialkylcarbamoyle, un groupe nitro, un groupe amino, un groupe N-arylcarbamoyloxy, un groupe sulfamoyle, un groupe sulfonamide, un groupe N-alkylcarbamoyloxy, un groupe uréido, un groupe hydroxyle, un groupe alcoxycarbonylamino, un groupe aryloxy, un groupe alkylthio, un groupe arylthio, un groupe anilino, un groupe aryle, un groupe imido, un groupe hétérocyclique, un groupe cyano, un groupe alkylsulfonyle ou un groupe aryloxycarbonylamino, n représente 1 ou 2 et quand n est 2, $R_{11}$ et $R_{12}$ peuvent être les mêmes ou différents et les n $R_{11}$ et les n $R_{12}$ ont de 0 à 20 atomes de carbone en tout; $R_{13}$, $R_{14}$, $R_{15}$, $R_{16}$ et $R_{17}$ représentent chacun un groupe alkyle, un groupe aryle ou un groupe hétérocyclique et le nombre total d'atomes de carbone dans $R_{11}$ à $R_{17}$ dans les formules générales [Z-3], [Z-4], [R-5] et [R-6] est de 0 à 20.

**6.** Procédé selon la revendication 4, dans lequel A est représenté par les formule [IV] à [VII] suivantes :

Formule [IV] :

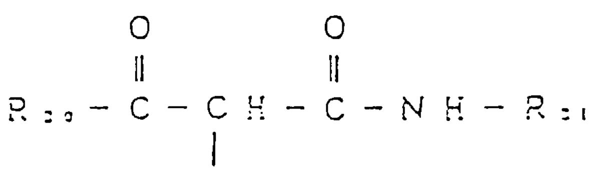

Formule [V] :

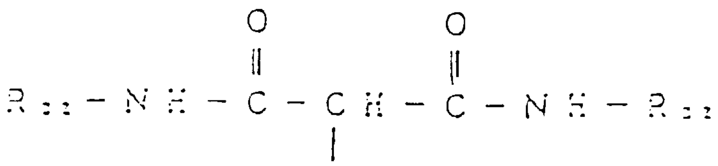

Formule [VI] :

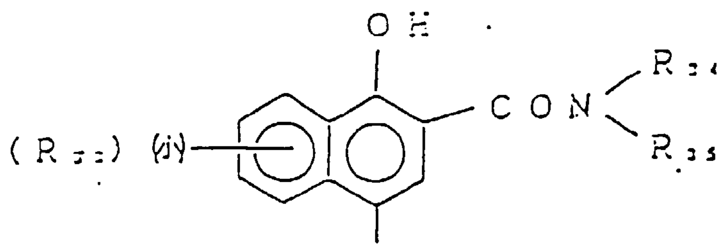

Formule [VII]

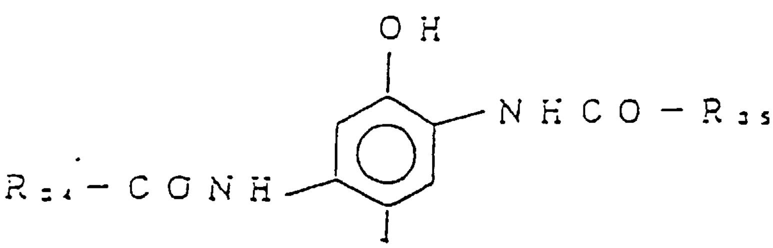

dans lesquelles $R_{30}$ représente un groupe aliphatique, un groupe aromatique, un groupe alcoxy ou un groupe hétérocyclique, $R_{31}$ et $R_{32}$ représentent chacun un groupe aromatique ou un groupe hétérocyclique, $R_{33}$ représente un atome d'hydrogène, un groupe alkyle, un atome halogène, un groupe carbonamide ou un groupe sulfonamide et $\ell$ représente un nombre entier de 1 à 5, $R_{34}$ et $R_{35}$ représentent chacun un atome d'hydrogène, un groupe alkyle ou un groupe aryle.

**7.** Procédé selon la revendication 4, dans lequel le composé de la formule générale [II] est représenté par la formule [VIII] suivante

Formule [VIII]

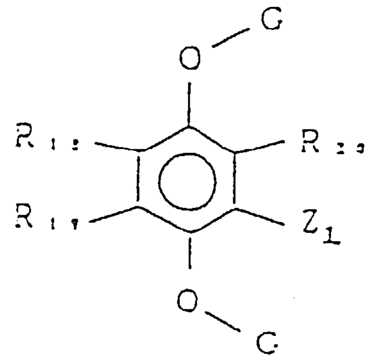

dans laquelle G et G' représentent chacun un atome d'hydrogène ou un groupe protecteur pour le groupe hydroxyle phénolique, qui peut être éliminé durant le processus photographique, $R_{18}$, $R_{19}$, $R_{20}$ peuvent être les mêmes ou différents entre eux et ils représentent chacun un atome d'hydrogène, un atome d'halogène, un groupe alkyle, un groupe aryle, un groupe alcoxy, un groupe aryloxy, un groupe alkylthio, un groupe arylthio, un groupe cyano, un groupe alcoxycarbonyle, un groupe carbamoyle, un groupe sulfamoyle, un groupe carboxyle, un groupe sulfo, un groupe sulfonyle, un groupe acyle, un groupe carboxamide, un groupe sulfonamide ou un groupe hétérocyclique, $R_{18}$ et $R_{19}$, $R_{18}$ et G, $R_{19}$ et G' et $R_{20}$ et G peuvent être liés ensemble pour former un cycle aromatique ou non aromatique et au moins un d'entre $R_{18}$, $R_{19}$ et $R_{20}$ contient un groupe résistant à la diffusion ayant de 10 à 20 atomes de carbone et $Z_1$ est comme défini ci-dessus.

**8.** Procédé selon la revendication 4, dans lequel le composé capable de réagir avec un oxydat d'un agent de développement est incorporé dans une couche d'émulsion photosensible d'un halogénure d'argent ou dans une couche adjacente à celle-ci, dans un matériau photosensible, à raison de $1 \times 10^{-6}$ à $1 \times 10^{-3}$ moles/$m^2$.

**9.** Procédé pour former une image sur un produit de film pour photographie en couleurs, lequel produit comprend :

une cartouche,
une bobine supportée à l'intérieur de la cartouche pour pouvoir tourner autour d'un axe longitudinal de la bobine, et
un film photosensible allongé à base d'halogénure d'argent, pour photographie en couleurs, ayant un côté photosensible,
le film étant enroulé en rouleau autour de la bobine et comprenant au moins une couche d'émulsion à base d'un halogénure d'argent sensible au rouge, au moins une couche d'une émulsion à base d'un halogénure d'argent sensible au vert et au moins une couche d'une émulsion à base d'un halogénure d'argent sensible au bleu, formées sur un support, au moins une des couches d'une émulsion à base d'un halogénure d'argent contenant au moins un type de grains d'halogénure photosensible renfermant une phase riche en iodure d'argent,

le procédé comprenant:
l'exposition d'une image sur le côté photosensible du film, le procédé étant caractérisé par :

l'enregistrement d'une information sur le côté photosensible du film dans une zone d'enregistrement d'information comprenant un moyen de mémoire optique se trouvant entre un bord longitudinal du film et la zone pour image du film, où ladite image est exposée sur une portion du côté photosensible du film ayant quatre perforations ou entailles ou moins pour déterminer la position de l'image.

**10.** Procédé selon la revendication 9, dans lequel au moins une des couches d'émulsion d'halogénure d'argent comprend des grains d'halogénure d'argent de type négatif dont chacun comprend un noyau interne comprenant essentiellement du bromure d'argent et/ou du bromoiodure d'argent et deux coques externes ou davantage entourant le noyau et comprenant essentiellement du bromure d'argent et/ou du bromoiodure d'argent, où la coque la plus externe du grain d'halogénure d'argent a une teneur en iodure d'argent de 10 % en moles ou moins, une coque interne ayant une teneur en iodure d'argent supérieure à celle de la coque la plus externe par au moins 6 % en moles est formée à l'intérieur de la couche la plus externe, une coque intermédiaire ayant une teneur en iodure

d'argent qui est entre celle de la coque la plus externe et celle de la coque interne est formée entre celles-ci, la teneur en iodure d'argent de la coque intermédiaire étant plus élevée que celle de la coque la plus externe par au moins 3 % en moles et la teneur en iodure d'argent de la coque interne étant plus élevée que celle de la coque intermédiaire par au moins 3 % en moles.

**11.** Procédé selon la revendication 10, dans lequel la coque la plus externe du grain d'halogénure d'argent a une teneur en iodure d'argent de 0 à 5 % en moles et la coque interne à une teneur en iodure d'argent supérieure à celle de la coque la plus externe par 6 à 40 % en moles.

**12.** Procédé selon la revendications 10, dans lequel le volume de la coque la plus externe est de 4 à 70 % en moles, le volume de la coque riche en iodure d'argent est de 10 à 80 % et le volume de la coque intermédiaire est de 5 à 55 %.

**13.** Procédé selon la revendication 10, dans lequel la teneur en iodure d'argent du noyau interne est de 0 à 40 % en moles et le diamètre du noyau interne est de 0,05 à 0,8 $\mu$m.

**14.** Procédé selon la revendication 10, dans lequel la teneur en iodure d'argent du grain entier est de 1 à 20 % en moles.

**15.** Procédé selon la revendication 9, dans lequel le produit de film comprend en outre une partie d'enregistrement de l'information constituée par un moyen de mémoire électrique et/ou un moyen de mémoire magnétique.

**16.** Procédé selon la revendication 9, dans lequel la superficie d'une zone d'exposition d'image sur le film photographique est de 200 $mm^2$ à 1200 $mm^2$ et la zone d'enregistrement de l'information représente de 15 à 60 % de cette superficie.

**17.** Procédé pour former une image sur un produit de film photographique, lequel produit comprend :

une cartouche;
une bobine supportée à l'intérieur de la cartouche pour pouvoir tourner autour d'un axe longitudinal de la bobine, et
un film photosensible allongé enroulé autour de la bobine, ledit film ayant un côté photosensible et une largeur dans la plage de 20 mm à 35 mm;

le procédé comprenant:
l'exposition d'une image ayant une superficie de 200 $mm^2$ à 500 $mm^2$ sur le côté photosensible du film, le procédé étant caractérisé par:

l'enregistrement d'une information sur le côté photosensible du film dans une région d'entrée de données optiques située entre un bord longitudinal du film et la zone d'image exposée du film, ladite région ayant une superficie correspondant à 30 % - 60 % de la superficie de l'image exposée; et ladite image est exposée sur une portion du côté photosensible du film ayant quatre perforations ou entailles ou moins pour déterminer la position de l'image et où au moins l'un d'un moyen d'entrée de données électriques et d'un moyen d'entrée de données magnétiques est aussi prévu dans le film ou la cartouche.

**18.** Procédé pour produire des épreuves en couleurs comprenant (a) la formation d'une image par un procédé comme défini dans l'une quelconque des revendications précédentes et (b) la détermination des conditions d'impression du film photographique développé à partir de l'information photographique enregistrée dans la zone d'enregistrement de l'information du produit de film photographique.

FIG. 1

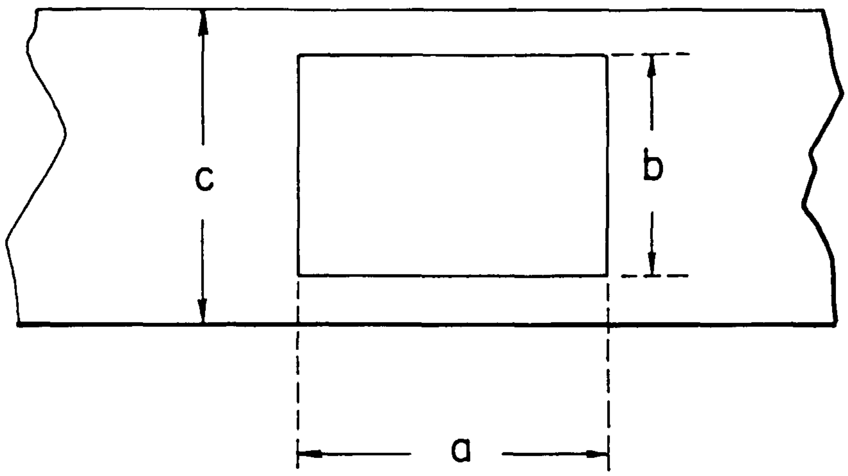


FIG. 2

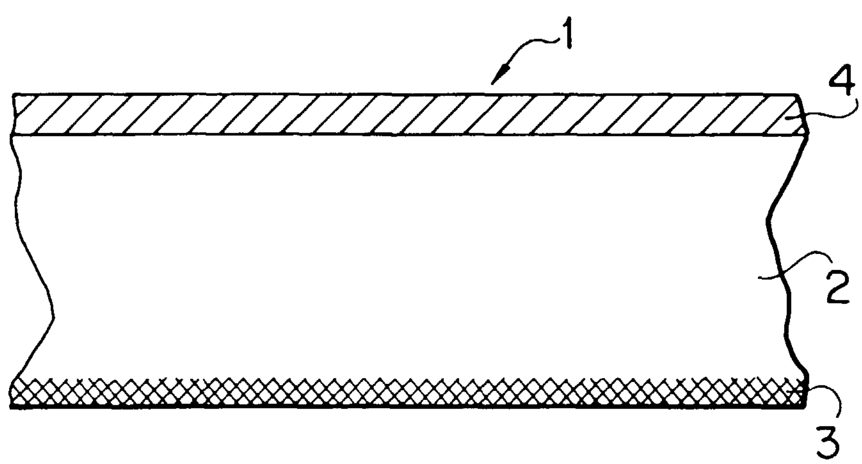

FIG. 3

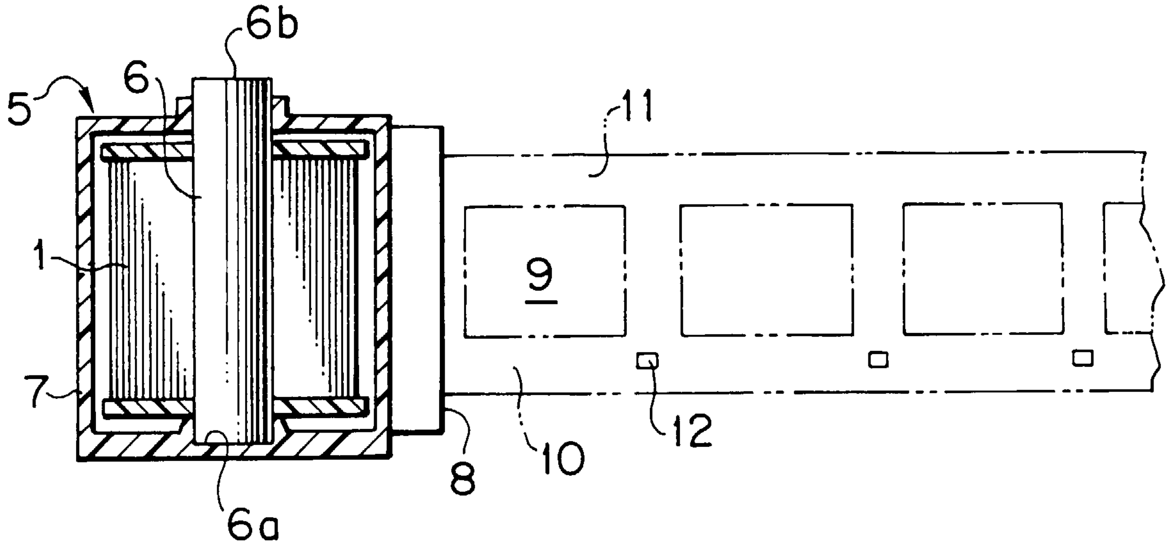


FIG. 4

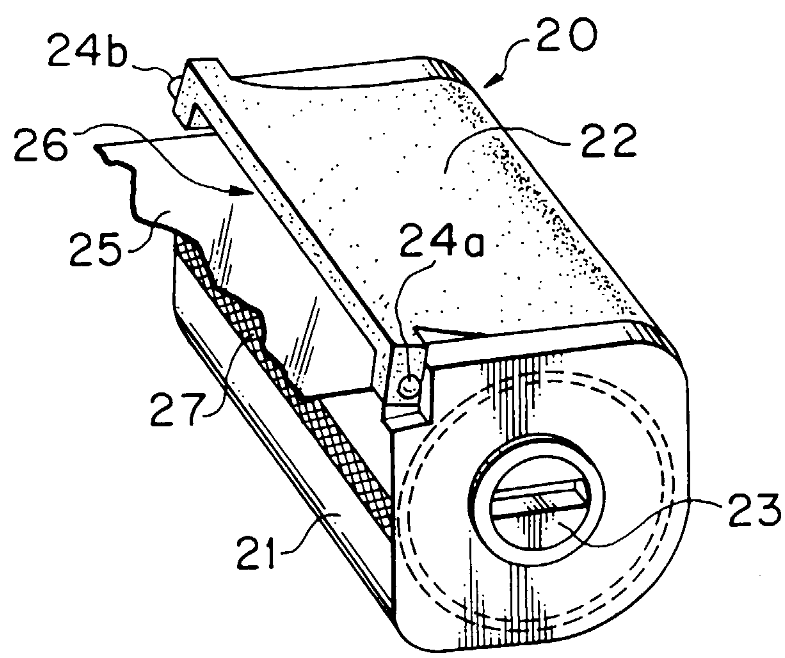

FIG. 5

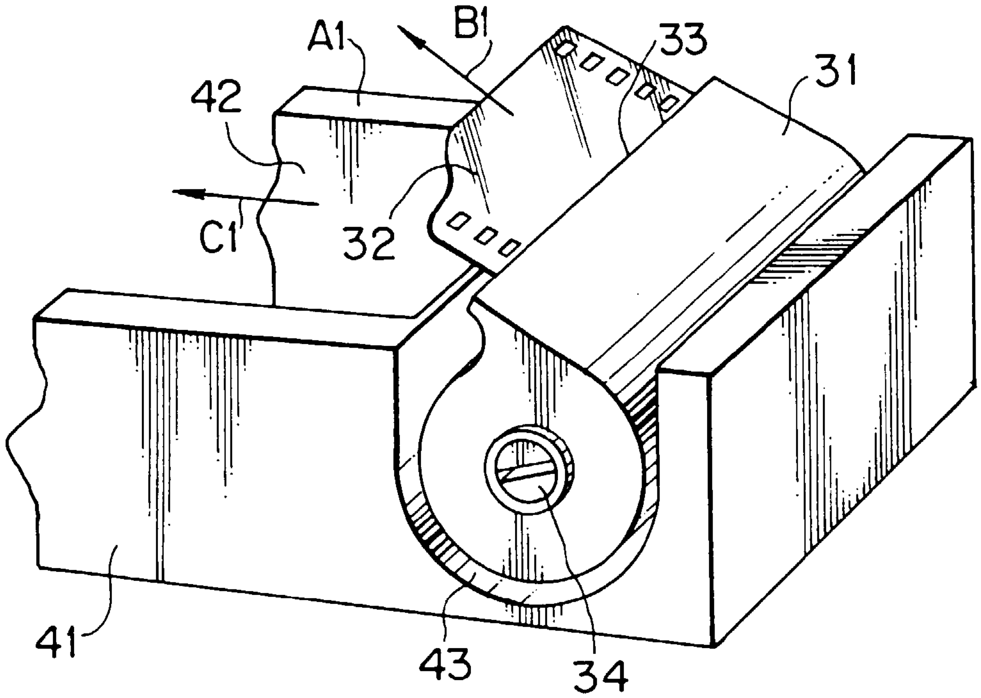


FIG. 6

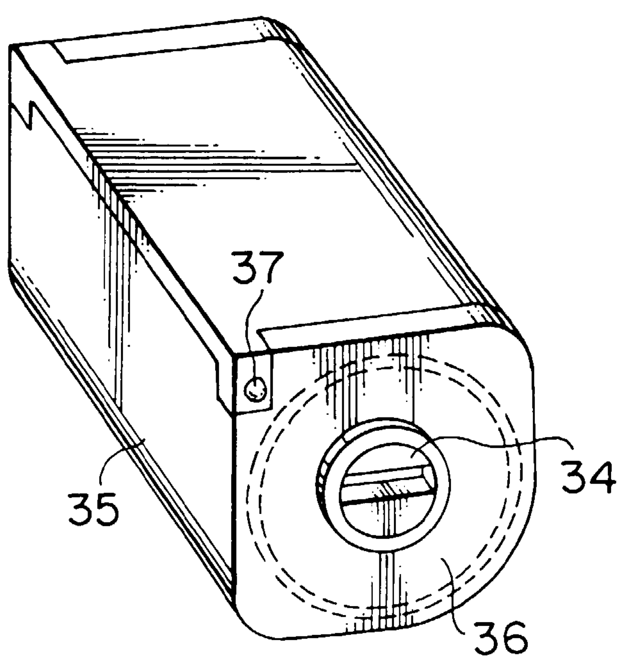

FIG. 7

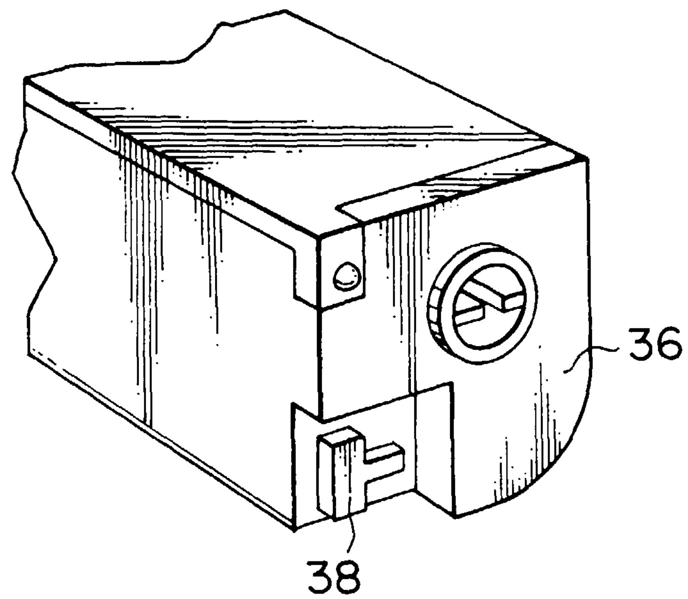


FIG. 8

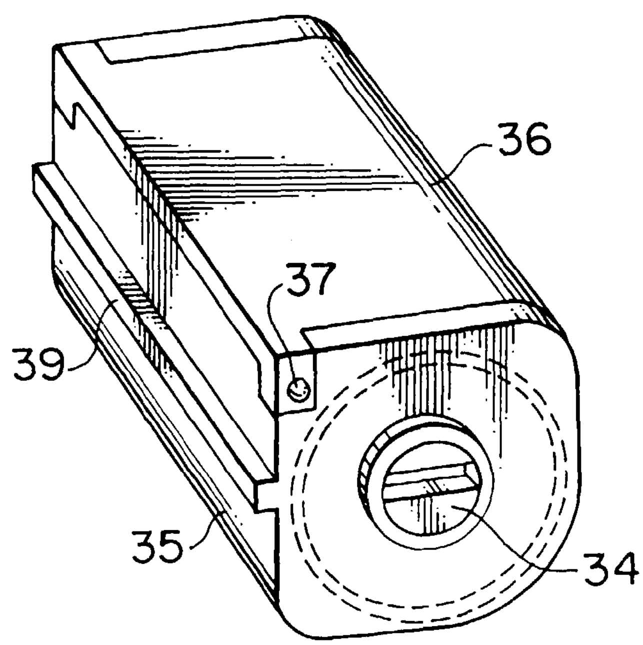

FIG. 9

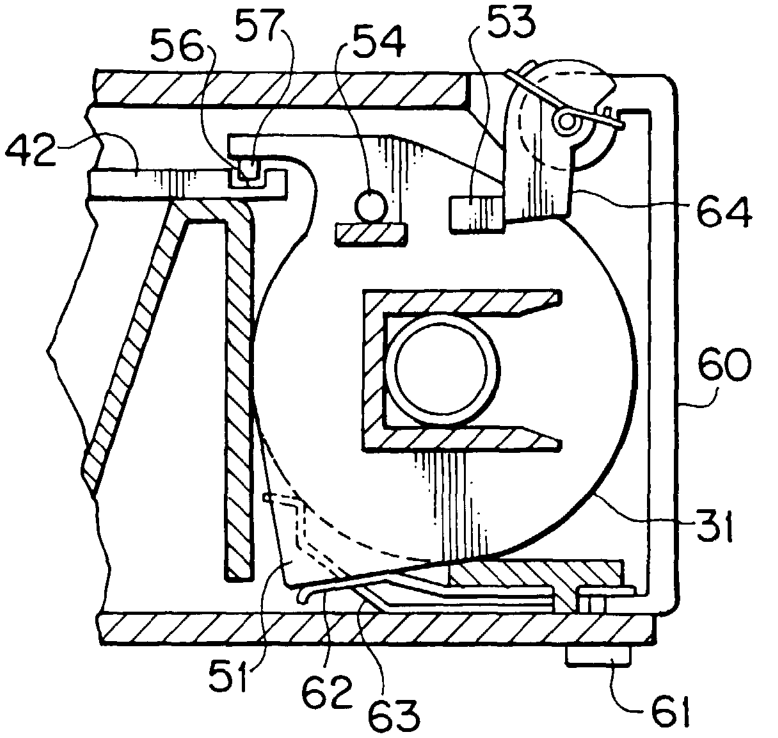


FIG. 10

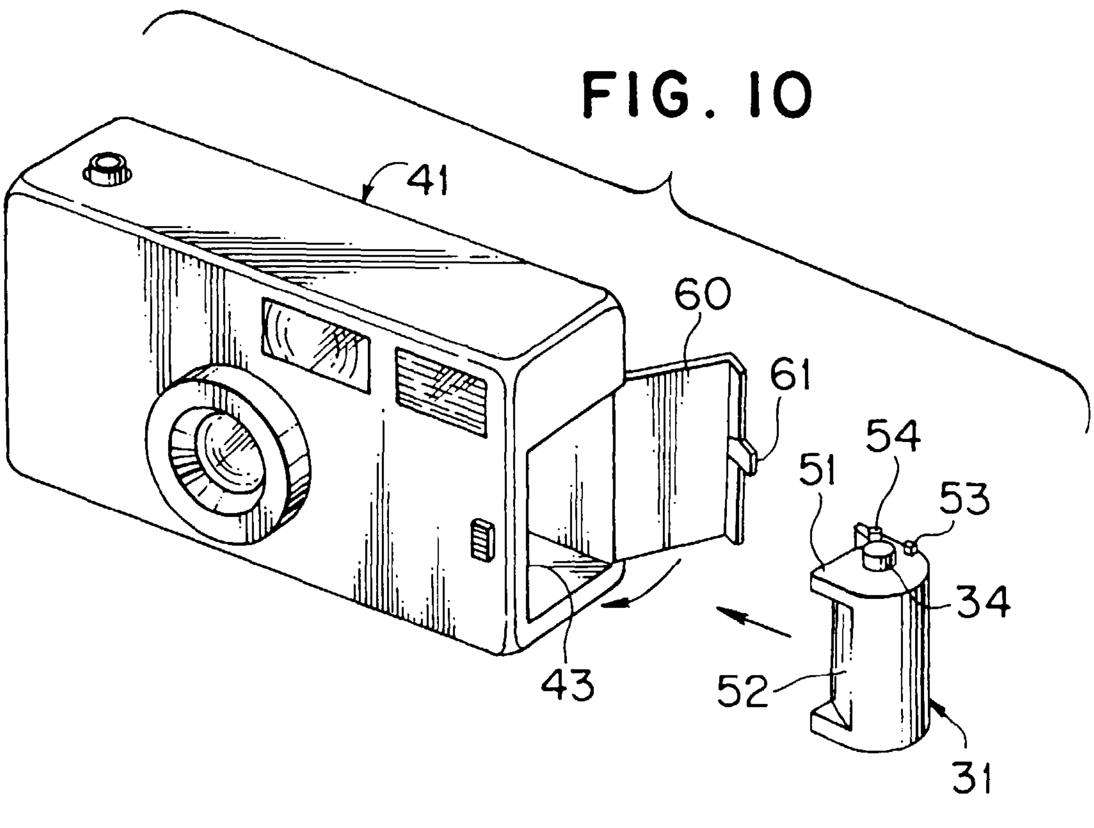

FIG. 11

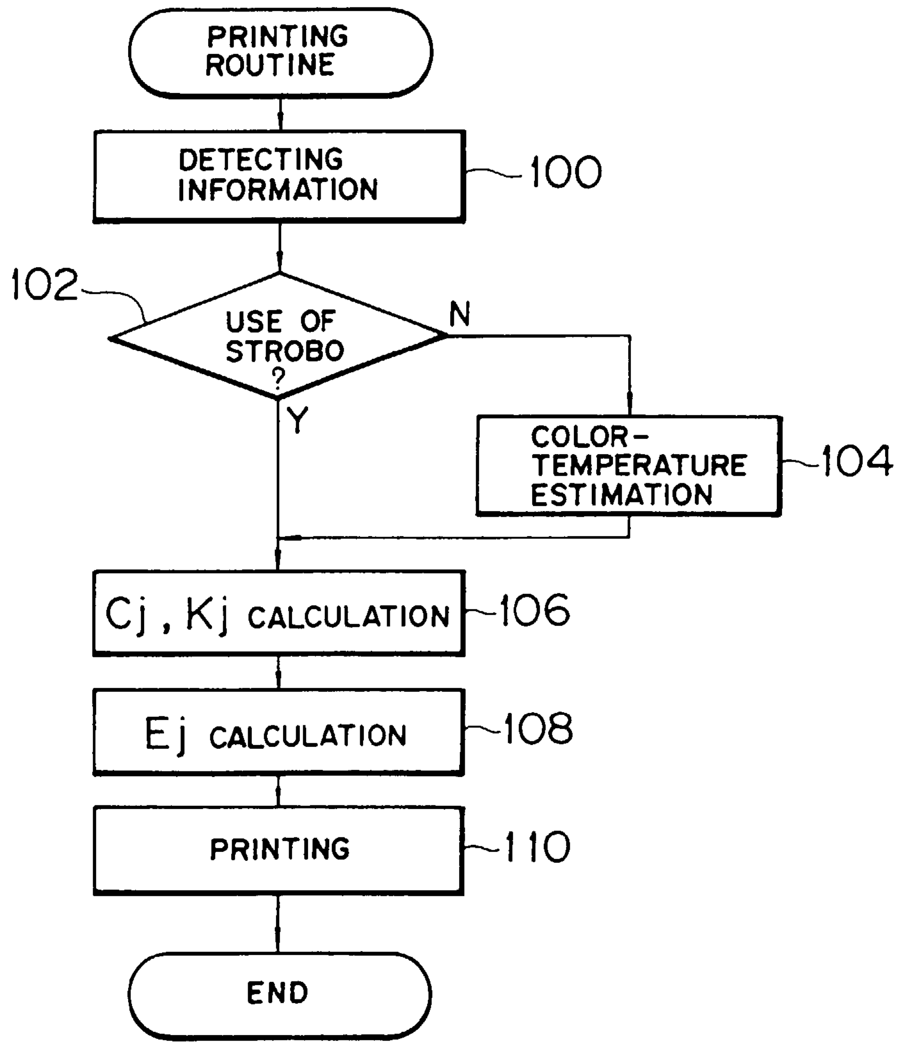
PRINTING ROUTINE
DETECTING INFORMATION
100
102
USE OF STROBO ?
N
Y
COLOR-TEMPERATURE ESTIMATION
104
Cj , Kj CALCULATION
106
Ej CALCULATION
108
PRINTING
110
END

FIG. 12

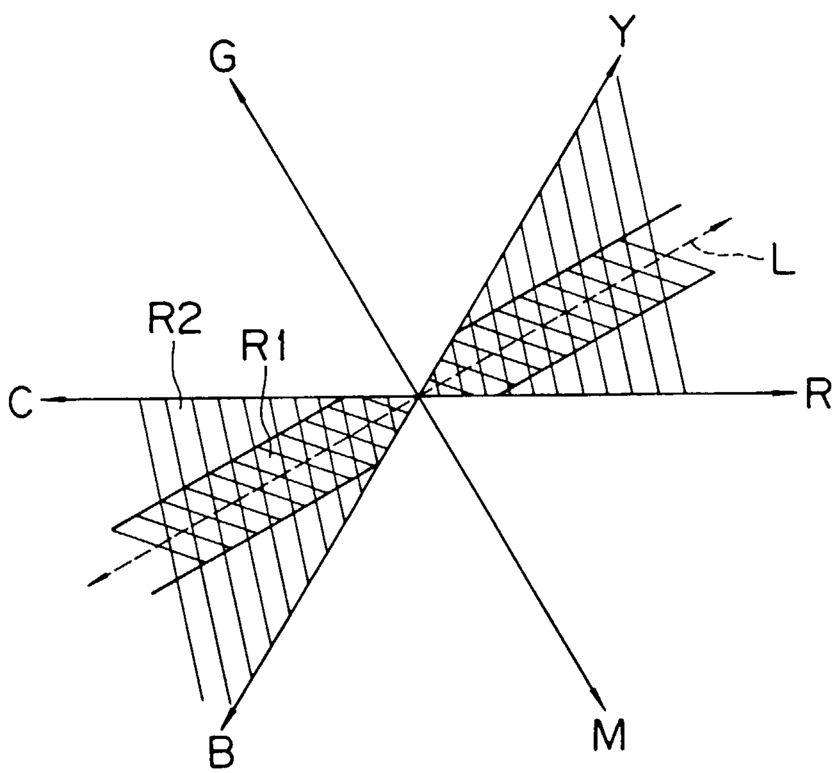

FIG. 13

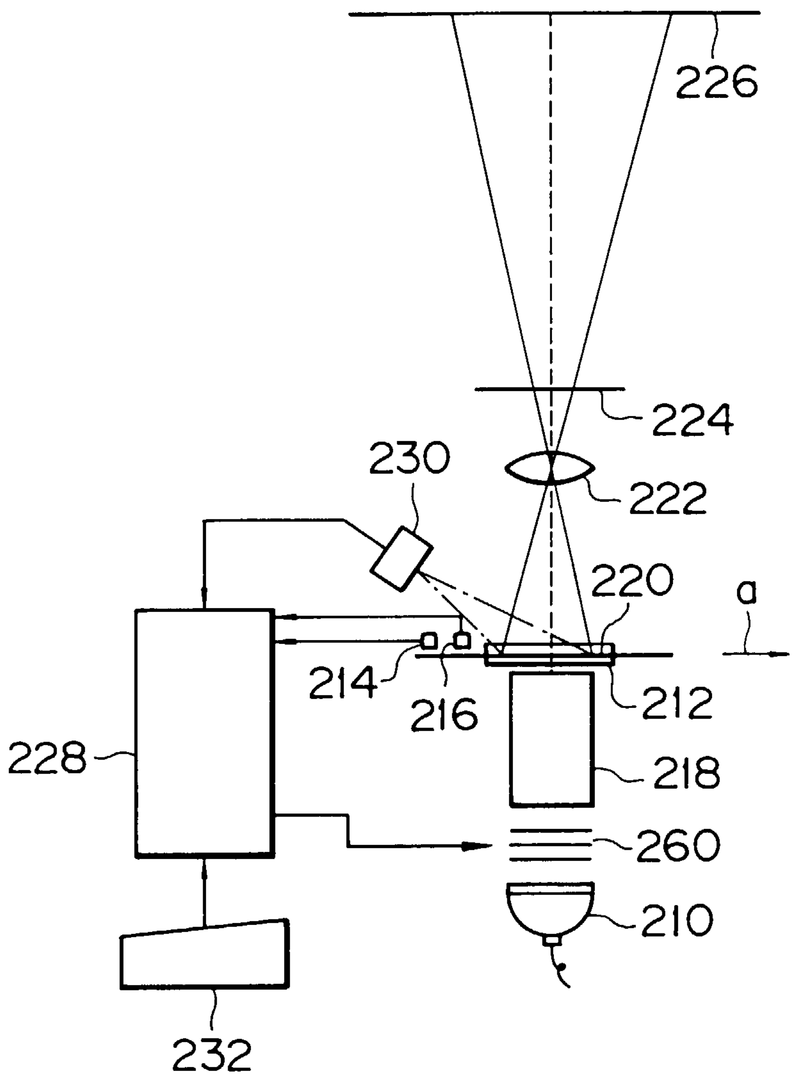


220 · · · NEGATIVE FILM
226 · · · COLOR PAPER
230 · · · IMAGE SENSOR

FIG. 14

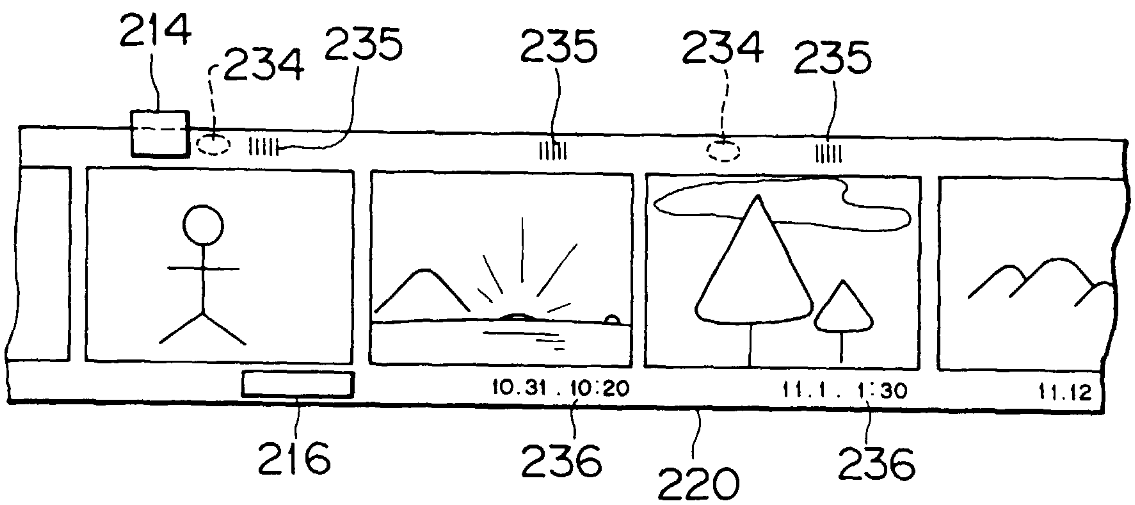
214
234
235
235
234
235
10.31 . 10:20
11.1 . 1:30
11.12
216
236
220
236

FIG. 15

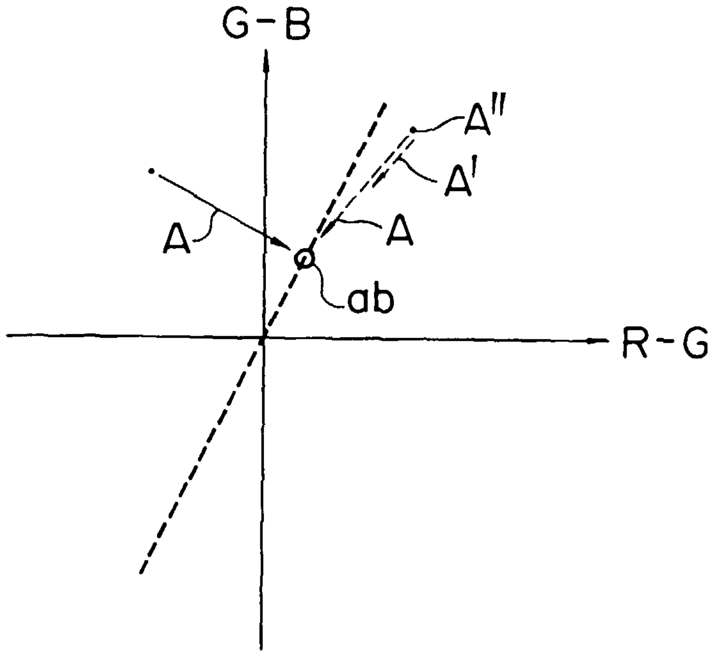
G-B
A''
A'
A
A
ab
R-G

FIG. 16

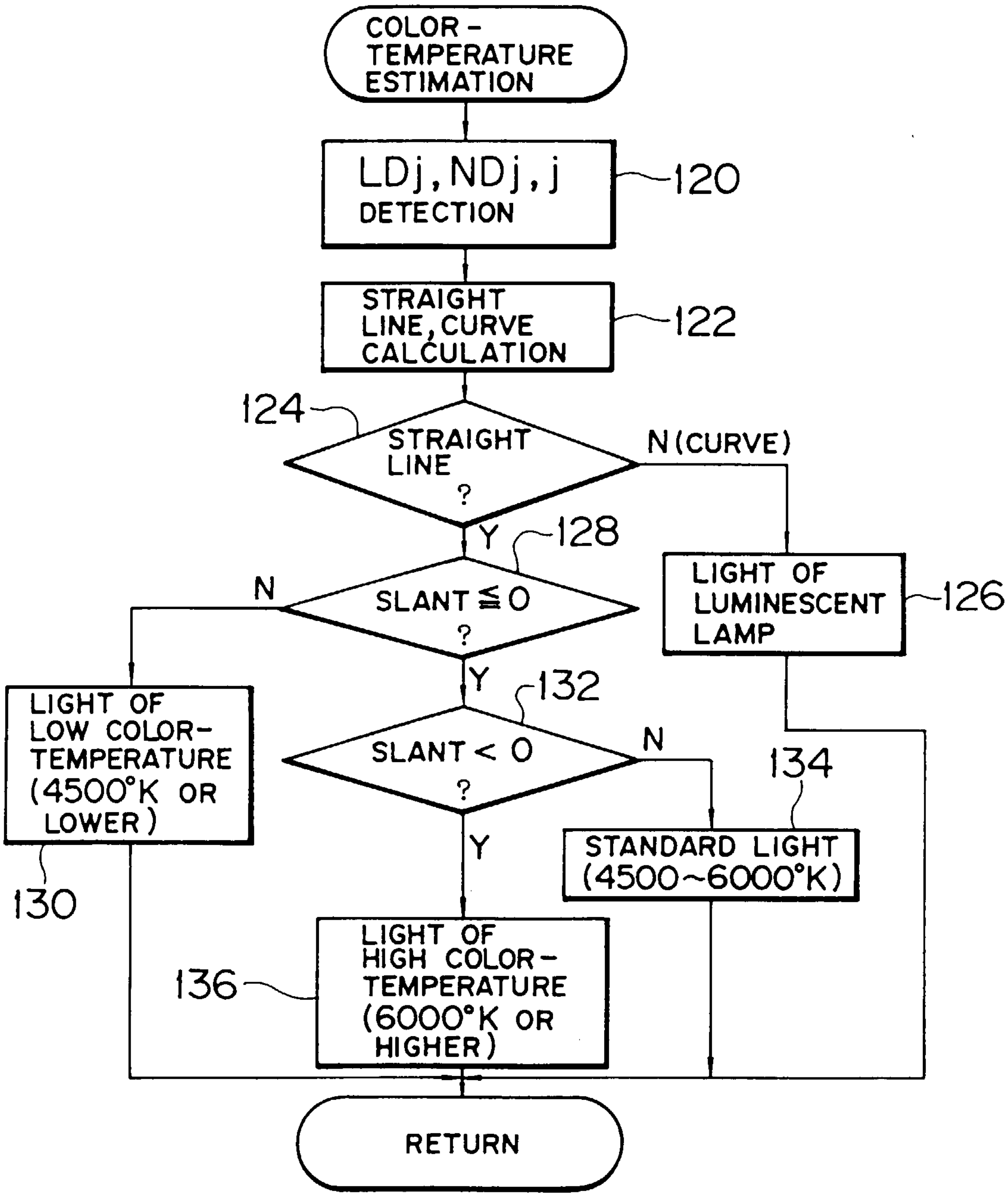
COLOR-TEMPERATURE ESTIMATION
LDj, NDj, j DETECTION
120
STRAIGHT LINE, CURVE CALCULATION
122
124
STRAIGHT LINE ?
N (CURVE)
Y
128
SLANT ≦ 0 ?
N
LIGHT OF LUMINESCENT LAMP
126
Y
132
SLANT < 0 ?
N
134
LIGHT OF LOW COLOR-TEMPERATURE (4500°K OR LOWER)
130
STANDARD LIGHT (4500~6000°K)
Y
LIGHT OF HIGH COLOR-TEMPERATURE (6000°K OR HIGHER)
136
RETURN

FIG. 17

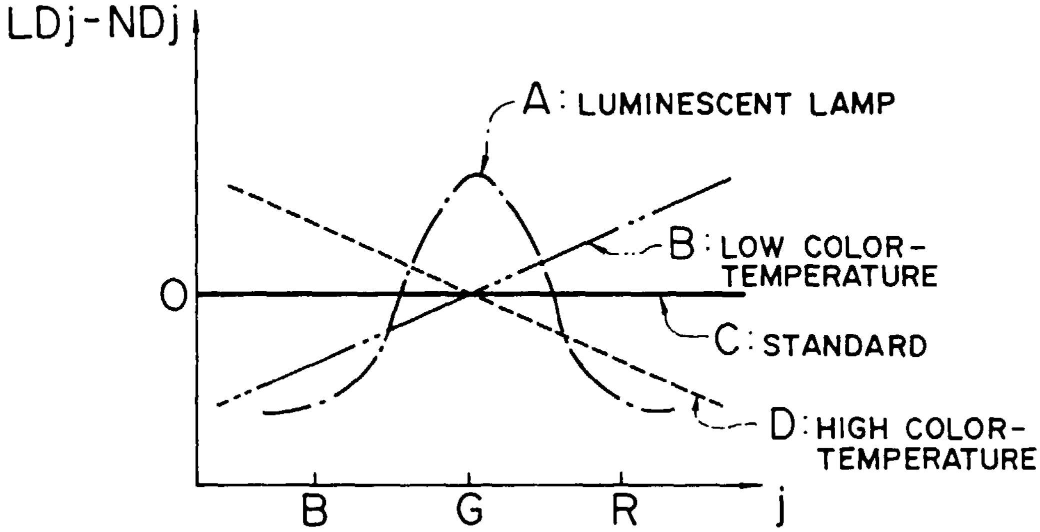
LDj-NDj
A: LUMINESCENT LAMP
B: LOW COLOR-TEMPERATURE
O
C: STANDARD
D: HIGH COLOR-TEMPERATURE
B
G
R
j

FIG. 18

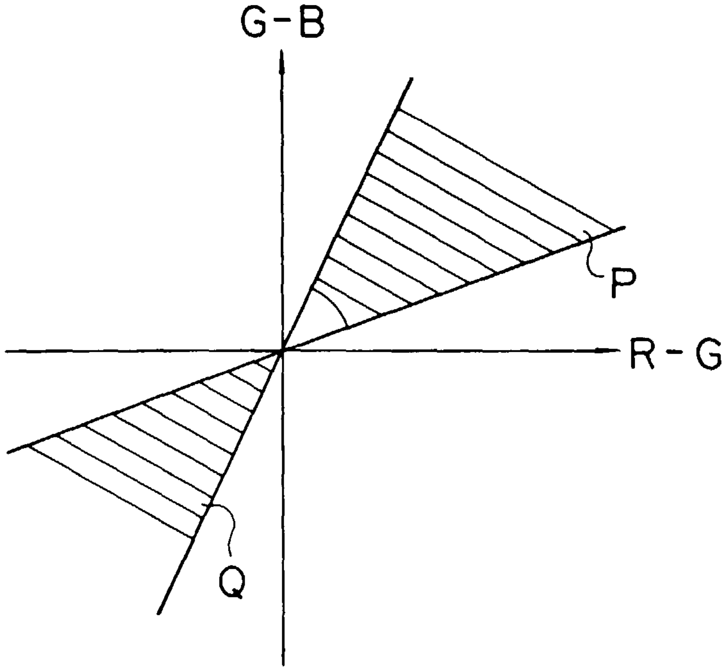
G-B
P
R-G
Q

FIG. 19

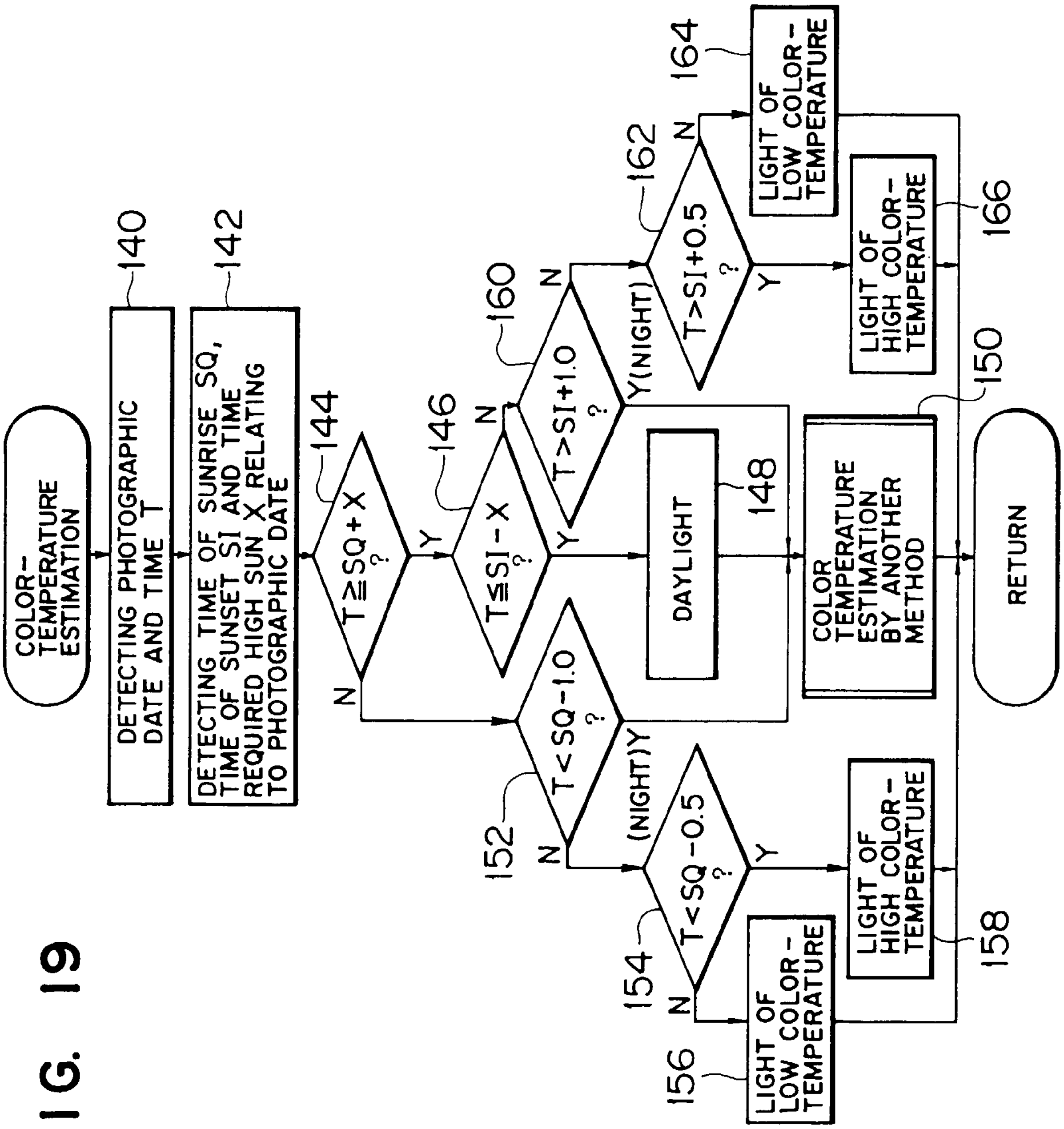
COLOR-TEMPERATURE ESTIMATION
DETECTING PHOTOGRAPHIC DATE AND TIME T
140
DETECTING TIME OF SUNRISE SQ, TIME OF SUNSET SI AND TIME REQUIRED HIGH SUN X RELATING TO PHOTOGRAPHIC DATE
142
T≧SQ+X ?
144
Y
N
T≦SI−X ?
146
Y
N
DAYLIGHT
148
T>SI+1.0 ?
160
Y(NIGHT)
N
T>SI+0.5 ?
162
Y
N
LIGHT OF LOW COLOR-TEMPERATURE
164
LIGHT OF HIGH COLOR-TEMPERATURE
166
T<SQ−1.0 ?
152
(NIGHT)Y
N
T<SQ−0.5 ?
154
Y
N
LIGHT OF LOW COLOR-TEMPERATURE
156
LIGHT OF HIGH COLOR-TEMPERATURE
158
COLOR TEMPERATURE ESTIMATION BY ANOTHER METHOD
150
RETURN

FIG. 20

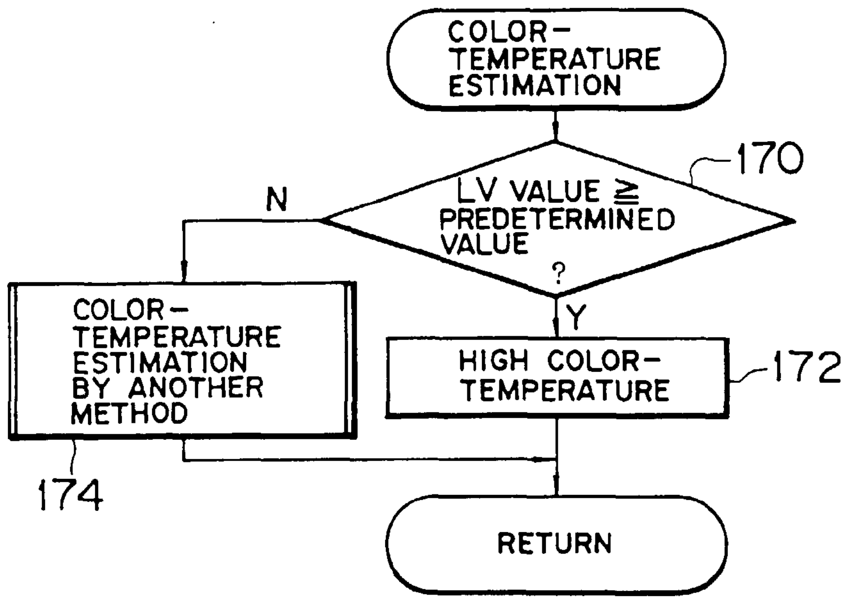
COLOR-TEMPERATURE ESTIMATION
170
N
LV VALUE ≧ PREDETERMINED VALUE ?
Y
COLOR-TEMPERATURE ESTIMATION BY ANOTHER METHOD
HIGH COLOR-TEMPERATURE
172
174
RETURN

FIG. 21

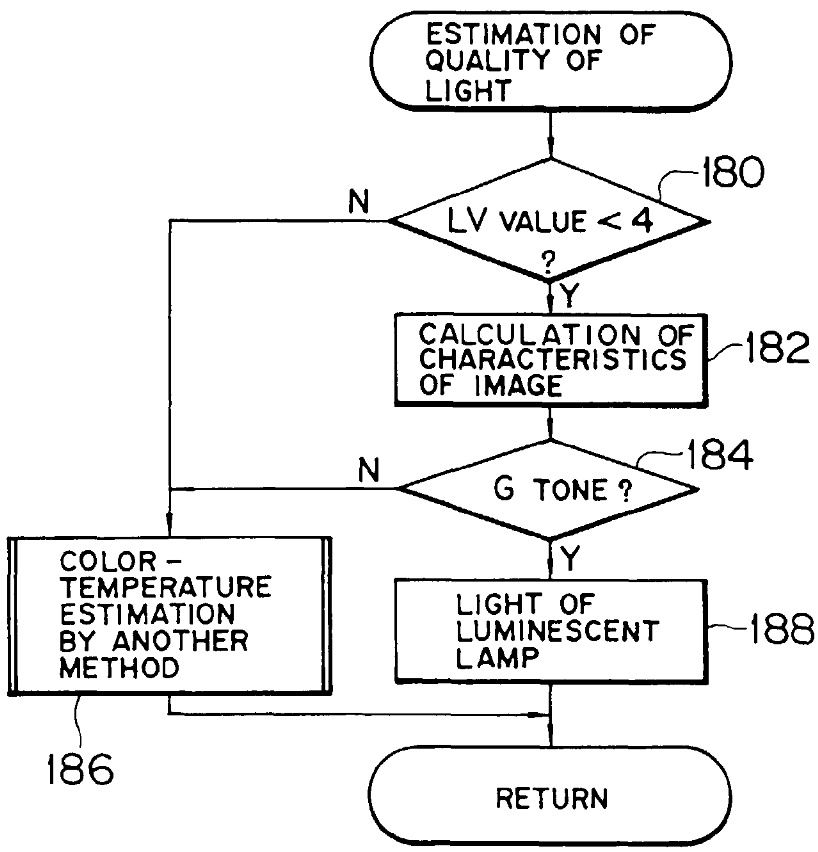
ESTIMATION OF QUALITY OF LIGHT
180
N
LV VALUE < 4 ?
Y
CALCULATION OF CHARACTERISTICS OF IMAGE
182
184
N
G TONE ?
Y
COLOR-TEMPERATURE ESTIMATION BY ANOTHER METHOD
LIGHT OF LUMINESCENT LAMP
188
186
RETURN